(19) **Europäisches Patentamt / European Patent Office / Office européen des brevets**

(11) **EP 4 554 223 A1**

(12) **EUROPEAN PATENT APPLICATION**
published in accordance with Art. 153(4) EPC

(43) Date of publication:
**14.05.2025 Bulletin 2025/20**

(21) Application number: **22949753.2**

(22) Date of filing: **05.07.2022**

(51) International Patent Classification (IPC):
**H04N 19/59** $^{(2014.01)}$ **H04N 19/593** $^{(2014.01)}$
**H04N 19/186** $^{(2014.01)}$

(52) Cooperative Patent Classification (CPC):
**H04N 19/186; H04N 19/59; H04N 19/593**

(86) International application number:
**PCT/CN2022/103963**

(87) International publication number:
**WO 2024/007165 (11.01.2024 Gazette 2024/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **HUO, Junyan**
**Dongguan, Guangdong 523860 (CN)**

• **MA, Yanzhuo**
**Dongguan, Guangdong 523860 (CN)**
• **YANG, Fuzheng**
**Dongguan, Guangdong 523860 (CN)**
• **ZHANG, Zhenyao**
**Dongguan, Guangdong 523860 (CN)**
• **LI, Ming**
**Dongguan, Guangdong 523860 (CN)**

(74) Representative: **RGTH**
**Patentanwälte PartGmbB**
**Neuer Wall 10**
**20354 Hamburg (DE)**

(54) **CODING METHOD, APPARATUS AND DEVICE, DECODING METHOD, APPARATUS AND DEVICE, AND STORAGE MEDIUM**

(57)     The embodiments of the present disclosure discloses an encoding method and decoding method, an apparatus, an encoding device, a decoding device and a storage medium, and the method includes: determining a reference value of a first color component of a current block and a reference value of a second color component of the current block; determining a weighting coefficient according to the reference value of the first color component of the current block; determining a reference average value of the second color component of the current block according to the reference value of the second color component of the current block; determining a reference sample value of the second color component of the current block according to the reference value of the second color component of the current block and the reference average value of the second color component of the current block; determining a predicted value of a sample of the second color component in the current block according to the reference average value of the second color component of the current block, the reference sample value of the second color component of the current block, and the weighting coefficient; and determining a reconstructed value of the sample of the second color component in the current block according to the predicted value of the sample of the second color component in the current block.

EP 4 554 223 A1

Determine a reference value of a first color component of a current block and a reference value of a second color component of the current block — S501

Determine a weighting coefficient according to the reference value of the first color component of the current block — S502

Determine a reference average value of the second color component of the current block according to the reference value of the second color component of the current block; and determine a reference sample value of the second color component of the current block according to the reference value of the second color component of the current block and the reference average value of the second color component of the current block — S503

Determine a predicted value of a sample of the second color component in the current block according to the reference average value of the second color component of the current block, the reference sample value of the second color component of the current block, and the corresponding weighting coefficient — S504

Determine a reconstructed value of the sample of the second color component in the current block according to the predicted value of the sample of the second color component in the current block — S505

FIG. 5

**Description**

TECHNICAL FIELD

Embodiments of the present disclosure relate to the field of video encoding and decoding technology, and in particular, to an encoding method and a decoding method, an apparatus, an encoding device, a decoding device and a storage medium.

BACKGROUND

As people's requirements for video display quality increase, new video application forms such as high definition video and ultra high definition video have emerged. The Joint Video Exploration Team (JVET) of the international standard organization (ISO) / International Electrotechnical Commission (IEC) and the International Telecommunication Union Telecommunication Standardization Sector (ITU-T) has developed the next-generation video coding standard H.266/Versatile Video Coding (VVC).

H.266/VVC contains a cross-color component prediction technology. However, there is a large deviation between an original value and a predicted value of a coding block calculated by the cross-color component prediction technology of H.266/VVC, which leads to the low accuracy of prediction, causes a decrease in the quality of the decoded video and reduces the coding performance.

SUMMARY

The embodiments of the present disclosure provide an encoding method and a decoding method, an apparatus, an encoding device, a decoding device and a storage medium, which may not only improve the accuracy of the chroma prediction and reduce the calculation complexity of the chroma prediction, but also improve coding performance.

The technical solutions of the embodiments of the present disclosure may be implemented as follows.

In a first aspect, a decoding method is provided by the embodiments of the present disclosure, and includes:

determining a reference value of a first color component of a current block and a reference value of a second color component of the current block;

determining a weighting coefficient according to the reference value of the first color component of the current block;

determining a reference average value of the second color component of the current block according to the reference value of the second color component of the current block; and determining a reference sample value of the second color component of the current block according to the reference value of the second color component of the current block and the reference average value of the second color component of the current block;

determining a predicted value of a sample of the second color component in the current block according to the reference average value of the second color component of the current block, the reference sample value of the second color component of the current block, and the weighting coefficient; and

determining a reconstructed value of the sample of the second color component in the current block according to the predicted value of the sample of the second color component in the current block.

In a second aspect, an encoding method is provided by the embodiments of the present disclosure, and includes:

determining a reference value of a first color component of a current block and a reference value of a second color component of the current block;

determining a weighting coefficient according to the reference value of the first color component of the current block;

determining a reference average value of the second color component of the current block according to the reference value of the second color component of the current block; and determining a reference sample value of the second color component of the current block according to the reference value of the second color component of the current block and the reference average value of the second color component of the current block;

determining a predicted value of a sample of the second color component in the current block according to the reference average value of the second color component of the current block, the reference sample value of the second color component of the current block, and the weighting coefficient; and

determining a predicted residual of the sample of the second color component in the current block according to the predicted value of the sample of the second color component in the current block.

In a third aspect, an encoding apparatus is provided by the embodiments of the present disclosure, and includes a first determining unit, a first calculating unit and a first predicting unit; where

the first determining unit is configured to determine a reference value of a first color component of a current block and a reference value of a second color component of the current block; and determine a weighting coefficient according to the reference value of the first color component of the current block;

the first calculating unit is configured to determine a reference average value of the second color component of the current block according to the reference value of the second color component of the current block; and determine a reference sample value of the second color component of the current block according to the reference value of the second color component of the current block and the reference average value of the second color component of the current block;

the first predicting unit is configured to determine a predicted value of a sample of the second color component in the current block according to the reference average value of the second color component of the current block, the reference sample value of the second color component of the current block, and the weighting coefficient; and

the first determining unit is further configured to determine a predicted residual of the sample of the second color component in the current block according to the predicted value of the sample of the second color component in the current block.

In a fourth aspect, an encoding device is provided by the embodiments of the present disclosure, and includes a first memory and a first processor; where

the first memory is configured to store a computer program capable of running on the first processor; and

the first processor is configured to perform the method according to the second aspect when running the computer program.

In a fifth aspect, a decoding apparatus is provided by the embodiments of the present disclosure, and includes a second determining unit, a second calculating unit, and a second predicting unit; where

the second determining unit is configured to determine a reference value of a first color component of a current block and a reference value of a second color component of the current block; and determine a weighting coefficient according to the reference value of the first color component of the current block;

the second calculating unit is configured to determine a reference average value of the second color component of the current block according to the reference value of the second color component of the current block; and determine a reference sample value of the second color component of the current block according to the reference value of the second color component of the current block and the reference average value of the second color component of the current block;

the second predicting unit is configured to determine a predicted value of a sample of the second color component in the current block according to the reference average value of the second color component of the current block, the reference sample value of the second color component of the current block, and the weighting coefficient; and

the second determining unit is further configured to determine a reconstructed value of the sample of the second color component in the current block according to the predicted value of the sample of the second color component in the current block.

In a sixth aspect, a decoding device is provided by the embodiments of the present disclosure, and includes a second memory and a second processor; where

the second memory is configured to store a computer program capable of running on the second processor; and

the second processor is configured to perform the method according to the first aspect when running the computer program.

In a seventh aspect, a computer readable storage medium is provided by the embodiments of the present disclosure, and the computer readable storage medium stores a computer program, the computer program, when being executed, implements the method according to the first aspect or the method according to the second aspect.

The embodiments of the present disclosure provide an encoding method and a decoding method, an apparatus, an encoding device, a decoding device, and a storage medium. Either an encoder side or a decoder side, determines a reference value of a first color component of a current block and a reference value of a second color component of the current block; determines a weighting coefficient according to the reference value of the first color component of the current block; determines a reference average value of the second color component of the current block according to the reference value of the second color component of the current block; and determines a reference sample value of the second color component of the current block according to the reference value of the second color component of the current block and the reference average value of the second color component of the current block; determines a predicted value of a sample of the second color component in the current block according to the reference average value of the second color component of the current block, the reference sample value of the second color component of the current block, and the weighting coefficient. In this way, at the encoder side, a predicted residual of the sample of the second color component in the current block can be determined according to the predicted value of the sample of the second color component in the current block; so that at the decoder side, a reconstructed value of the sample of the second color component in the current block may be determined according to the predicted value of the sample of the second color component in the current block. That is, based on the color component reference information in the neighboring region of the current block and color component reconstruction information within the current block, it is necessary not only to construct a luma difference vector, so as to determine the weighting coefficient; but also to determine the chroma average value according to the chroma reference information, and then determine the chroma difference vector according to the chroma reference information and the chroma average value, and further determine the chroma predicted value according to the chroma difference vector and the weighting coefficient, plus the chroma average value; in this way, by optimizing the calculation process of the weight-based chroma prediction, fully adopting the integer operation can be implemented, and characteristics of the weight model are fully considered, thereby reasonably optimizing the integer operation process; which may reduce the calculation complexity, improve the coding efficiency, and thus improve the coding performance, while fully ensuring the accuracy of the chroma prediction.

BRIEF DESCRIPTION OF THE DRAWINGS

FIG. 1 is a schematic diagram of a distribution of available neighboring regions.
FIG. 2 is a schematic diagram of distributions of selected regions in different prediction modes.
FIG. 3 is a schematic diagram of a flow chart of a model parameter derivation scheme.
FIG. 4A is a schematic block diagram of a composition of an encoder, provided by the embodiments of the present disclosure.
FIG. 4B is a schematic block diagram of a composition of a decoder, provided by the embodiments of the present disclosure.
FIG. 5 is a schematic diagram of a flow chart of a decoding method, provided by the embodiments of the present disclosure.
FIG. 6 is a schematic diagram of reference regions of a current block, provided by the embodiments of the present disclosure.
FIG. 7 is a schematic diagram of a flow chart of another decoding method, provided by the embodiments of the present disclosure.
FIG. 8 is a schematic diagram of a flow chart of yet another decoding method, provided by the embodiments of the present disclosure.
FIG. 9 is a schematic diagram of a flow chart of an encoding method, provided by the embodiments of the present disclosure.
FIG. 10 is a schematic diagram of a composition structure of an encoding apparatus, provided by the embodiments of the present disclosure.
FIG. 11 is a schematic diagram of a specific hardware structure of an encoding device, provided by the embodiments of the present disclosure.
FIG. 12 is a schematic diagram of a composition structure of a decoding apparatus, provided by the embodiments of the present disclosure.
FIG. 13 is a schematic diagram of a specific hardware structure of a decoding device, provided by the embodiments of the present disclosure.
FIG. 14 is a schematic diagram of a composition structure of an encoding and decoding system, provided by the embodiments of the present disclosure.

DETAILED DESCRIPTION

In order to have a more detailed understanding of features and technical contents of the embodiments of the present disclosure, implementations of the embodiments of the present disclosure are described in detail below in conjunction with the drawings. The attached drawings are for reference and illustration only, and are not used to limit the embodiments of the present disclosure.
Unless defined otherwise, all technical and scientific terms used herein have the same meaning as those commonly understood by the skilled in the technical field of the present disclosure. The terms used herein are only for the purpose of describing the embodiments of the present disclosure and are not intended to limit the present disclosure.

In the following description, "some embodiments" are involved, they describe a subset of all possible embodiments, but it can be understood that "some embodiments" may be the same subset or different subsets of all possible embodiments, and may be combined with each other without conflict. It should also be pointed out that the terms "first \second\third" or the like involved in the embodiments of the present disclosure are only used to distinguish similar objects and do not represent a specific order of the objects. It may be understood that "first\second\third" or the like may be interchanged in a specific order or sequence if permitted, so that the embodiments of the present disclosure described here may be implemented in an order other than those illustrated or described here.

In a video picture, a first color component, a second color component, and a third color component are generally used to represent a coding block (CB). Herein, the three color components are a luma component, a blue chroma component and a red chroma component, respectively. Exemplarily, the luma component is generally represented by a symbol Y, the blue chroma component is generally represented by a symbol Cb or U, and the red chroma component is generally represented by a symbol Cr or V; in this way, the video picture may be represented in a YCbCr format or a YUV format. In addition, the video picture may also be in an RGB format, a YCgCo format, etc., which is not limited to the embodiments of the present disclosure.

It may be understood that, in the current video picture coding or video coding process, the cross-component prediction technology mainly includes a cross-component linear model (CCCLM) prediction mode and a multi-directional linear model (MDLM) prediction mode. Regardless of a model parameter derived according to the CCLM prediction mode or a model parameter derived according to the MDLM prediction mode, its corresponding prediction model may implement the cross-color component prediction, such as the first color component to the second color component, the second color component to the first color component, the first color component to the third color component, the third color component to the first color component, the second color component to the third color component, or the third color component to the second color component, etc.

Taking the prediction of the first color component to the second color component as an example, assuming that the first color component is the luma component and the second color component is the chroma component, in order to reduce redundancy between the luma component and the chroma component, the CCLM prediction mode is used in H.266/Versatile Video Coding (VVC), that is, a predicted value of the chroma is constructed according to a luma reconstructed value of a same coding block, such as: $Pred_C(i, j) = \alpha \cdot Rec_L(i, j) + \beta$.

Herein, $i, j$ represents a location coordinate of a pixel to be predicted in the coding block, $i$ represents a horizontal direction, and $j$ represents a vertical direction; $Pred_C(i, j)$ represents a chroma predicted value corresponding to the pixel to be predicted at the location coordinate (i, j) in the coding block, and $Rec_L(i, j)$ represents a luma reconstructed value corresponding to the pixel to be predicted at the location coordinate (i, j) (after being downsampled) in the same coding block. In addition, $\alpha$ and $\beta$ represent model parameters, which may be derived from a reference pixel.

For the coding block, its neighboring region may be divided into five portions: a left neighboring region, a top neighboring region, a lower-left neighboring region, a top-left neighboring region, and a top-right neighboring region. H.266/VVC includes three cross-component linear model prediction modes, which are: a left and top neighboring intra CCLM prediction mode (which may be represented by INTRA_LT_CCLM), a left and lower-left neighboring intra CCLM prediction mode (which may be represented by INTRA_L_CCLM), and a top and top-right neighboring intra CCLM prediction mode (which may be represented by INTRA_T_CCLM), respectively. In these three prediction modes, each prediction mode may select a preset number (for example, 4) of reference pixels for the derivation of the model parameters $\alpha$ and $\beta$, and a biggest difference between these three prediction modes is that selected regions corresponding to the reference pixels used to derive the model parameters $\alpha$ and $\beta$ are different.

Specifically, for the coding block size W × H corresponding to the chroma component, it is assumed that a top selected region corresponding to the reference pixels is W' , and a left selected region corresponding to the reference pixels is H' ; in this way,

for the INTRA_LT_CCLM mode, the reference pixels may be selected from the top neighboring region and the left neighboring region, that is, W' =W, H' =H;
for the INTRA_L_CCLM mode, the reference pixels may be selected from the left neighboring region and the lower-left neighboring region, that is, H' =W+H, and W' =0 is set;
for the INTRA_T_CCLM mode, the reference pixels may be selected from the top neighboring region and the top-right neighboring region, that is, W' =W+H, and H' =0 is set.

It should be noted that in VTM, only pixel points within the W range at most are stored in the top-right neighboring region, and only pixel points within the H range at most are stored in the lower-left neighboring region. Although the range of the selected regions of the INTRA_L_CCLM mode and the INTRA_T_CCLM mode is defined as W+H, in practical applications, the selected regions of the INTRA_L_CCLM mode will be limited within H+H, and the selected regions of the INTRA_T_CCLM mode will be limited within W+W; in this way,

for the INTRA_L_CCLM mode, the reference pixels may be selected from the left neighboring region and the low-left neighboring region, H' =min{W+H, H+H}.

for the INTRA_T_CCLM mode, the reference pixels may be selected from the top neighboring region and the top-right neighboring region, W' =min{W+H,W+W}.

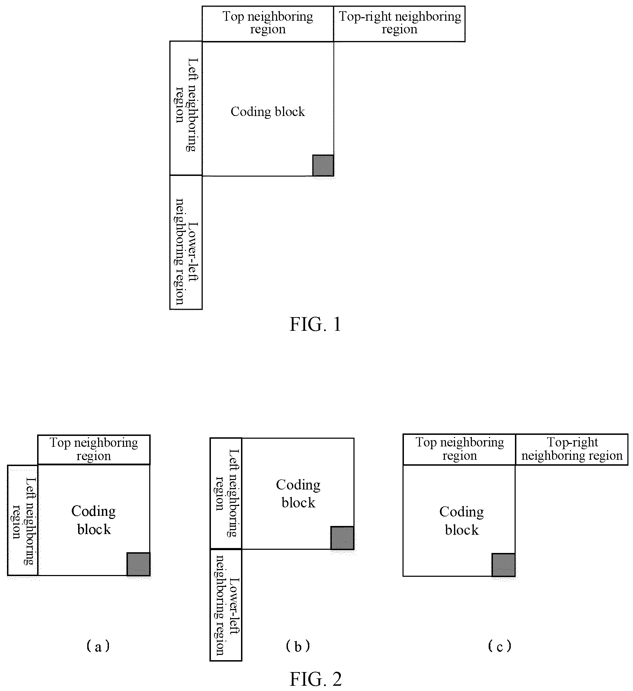

Referring to FIG. 1, FIG. 1 shows a schematic diagram of a distribution of available neighboring regions. In FIG. 1, the left neighboring region, the lower-left neighboring region, the top neighboring region, and the top-right neighboring region are all available; in addition, a block filled with gray is the pixel to be predicted at the location coordinate *(i, j)* in the coding block.

Thus, based on FIG. 1, the selected regions for the three prediction modes are shown in FIG. 2. Herein, in FIG. 2, (a) represents the selected regions of the INTRA_LT_CCLM mode, including the left neighboring region and the top neighboring region; (b) represents the selected regions of the INTRA_L_CCLM mode, including the left neighboring region and the lower-left neighboring region; (c) represents the selected regions of the INTRA_T_CCLM mode, including the top neighboring region and the top-right neighboring region. In this way, after the selected regions of the three prediction modes are determined, the selection of the pixels for the derivation of the model parameters may be performed within the selected regions. The pixels selected in this way may be referred to as reference pixels, and generally, the number of reference pixels is 4; and for a coding block with the determined size W × H, generally, locations of its reference pixels are determined.

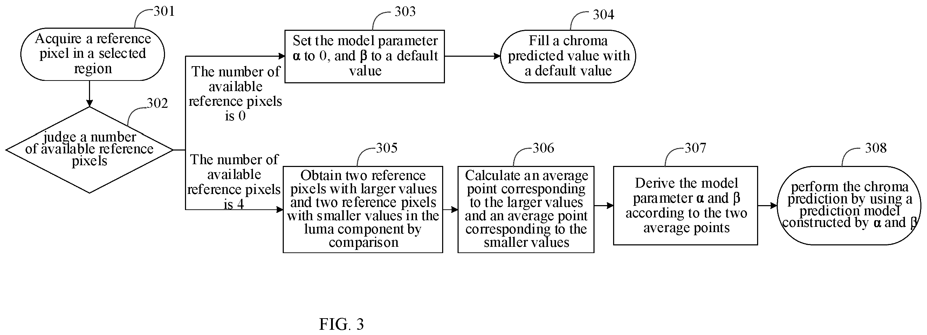

After acquiring a preset number of reference pixels, currently, the chroma prediction is performed according to the schematic diagram of the flow chart of the model parameter derivation scheme shown in FIG. 3. According to the flow chart shown in FIG. 3, it is assumed that the preset number is 4, the flow chart may include:

S301: acquiring reference pixels in a selected region;

S302: judging a number of available reference pixels;

S303: if the number of available reference pixels is 0, setting the model parameter $\alpha$ to 0, and $\beta$ to a default value;

S304: filling a chroma predicted value with a default value;

S305: if the number of available reference pixels is 4, obtaining two reference pixels with larger values and two reference pixels with smaller values in the luma component by comparison;

S306: calculating an average point corresponding to the larger values and an average point corresponding to the smaller values;

S307: deriving the model parameters $\alpha$ and $\beta$ according to the two average points; and

S308: performing the chroma prediction by using a prediction model constructed by $\alpha$ and $\beta$.

It should be noted that, in VVC, the step of the available reference pixel being 0 is judged according to the availability of the neighboring region.

It should also be noted that, the prediction model is constructed by using the principle that "two points determine a straight line", and the two points here may be referred to as fitting points. In the current technical solutions, after acquiring 4 reference pixels, two reference pixels with larger values and two reference pixels with smaller values in the luma component are obtained by the comparison; and then, an average point (which may be represented by $mean_{max}$) is obtained according to the two reference pixels with larger values, and another average point (which may be represented by $mean_{min}$) is obtained according to the two reference pixels with smaller values, and thus, two average points $mean_{max}$ and $mean_{min}$ may be obtained; and by using $mean_{min}$ and $mean_{min}$ as two fitting points, the model parameters (represented by $\alpha$ and $\beta$) may be derived; and finally, a prediction model is constructed according to $\alpha$ and $\beta$, and the prediction processing of the chroma component is performed according to the prediction model.

However, in the related art, the simple linear model $Pred_C(i, j) = \alpha \cdot Rec_L(i, j) + \beta$ is used to predict the chroma component, for each coding block, and the same model parameters $\alpha$ and $\beta$ are used for the prediction, for pixels at any location of each coding block. This will lead to the following defects: on the one hand, coding blocks with different content characteristics all use the simple linear model for mapping of the luma to the chroma, so as to implement the chroma prediction, but not all mapping functions of the luma to the chroma in any coding block may be accurately fitted by this simple linear model, which leads to inaccurate prediction effects for some coding blocks; on the other hand, in the prediction process, all pixel points at different locations within a coding block use the same model parameters $\alpha$ and $\beta$, and thus, there are also large differences in the prediction accuracy at different locations within the coding block; and on the other hand, in the prediction process of the CCLM technology, the high correlation between the reconstruction luma information of the current block and the reference information of the neighboring region is not fully considered, which will lead to that some coding blocks cannot be accurately predicted under this technology, thereby affecting the gain effect of this technology. Briefly, under the current CCLM technology, there is a large deviation between the predicted value and the original value of some coding blocks, which causes low prediction accuracy, quality degradation, and thus reduces the coding efficiency.

In view of this, the embodiments of the present disclosure provide an encoding method, including determining a reference value of a first color component of a current block and a reference value of a second color component of the current block; determining a weighting coefficient according to the reference value of the first color component of the current block; determining a reference average value of the second color component of the current block according to the reference value of the second color component of the current block; and determining a reference sample value of the second color component of the current block according to the reference value of the second color component of the current block and the reference average value of the second color component of the current block; determining a predicted value of a sample of the second color component in the current block according to the reference average value of the second color component of the current block, the reference sample value of the second color component of the current block, and the weighting coefficient; and determining a predicted residual of the sample of the second color component in the current block according to the predicted value of the sample of the second color component in the current block.

The embodiments of the present disclosure also provide a decoding method, including determining a reference value of a first color component of a current block and a reference value of a second color component of the current block; determining a weighting coefficient according to the reference value of the first color component of the current block; determining a reference average value of the second color component of the current block according to the reference value of the second color component of the current block; and determining a reference sample value of the second color component of the current block according to the reference value of the second color component of the current block and the reference average value of the second color component of the current block; determining a predicted value of a sample of the second color component in the current block according to the reference average value of the second color component of the current block, the reference sample value of the second color component of the current block, and the weighting coefficient; and determining a reconstructed value of the sample of the second color component in the current block according to the predicted value of the sample of the second color component in the current block.

In this way, based on the color component reference information in the neighboring region of the current block and color component reconstruction information within the current block, it is necessary not only to construct a luma difference vector, so as to determine the weighting coefficient; but also to determine the chroma average value according to the chroma reference information, and then determine the chroma difference vector according to the chroma reference information and the chroma average value, and further determine the chroma predicted value according to the chroma difference vector and the weighting coefficient, plus the chroma average value; in this way, by optimizing the calculation process of the weight-based chroma prediction, fully adopting the integer operation can be implemented, and characteristics of the weight model are fully considered, thereby reasonably optimizing the integer operation process; which may reduce the calculation complexity, improve the coding efficiency, and thus improve the coding performance, while fully ensuring the accuracy of the chroma prediction.

The embodiments of the present disclosure will be described in detail below with reference to the drawings.

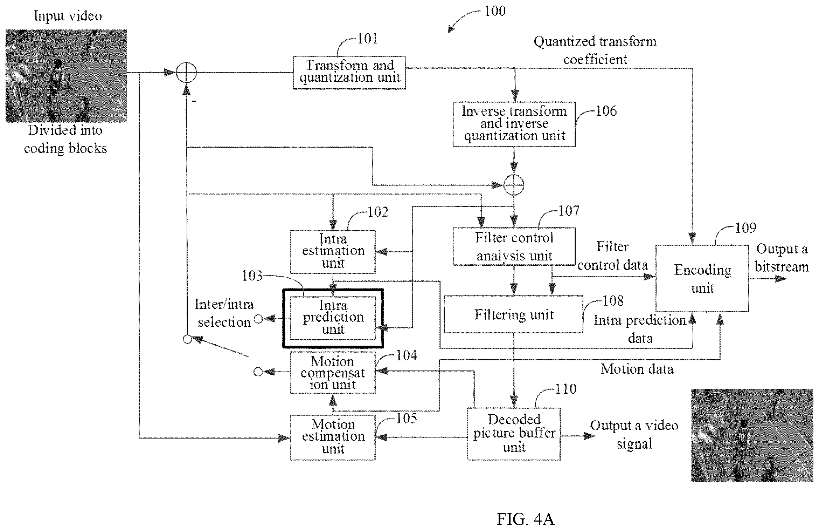

Referring to FIG. 4A, FIG. 4A shows a schematic block diagram of a composition of an encoder, provided by the embodiments of the present disclosure. As shown in FIG. 4A, the encoder (specifically, a "video encoder") 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, and a decoded picture buffer unit 110, etc., where the filtering unit 108 may implement deblocking filtering and sample adaptive offset (SAO) filtering, and the encoding unit 109 may implement header information coding and context-based adaptive binary arithmetic coding (CABAC). For the input original video signal, a video coding block may be obtained by dividing a coding tree unit (CTU), and then for residual pixel information obtained after being intra predicted or inter predicted, the video coding block is transformed by the transform and quantization unit 101, including transforming the residual information from a pixel domain to a transform domain, and quantizing the obtained transformed coefficient, to further reduce the bit rate; the intra estimation unit 102 and the intra prediction unit 103 are used to perform the intra prediction on the video coding block; specifically, the intra estimation unit 102 and the intra prediction unit 103 are used to determine an intra prediction mode to be used to encode the video coding block; the motion compensation unit 104 and the motion estimation unit 105 are used to perform the inter prediction encoding on the received video coding block relative to one or more blocks in one or more reference frames, to provide temporal prediction information; the motion estimation performed by the motion estimation unit 105 is a process of generating a motion vector, and the motion vector may be used to estimate the motion of the video coding block, and then the motion compensation unit 104 performs the motion compensation based on the motion vector determined by the motion estimation unit 105. After determining the intra prediction mode, the intra prediction unit 103 is further used to provide the selected intra prediction data to the encoding unit 109, and the motion estimation unit 105 also transmits the calculated and determined motion vector data to the encoding unit 109; in addition, the inverse transform and inverse quantization unit 106 is used to reconstruct the video coding block, to reconstruct a residual block in the pixel domain, and the filter control analysis unit 107 and the filtering unit 108 remove blocking artifacts from the reconstructed residual block, and then, the reconstructed residual block is added to a predictive block in a frame of the decoded picture buffer unit 110, to generate a reconstructed video coding block; the encoding unit 109 is used to encode various coding parameters and quantized transform coefficients, and in the CABAC-based encoding algorithm, the context content may be based on neighboring coding blocks and may be used to encode information indicating the determined intra prediction mode and output a bitstream of the video signal; and the decoded picture buffer unit 110 is used to store the reconstructed video coding block, for prediction reference. As the video picture encoding proceeds, new reconstructed video encoding blocks are continuously generated, and all these reconstructed video encoding blocks are stored in the decoded picture buffer unit 110.

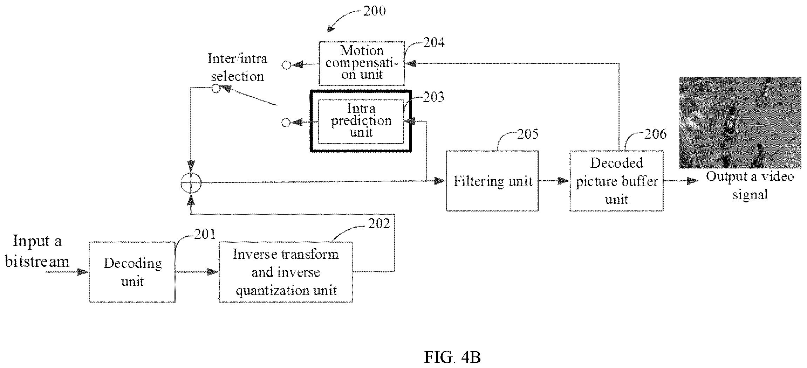

Referring to FIG. 4B, FIG. 4B shows a schematic block diagram of a composition of a decoder provided in the embodiments of the present disclosure. As shown in FIG. 4B, the decoder (specifically, a "video decoder") 200 includes a decoding unit 201, an inverse transform and inverse quantization unit 202, an intra prediction unit 203, a motion compensation unit 204, a filtering unit 205, and a decoded picture buffer unit 206, etc., where the decoding unit 201 may implement header information decoding and CABAC decoding, and the filtering unit 205 may implement deblocking filtering and SAO filtering. After the input video signal is encoded in FIG. 4A, the bitstream of the video signal is output; the bitstream is input to the decoder 200, and first passes through the decoding unit 201, to obtain the decoded transform coefficient; the transform coefficient are processed by the inverse transform and inverse quantization unit 202, to generate the residual block in the pixel domain; the intra prediction unit 203 may be used to generate prediction data of the current video decoding block based on the determined intra prediction mode and data from the previously decoding block of the current frame or picture; the motion compensation unit 204 determines prediction information for the video decoding block by analyzing the motion vector and other associated syntax elements, and uses the prediction information to generate a predictive block of the video decoding block decoded currently; a decoded video block is formed by summing the residual block from the inverse transform and inverse quantization unit 202 and the corresponding predictive block generated by the intra prediction unit 203 or the motion compensation unit 204; the filtering unit 205 removes the blocking artifacts from the decoded video signal, which may improve the video quality; the decoded video block is then stored in the decoded picture buffer unit 206, the decoded picture buffer unit 206 stores the reference picture used for the subsequent intra prediction or motion compensation, and meanwhile, is also used for the output of the video signal, that is, the resumed original video signal is obtained.

It should be noted that the method of the embodiments of the present disclosure is mainly applied to the intra prediction unit 103 part shown in FIG. 4A and the intra prediction unit 203 part shown in FIG. 4B. That is, the embodiments of the present disclosure may be applied to both the encoder and the decoder, and may even be applied to both the encoder and the decoder at the same time, which is not limited specifically in the embodiments of the present disclosure.

It should also be noted that, when applied to the intra prediction unit 103 part, the "current block" specifically refers to the encoding block currently to be intra-predicted; when applied to the intra prediction unit 203 part, the "current block" specifically refers to the decoding block currently to be intra-predicted.

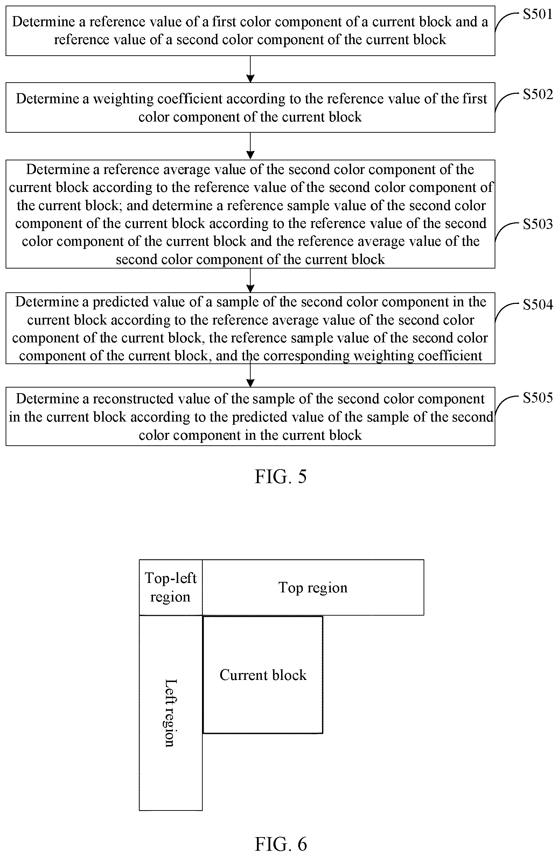

In an embodiment of the present disclosure, referring to FIG. 5, FIG. 5 shows a schematic diagram of a flow chart of a decoding method, provided by the embodiments of the present disclosure. As shown in FIG. 5, the method may include:

S501: determining a reference value of a first color component of a current block and a reference value of a second color component of the current block.

It should be noted that the decoding method of the embodiments of the present disclosure is applied to a decoding apparatus, or a decoding device (which may be also referred to as a "decoder", for short) integrated with the decoding apparatus. In addition, the decoding method of the embodiments of the present disclosure may specifically refer to an intra prediction method, and more specifically, an integer operation method of a weighted-based chroma prediction (WCP).

In the embodiments of the present disclosure, a video picture may be divided into a plurality of decoding blocks, each decoding block may include a first color component, a second color component, and a third color component, and the current block here refers to a decoding block currently to be intra-predicted in the video picture. In addition, it is assumed that the prediction of the first color component is performed on the current block, and the first color component is a luma component, that is, the component to be predicted is the luma component, then the current block may also be referred to as a luma prediction block; or, it is assumed that the prediction of the second color component is performed on the current block, and the second color component is the chroma component, that is, the component to be predicted is the chroma component, then the current block may also be referred to as a chroma prediction block.

It should also be noted that, in the embodiments of the present disclosure, the reference information of the current block may include a value of a sample of the first color component in a neighboring region of the current block and a value of a sample of the second color component in the neighboring region of the current block, and these samples (Samples) may be determined according to the decoded pixel in the neighboring region of the current block. In some embodiments, the neighboring region of the current block may include at least one of: a top neighboring region, a top-right neighboring region, a left neighboring region, or a lower-left neighboring region.

Here, the top neighboring region and the top-right neighboring region may be regarded as a top region as a whole, and the left neighboring region and the lower-left neighboring region may be regarded as a left region as a whole; in addition, the neighboring region may also include a top-left region, as shown in FIG. 6 in details. Herein, when the prediction of the second color component is performed on the current block, the top region, the left region and the top-left region of the current block as neighboring regions may all be referred to as a reference region of the current block, and the pixels in the reference region are all reconstructed reference pixels.

In some embodiments, determining the reference value of the first color component of the current block and the reference value of the second color component of the current block may include:

determining the reference value of the first color component of the current block according to a value of a sample of the first color component in a neighboring region of the current block; and

determining the reference value of the second color component of the current block according to a value of a sample of the second color component in a neighboring region of the current block.

It should be noted that in the embodiments of the present disclosure, the reference pixel of the current block may refer to a reference pixel point neighboring to the current block, or may also be referred to as a sample of the first color component, a sample of the second color component in the neighboring region of the current block, which is represented by Neighboring Sample or Reference Sample. Herein, the neighboring here may refer to spatial neighboring, but is not limited thereto. For example, the neighboring may also be neighboring in time domain, neighboring in spatial and time domain, and even the reference pixel of the current block may also be a reference pixel obtained by performing some kind of processing on the spatially neighboring, temporally neighboring, or spatially and temporally neighboring reference pixel point, etc., which is not limited to the embodiments of the present disclosure.

It should also be noted that, in the embodiments of the present disclosure, it is assumed that the first color component is a luma component and the second color component is a chroma component; then, the value of the sample of the first color component in the neighboring region of the current block is represented as reference luma information corresponding to the reference pixel of the current block, and the value of the sample of the second color component in the neighboring region of the current block is represented as reference chroma information corresponding to the reference pixel of the current block.

It should also be noted that, in the embodiments of the present disclosure, the value of the sample of the first color component or the value of the sample of the second color component is determined from the neighboring region of the current block, where the neighboring region may include only the top neighboring region, or only the left neighboring region, or include the top neighboring region and the top-right neighboring region, or include the left neighboring region and the lower-left neighboring region, or include the top neighboring region and the left neighboring region, or even include the top neighboring region, the top-right neighboring region and the left neighboring region, etc., which is not limited to the embodiments of the present disclosure.

It should also be noted that, in the embodiments of the present disclosure, the neighboring region may also be determined according to the prediction mode of the current block. In a specific embodiment, it may include: if the prediction mode of the current block is a top neighboring mode, determining that the neighboring region of the current block includes the top neighboring region and/or the top-right neighboring region; if the prediction mode of the current block is a left neighboring mode, determining that the neighboring region of the current block includes the left neighboring region and/or the lower-left neighboring region. Herein, the top neighboring mode includes a prediction mode using top neighboring reference samples, and the left neighboring mode includes a prediction mode using left neighboring reference samples.

Exemplarily, if the prediction mode of the current block is a vertical mode in the top neighboring mode, the neighboring region in the weight-based chroma component prediction may only select the top neighboring region and/or the top-right neighboring region; if the prediction mode of the current block is a horizontal mode in the left neighboring mode, the neighboring region in the weight-based chroma component prediction may only select the left neighboring region and/or the lower-left neighboring region.

Furthermore, in some embodiments, determining the reference pixel of the current block may include: performing a screening processing on pixels in the neighboring region of the current block, to determine the reference pixel.

Specifically, in the embodiments of the present disclosure, a first reference pixel set is formed according to pixels in the neighboring region of the current block; then the first reference pixel set may be screened, to determine the reference pixel. Here, a number of reference pixels may be M, where M is a positive integer. In other words, M reference pixels may be selected from pixels in the neighboring region. Herein, the value of M may be 4 generally, but which is not specifically limited thereto.

It should also be noted that among the pixels in the neighboring region of the current block, there may be some unimportant pixels (for example, these pixels have a poor correlation) or some abnormal pixels. In order to ensure the accuracy of the prediction, these pixels need to be removed, so as to obtain available reference pixels. Therefore, in a specific embodiment, screening the pixels in the neighboring region to determine the reference pixel, may include:

determining a location of a pixel to be selected based on locations and/or color component intensities of the pixels in the neighboring region;

determining a reference pixel from the pixels in the neighboring region according to the location of the pixel to be selected.

It should be noted that, in the embodiments of the present disclosure, the color component intensity may be represented by color component information, such as reference luma information, reference chroma information; here, the larger the value of the color component information, the higher the color component intensity. In this way, screening the pixels in the neighboring region may be performed according to the locations of the pixels or the color component intensities, so that the reference pixel of the current block is determined according to the screened pixel, and further, the value of the sample of the first color component in the neighboring region of the current block and the value of the sample of the second color component in the neighboring region of the current block may be determined; then the reference value of the first color component of the current block is determined according to the value of the sample of the first color component in the neighboring region of the current block, and the reference value of the second color component of the current block is determined according to the value of the sample of the second color component in the neighboring region of the current block.

In some embodiments, determining the reference value of the first color component of the current block according to the value of the sample of the first color component in the neighboring region of the current block, may include: performing a first filtering processing on the value of the sample of the first color component in the neighboring region of the current block, to determine the reference value of the first color component of the current block.

In the embodiments of the present disclosure, the first filtering processing is a downsampling filtering processing. Herein, the first color component is a luma component. In this case, the downsampling filtering processing may be performed on the reference luma information, so that the spatial resolution of the filtered reference luma information is the same as the spatial resolution of the reference chroma information. Exemplarily, if the size of the current block is $2M \times 2N$, and the reference luma information is 2M+2N, then after the downsampling filtering, it may be transformed to M+N, to obtain the reference value of the first color component of the current block.

In some embodiments, determining the reference value of the second color component of the current block according to the value of the sample of the second color component in the neighboring region of the current block, may include: performing a second filtering processing on the value of the sample of the second color component in the neighboring region of the current block, to determine the reference value of the second color component of the current block.

In the embodiments of the present disclosure, the second filtering processing is an upsampling filtering processing. Herein, an upsampling rate is a positive integer multiple of 2.

That is, the first color component is the luma component, and the second color component is the chroma component. The embodiments of the present disclosure may also perform the upsampling filtering on the reference chroma information, so that the spatial resolution of the filtered reference chroma information is the same as the spatial resolution of the reference luma. Exemplarily, if the reference luma information is 2M+2N and the reference chroma information is M+N, then after the upsampling filtering is performed on the reference chroma information, the reference chroma information may be transformed to 2M+2N, to obtain the reference value of the second color component of the current block.

S502: determining a weighting coefficient according to the reference value of the first color component of the current block.

It should be noted that, in the embodiments of the present disclosure, the reference information of the current block may also include a reconstructed value of a sample of the first color component in the current block. It is assumed that the first color component is the luma component, then the reconstructed value of the sample of the first color component in the current block is reconstruction luma information of the current block.

In some embodiments, determining the weighting coefficient according to the reference value of the first color component of the current block, may include:

determining a reconstructed value of a sample of the first color component in the current block;
determining a reference sample value of the first color component of the current block according to the reconstructed value of the sample of the first color component in the current block and the reference value of the first color component of the current block; and
determining the weighting coefficient according to the reference sample value of the first color component of the current block.

In a possible embodiment, determining the reference sample value of the first color component of the current block according to the reconstructed value of the sample of the first color component in the current block and the reference value of the first color component of the current block, may include:

determining a residual between the reconstructed value of the sample of the first color component in the current block and the reference value of the first color component of the current block; and

determining the reference sample value of the first color component of the current block according to the residual.

In the embodiments of the present disclosure, the reference sample value of the first color component of the current block may be set to be equal to an absolute value of the residual. In addition, determining the reference sample value of the first color component of the current block according to the residual, may also be performed by squaring the residual, or performing some related processing and mapping for the residual, etc., to determine the reference sample value of the first color component of the current block, which is not limited thereto.

In another possible embodiment, determining the reference sample value of the first color component of the current block according to the reconstructed value of the sample of the first color component in the current block and the reference value of the first color component of the current block, may include:

performing a third filtering processing on the reconstructed value of the sample of the first color component in the current block, to obtain a filtered sample value of the sample of the first color component in the current block; and determining the reference sample value of the first color component of the current block according to the filtered sample value of the sample of the first color component in the current block and the reference value of the first color component of the current block.

In the embodiments of the present disclosure, the third filtering processing is a downsampling filtering processing. Herein, the first color component is the luma component, and at this time, the downsampling filtering processing may also be performed on the reconstruction luma information in the current block. Exemplarily, if the number of reconstruction luma information in the current block is $2M \times 2N$, the number of reconstruction luma information may be transformed to $M \times N$ after the downsampling filtering.

In the embodiments of the present disclosure, determining the reference sample value of the first color component of the current block according to the filtered sample value of the sample of the first color component in the current block and the reference value of the first color component of the current block, may include determining the reference sample value of the first color component of the current block according to a difference between the filtered sample value of the sample of the first color component in the current block and the reference value of the first color component of the current block, and more specifically, may include determining the reference sample value of the first color component of the current block according to an absolute value of the difference between the filtered sample value of the sample of the first color component in the current block and the reference value of the first color component of the current block, which is also not limited thereto.

It may be understood that after determining the reference sample value of the first color component of the current block, the embodiments of the present disclosure may further determine the weighting coefficient. Herein, the reference sample value of the first color component of the current block may be an absolute value of a difference between the reconstructed value of the sample of the first color component in the current block and the reference value of the first color component of the current block.

In a possible implementation, it is assumed that the first color component is the chroma component and the second color component is the luma component, the embodiments of the present disclosure mainly predict the chroma component of the pixel to be predicted in the current block. First, at least one pixel to be predicted in the current block is selected, and a chroma difference (represented by $|\Delta C_k|$) between the reconstructed chroma of each pixel and the reference chroma in the neighboring region is calculated; the chroma differences of the pixels to be predicted at different locations are different in the neighboring region, and the reference pixel location with the smallest chroma difference will follow the change of the pixel to be predicted in the current block. Usually, the size of the chroma difference represents the similarity between the chromas. If $|\Delta C_k|$ is small, it represents that the similarity of the chroma value is relatively strong, and the corresponding weighting coefficient (represented by $w_k$) may be assigned to a larger weight; on the contrary, if $|\Delta C_k|$ is large, it represents that the similarity of the chroma value is relatively weak, and $w_k$ may be assigned to a smaller weight. That is, the relationship between $w_k$ and $|\Delta C_k|$ is approximately inversely proportional. In this way, a preset mapping relationship may be established according to $|\Delta C_k|$, where $w_k=f(|\Delta C_k|)$. Herein, $|\Delta C_k|$ represents the reference sample value of the first color component, $f(|\Delta C_k|)$ represents the value corresponding to the reference sample value of the first color component under the preset mapping relationship, and $w_k$ represents the weighting coefficient, that is, $w_k$ is set to be equal to $f(|\Delta C_k|)$.

In another possible implementation, it is assumed that the first color component is the luma component and the second color component is the chroma component, and in this case, at least one pixel to be predicted in the current block may also be selected, and a luma difference (represented by $|\Delta Y_k|$) between the reconstructed luma of each pixel and the reference luma in the neighboring region is calculated. Herein, if $|\Delta Y_k|$ is small, it represents that the similarity of the luma value is relatively strong, and the corresponding weighting coefficient (represented by $w_k$) may be assigned to a larger weight; on the contrary, if $|\Delta Y_k|$ is large, it represents that the similarity of the luma value is relatively weak, and $w_k$ may be assigned to a smaller weight. In this way, when calculating the weighting coefficient, the reference sample value of the first color component may also be $|\Delta Y_k|$, and the weighting coefficient may also be calculated according to $w_k = f(|\Delta Y_k|)$.

It should be noted that when the chroma component of the pixel to be predicted in the current block is predicted, the chroma difference $|\Delta C_k|$ between the reference pixel and the pixel to be predicted cannot be directly obtained because the chroma component value of the pixel to be predicted cannot be directly determined; however, within a local region of the current block, there is a strong correlation between the components, and in this case, $|\Delta C_k|$ may be derived according to the luma difference $|\Delta Y_k|$ between the reference pixel and the pixel to be predicted; that is, $|\Delta C_k|$ may be obtained according to a product of $|\Delta Y_k|$ and a model factor; in this way, a value of the product is equal to a product of the model factor and $|\Delta Y_k|$. That is, in the embodiments of the present disclosure, with respect to the reference sample value of the first color component, the reference sample value of the first color component may be $|\Delta C_k|$, that is, the absolute value of the chroma difference; alternatively, the reference sample value of the first color component may also be $|\Delta Y_k|$, that is, the absolute value of the luma difference; alternatively, the reference sample value of the first color component may also be $|\alpha \Delta Y_k|$ that is, a product of the absolute value of the luma difference and a preset multiplier, and so on. Herein, the preset multiplier here is the model factor described in the embodiments of the present disclosure.

Furthermore, with respect to the model factor, in a specific embodiment, the method may further include: determining the model factor, by performing least-square method calculation according to the first color component value of the reference pixel and the second color component value of the reference pixel.

That is, it is assumed that the number of reference pixels is N, the first color component value of the reference pixel is the reference luma information of the current block, and the second color component value of the reference pixel is the reference chroma information of the current block, then the chroma component values and luma component values of the N reference pixels may be calculated by the least-square method calculation, to obtain the model factor. Exemplarily, the least-square method regression calculation is as follows:

$$\alpha = \frac{N \sum_k L_k \cdot C_k - \sum_k C_k \sum_k L_k}{N \sum_k L_k \cdot L_k - \sum_k L_k \sum_k L_k} \qquad (1).$$

Herein, $L_k$ represents a luma component value of a k-th reference pixel, $C_k$ represents a chroma component value of the k-th reference pixel, and N represents the number of reference pixels; $\alpha$ represents the model factor, which may be obtained by using the least-square method regression calculation. It should be noted that the model factor may also be a fixed value or may be slightly adjusted based on a fixed value, etc., which is not specifically limited in the embodiments of the present disclosure.

In yet another possible embodiment, the reference sample value of the first color component of the current block may be an absolute value of a difference between the luma reconstruction information (represented by recY) in the current block and inSize number of the reference luma information (represented by refY). Herein, for the pixel to be predicted C$^{pred}$[i][j] in the current block, its corresponding luma difference vector *diffY[i][j][k]* may be obtained by subtracting its corresponding luma reconstruction information *recY[i][j]* from the inSize number of reference luma information refY[k] and taking an absolute value of the subtracted result; that is, in the embodiments of the present disclosure, the reference sample value of the first color component of the current block may be represented by *diffY[i][j][k]*.

Further, in some embodiments, determining the weighting coefficient according to the reference sample value of the first color component of the current block, may include: determining a weight index value according to the reference sample value of the first color component of the current block; and determining the weighting coefficient by using a first preset mapping relationship according to the weight index value.

In a specific embodiment, determining the weight index value according to the reference sample value of the first color component of the current block, may include:

   determining a maximum weight index value and a minimum weight index value of the current block; and
   refining the reference sample value of the first color component according to the maximum weight index value and the minimum weight index value, to determine the weight index value.

It should be noted that in the embodiments of the present disclosure, the maximum weight index value may be represented by theMaxPos, the minimum weight index value may be represented by zero, and the weight index value may be represented by index. Here, the weight index value is limited between theMaxPos and zero. Exemplarily, the weight index value may be calculated according to the following formula, as shown below:

$$index = Clip3(0, theMaxPos, diffY[i][j][k]) \qquad (2).$$

$$Clip3(x, y, z) = \begin{cases} x \; ; z < x \\ y \; ; z > y \\ z \; ; otherwise \end{cases}$$

Herein, k=0, 1, ..., inSize-1, . That is, in the formula (2), if z ; otherwise diffY [i][j][k] < 0 , index=0; if diffY[i][j][k] > theMaxPos , index= theMaxPos ; otherwise, if $0 \le$ diffY[i][j][k] $\le$ theMaxPos, index=diffY [i][j][k].

In a specific embodiment, the maximum weight index value may be related to a bit depth (represented by BitDepth) of the color component. Exemplarily, the maximum weight index value may be calculated according to the following formula, as shown below:

$$theMaxPos = 1 \ll BitDepth - 1 \tag{3}.$$

It should be noted that in the embodiments of the present disclosure, the value of theMaxPos includes but is not limited to being calculated according to the formula (3), and it may also be determined in core parameters of WCP.

Further, with respect to the first preset mapping relationship, in some embodiments, the first preset mapping relationship is a numerical mapping look up table between the weight index value and the weighting coefficient. That is, in the embodiments of the present disclosure, the decoder side may be pre-set with a corresponding look up table (Look Up Table, LUT). By using the look up table and combining with the index, the corresponding weighting coefficient may be determined. Exemplarily, the weighting coefficient cWeightInt[i] [j] [k] may be represented by the following mapping relationship:

$$cWeightInt[i][j][k] = LUT[index] \tag{4}.$$

With respect to the first preset mapping relationship, in some embodiments, the first preset mapping relationship may also be a preset function relationship. In some embodiments, determining the weighting coefficient by using the first preset mapping relationship according to the weight index value, may include: determining a first value corresponding to the weight index value under the first preset mapping relationship; and setting the weighting coefficient to be equal to the first value.

In a specific embodiment, determining the first value corresponding to the weight index value under the first preset mapping relationship, may include:

determining a first factor;
determining a second value by using a second preset mapping relationship according to the weight index value;
calculating a first product value of the first factor and the second value; and
setting the first value to be equal to a value corresponding to the first product value under the first preset mapping relationship.

It should be noted that, in the embodiments of the present disclosure, the first factor may be represented by ModelScale, and the weight index value is represented by index. Exemplarily, the weighting coefficient cWeightInt[i] [j] [k] may also be represented by the following function relationship:

$$cWeightInt[i][j][k] = Round\left(e^{-index} \times ModelScale\right) \tag{5}.$$

Here, the second preset mapping relationship may be an exponential function relationship based on n, such as $e^{-n}$; herein, the value of n is equal to the weight index value, that is, n=0, 1,..., theMaxPos. In this way, when the value of n is equal to the index, then the second value is equal to $e^{-index}$, and the first product value is equal to $e^{-index} \times$ ModelScale. In addition, the first preset mapping relationship may be set to *Round(x)*; so when *x* is equal to the first product value, the value of *Round (x)* is the first value, that is, the weighting coefficient cWeightInt[i] [j] [k].

It should also be noted that, in the embodiments of the present disclosure, with respect to the first preset mapping relationship, it may be represented by the following formula:

$$Round(x) = Sign(x) \times Floor(Abs(x) + 0.5) \tag{6}.$$

$$Sign(x) = \begin{cases} 1 \; ; \; x > 0 \\ 0 \; ; \; x == 0; \\ -1 \; ; \; x < 0 \end{cases} Abs(x) = \begin{cases} x \; ; \; x >= 0 \\ -x \; ; \; x < 0 \end{cases}$$

Herein, ; and Floor(x) represents the maximum integer less than or equal to x.

Further, with respect to the first factor, in some embodiments, the first factor may be a preset constant value. That is, the first factor may be a preset constant, which is not related to a block size parameter.

With respect to the first factor, in some embodiments, the value of the first factor may also be related to the block size parameter. In a specific embodiment, determining the first factor, may include: determining a value of the first factor according to a size parameter of the current block; where the size parameter of the current block includes at least one of the following parameters: a width of the current block, or a height of the current block. That is, the embodiments of the present disclosure may fix the value of the first factor in a classification manner. For example, the size parameter of the current block is divided into three types, and the value of the first factor corresponding to each type is determined. For this case, the embodiments of the present disclosure may also pre-store a mapping look up table of the size parameter of the current block and the value of the first factor, and then determine the value of the first factor according to the look up table.

For example, W represents the width of the current block, and H represents the height of the current block; if the size parameter of the current block meets a first preset condition, that is, Min(W, H)<=4, the value of the first factor is set to a first value; if the size parameter of the current block meets a second preset condition, that is, Min(W, H)>4&& Min(W, H)<=16, the value of the first factor is set to a second value; if the size parameter of the current block meets a third preset condition, that is, Min(W, H)>16, then the value of the first factor is set to a third value. Briefly, in the embodiments of the present disclosure, the first factor may be a preset constant, or may be determined according to the size parameter of the current block, or may even be determined in other manners (for example, according to BitDepth of the color component, etc.), which is not limited thereto.

Further, in some embodiments, determining the weight index value according to the reference sample value of the first color component of the current block, may include: determining a second factor; and determining the weight index value according to the reference sample value of the first color component of the current block and the second factor.

It should be noted that, in the embodiments of the present disclosure, under a certain condition, the weighting coefficient may also be adjusted according to a control parameter in the core parameters of WCP. Here, the second factor is the control parameter described in this embodiment (also referred to as a "scale parameter", "scale factor" , etc.), and is represented by S. Exemplarily, if the size of the current block is flexible, the weight coefficient may be adjusted according to the second factor. Taking a nonlinear function (such as the Softmax function) as an example, different second factors may be selected according to the different block classification types to which the current block belongs, to adjust the function, so as to determine the weight coefficient according to the adjusted function.

It should also be noted that, with respect to the second factor, in some embodiments, the second factor may be a preset constant value. That is, in this case, with respect to S, a distribution of the weighting coefficient of the neighboring chroma may be adjusted according to the characteristic of the relatively flat chroma, so as to capture a distribution of the weighting coefficient suitable for the chroma prediction of the natural picture. In order to determine the parameter S suitable for the chroma prediction of the natural picture, a given S set is traversed, and whether S is appropriate is measured by the difference between the prediction chroma and the original chroma under different S. Exemplarily, S may be $2^{-\varepsilon}$, where $\varepsilon \in \{1, 0, -1, -2, -3\}$; it has been found after testing, that in this S set, the best value of S is 4. Therefore, in a specific embodiment, S may be set to 4, but which is not limited in the embodiments of the present disclosure.

It should also be noted that, with respect to the second factor, in some embodiments, the value of the second factor may also be related to the block size parameter. In a specific embodiment, determining the second factor, may include: determining a value of the second factor according to a size parameter of the current block; where the size parameter of the current block includes at least one of following parameters: a width of the current block, or a height of the current block.

In a possible implementation, determining the value of the second factor according to the size parameter of the current block, may include:

if minimum values of the height and the width of the current block are less than or equal to 4, determining the second factor to be 8;
if minimum values of the height and the width of the current block are greater than 4 and less than or equal to 16, determining the second factor to be 12; or
if minimum values of the height and the width of the current block are greater than 16, determining the second factor to be 16.

It should be noted that, in the embodiments of the present disclosure, the value of the second factor may be fixed in a classification manner. For example, the size parameter of the current block is divided into three types, and the value of the second factor corresponding to each type is determined. For this case, the embodiments of the present disclosure may also pre-store a mapping look up table of the size parameter of the current block and the value of the second factor, and then determine the value of the second factor according to the look up table. Exemplarily, Table 1 shows a correspondence between the second factor and the size parameter of the current block, provided by the embodiments of the present disclosure.

Table 1

| Size parameter of the current block | Second factor |
|---|---|
| Min(W, H)<=4 | 8 |
| Min(W, H)>4&& Min(W, H)<=16 | 12 |
| Min(W, H)>16 | 16 |

In another possible implementation, in the adjustment of the weight coefficient, the above correspondence between the second factor and the size parameter of the current block may also be fine-tuned. Table 2 shows another correspondence between the second factor and the size parameter of the current block, provided by the embodiments of the present disclosure.

Table 2

| Size parameter of the current block | Second factor |
|---|---|
| Min(W, H)<=4 | 8 |
| Min(W, H)>4&& Min(W, H)< 16 | 12 |
| Min(W, H)>=16 | 16 |

In yet another possible implementation, in the adjustment of the weight coefficient, the value of the second factor may also be fine-tuned. In some embodiments, determining the value of the second factor according to the size parameter of the current block, may include:

if minimum values of the height and the width of the current block are less than or equal to 4, determining the second factor to be 7;
if minimum values of the height and the width of the current block are greater than 4 and less than or equal to 16, determining the second factor to be 11;
if minimum values of the height and the width of the current block are greater than 16, determining the second factor to be 15.

That is, by fine-tuning the value of the second factor, Table 3 shows yet another correspondence between the second factor and the size parameter of the current block, provided by the embodiments of the present disclosure.

Table 3

| Size parameter of the current block | Second factor |
|---|---|
| Min(W, H)<=4 | 7 |
| Min(W, H)>4&& Min(W, H)< = 16 | 11 |
| Min(W, H)>16 | 15 |

It should also be noted that, in the embodiments of the present disclosure, the size parameter of the current block is divided into three types, and different size parameters may also be indicated by a block type index value (represented by wcpSizeId). In yet another possible implementation, determining the value of the second factor according to the size parameter of the current block, may include: determining the value of the second factor according to the block type index value.

Exemplarily, if the block type index value is equal to 0, it indicates the current block with Min(W, H) <=4; if the block type index value is equal to 1, it indicates the current block with Min(W, H)>4&& Min(W, H)<=16; if the block type index value is equal to 2, it indicates the current block with Min(W, H)>16. In this case, Table 4 shows a correspondence between the second factor and the block type index value, provided by the embodiments of the present disclosure.

Table 4

| Block type index value | Second factor |
|---|---|
| 0 | 8 |

(continued)

| Block type index value | Second factor |
|---|---|
| 1 | 12 |
| 2 | 16 |

Exemplarily, if the block type index value is equal to 0, it indicates the current block with Min(W, H)<128; if the block type index value is equal to 1, it indicates the current block with Min(W, H)> = 128&& Min(W, H) <=256; if the block type index value is equal to 2, it indicates the current block with Min(W, H)>256. In this case, Table 5 shows another correspondence between the second factor and the block type index value, provided by the embodiments of the present disclosure.

Table 5

| Block type index value | Second factor |
|---|---|
| 0 | 10 |
| 1 | 8 |
| 2 | 1 |

Exemplarily, if the block type index value is equal to 0, it indicates the current block with Min(W, H)<64; if the block type index value is equal to 1, it indicates the current block with Min(W, H)> = 64&&Min(W, H)<= 512; if the block type index value is equal to 2, it indicates the current block with Min(W, H)> 512. In this case, Table 6 shows yet another correspondence between the second factor and the block type index value, provided by the embodiments of the present disclosure.

Table 6

| Block type index value | Second factor |
|---|---|
| 0 | 16 |
| 1 | 4 |
| 2 | 1 |

It should also be noted that, with respect to the second factor, in some embodiments, the second factor may also be classified according to a number of reference pixels of the current block. In another specific embodiment, determining the second factor, may include: determining the value of the second factor according to the number of reference pixels of the current block; where N represents the number of reference pixels.

In a possible implementation, determining the value of the second factor according to the number of reference pixels of the current block, may include:

if a value of N is less than 16, determining the second factor to be 8;
if a value of N is greater than or equal to 16 and less than 32, determining the second factor to be 12; or
if a value of N is greater than or equal to 32, determining the second factor to be 16.

That is, the classification is performed according to the number of reference pixels of the current block. Table 7 shows a correspondence between the second factor and the number of reference pixels, provided by the embodiments of the present disclosure.

Table 7

| Number of reference pixels | Second factor |
|---|---|
| N<16 | 8 |
| N >=16&& N < 32 | 12 |
| N >=32 | 16 |

It should be noted that whether in Table 1, Table 2, Table 3, or Table 4, Table 5, Table 6, Table 7, etc., this is only an exemplary look up table, which is not limited specifically in the embodiments of the present disclosure.

Further, in some embodiments, determining the weight index value according to the reference sample value of the first color component of the current block and the second factor, may include:

determining a third value by using a third preset mapping relationship according to the reference sample value of the first color component and the second factor;

determining a maximum weight index value and a minimum weight index value of the current block; and

refining the third value according to the maximum weight index value and the minimum weight index value, to determine the weight index value.

It should be noted that in the embodiments of the present disclosure, the maximum weight index value may be represented by theMaxPos, the minimum weight index value may be represented by zero, and the weight index value may be represented by index. Here, the weight index value is limited between theMaxPos and zero and the third value is f(S, diffY[i] [j] [k]). Exemplarily, the weight index value may be calculated according to the following formula, as shown below:

$$\text{index} = \text{Clip3}\big(0, \text{theMaxPos}, f(S, \text{diffY}[i][j][k])\big) \tag{7}.$$

$$\text{Clip3}(x, y, z) = \begin{cases} x\,;\, z < x \\ y\,;\, z > y \\ z\,;\, \text{otherwise} \end{cases}$$

Herein, k=0, 1, ..., inSize-1, . That is, in the formula (7), if z ; otherwise f(S, diffY[i][j][k]) < 0, index=0; if f(S, diffY[i][j][k]) > theMaxPos, index = theMaxPos; otherwise, if $0 \le$ f(S, diffY[i][j][k]) $\le$ theMaxPos, index = f(S, diffY[i][j][k]). Here, the value of theMaxPos may be calculated according to the above formula (3), or determined in the core parameters of WCP, which is not limited thereto.

It should be also noted that, with respect to the third preset mapping relationship, f( ) refers to a function of the second factor S and the luma difference vector diffY[i][j][k]. In a possible implementation, f(S, diffY[i][j][k]) may be implemented by the following formula, as follows:

$$f\big(S, \text{diffY}[i][j][k]\big) = \text{diffY}[i][j][k] \tag{8}.$$

In another possible implementation, f(S,diffY[i][j][k]) may be implemented by the following operation. In some embodiments, determining the third value by using the third preset mapping relationship according to the reference sample value of the first color component and the second factor, may include:

determining at least one shift array;

determining a target offset from the at least one shift array according to the second factor; and

performing a right shift operation of the target offset on the reference sample value of the first color component, to determine the third value.

Here, since different second factors S may use their own LUT[S], the embodiments of the present disclosure only stores several basic LUTs. For example, when S={2, 4, 8}, only the LUT when S=2 is stored; for other second factors S, the LUT may be obtained by the shift operation. At this time, f(S, diffY[i] [j] [k]) may be implemented by the following formula, as follows:

$$f(S, \text{diffY}[i][j][k]) = \text{diffY}[i][j][k] \gg \text{LUTshift}[S] \tag{9}$$

Herein, for the shift array LUTshift[S], its definition is as follows:

$$\begin{cases} \text{LUTshift}[2] = 0 \\ \text{LUTshift}[4] = 1 \\ \text{LUTshift}[8] = 2 \end{cases} \tag{10}.$$

In the embodiments of the present disclosure, if the second factor is equal to 2, the target offset is equal to 0; if the second factor is equal to 4, then the target offset is equal to 1; if the second factor is equal to 8, then the target offset is equal to 2; and then, the right shift operation of the target offset may be performed on the reference sample value of the first color component, to determine the third value.

In addition, it should be noted that, for f(S, diffY[i] [j] [k]), its implementation is not limited to the formula (8) or the formula (9), and its other implementations may also be used, which are not limited in the embodiments of the present disclosure.

Further, in some embodiments, determining the weighting coefficient by using the first preset mapping relationship according to the weight index value, may include:

> determining a second product value according to the second factor and the weight index value;
> determining a fourth value corresponding to the second product value under the first preset mapping relationship, and
> setting the weighting coefficient to be equal to the fourth value.

In a specific embodiment, determining the fourth value corresponding to the second product value under the first preset mapping relationship, may include:

> determining a first factor;
> determining a fifth value by using a second preset mapping relationship according to the second product value;
> calculating a third product value of the first factor and the fifth value; and
> setting the fourth value to be equal to a value corresponding to the third product value under the first preset mapping relationship.

It should be noted that, in the embodiments of the present disclosure, the first factor may be represented by ModelScale the second factor may be represented by S, and the weight index value may be represented by index.

With respect to the first preset mapping relationship, in some embodiments, the first preset mapping relationship is a numerical mapping look up table of the second factor, the weight index value and the weighting coefficient. That is, in the embodiments of the present disclosure, the decoder side may be pre-set with a corresponding look up table (Look Up Table, LUT). By using the look up table and combining with index, the corresponding weighting coefficient may be determined. Exemplarily, the weighting coefficient cWeightInt[i] [j] [k] may be represented by the following mapping relationship:

$$cWeightInt[i][j][k] = LUT[S][index] \qquad (11).$$

With respect to the first preset mapping relationship, in some embodiments, the first preset mapping relationship may also be a preset function relationship, where the inputs of the function are index and S, and the output of the function is the weighting coefficient. For example, the weighting coefficient cWeightInt[i] [j] [k] may also be represented by the following function relationship:

$$cWeightInt[i][j][k] = Round\left(e^{\frac{-index}{S}} \times ModelScale\right) \qquad (12).$$

Here, the second preset mapping relationship may still be an exponential function relationship based on n, such as $e^{\frac{-n}{S}}$; where the value of n is equal to the weight index value, that is, n=0, 1, ..., theMaxPos. In this way, if the value of n is equal to index, the fifth value is equal to $e^{\frac{-index}{S}}$, and the third product value is equal to $e^{\frac{-index}{S}} \times ModelScale$. In addition, the first preset mapping relationship may be set to Round(x), as shown in the above formula (6); so when $x$ is equal to the third product value, the value of Round(x) is the fourth value, that is, the weighting coefficient cWeightInt[i][j][k].

Briefly, the embodiments of the present disclosure use the LUT to determine the weighting coefficient cWeightInt[i][j][k]. Herein, the number of elements contained in the LUT is theMaxPos, as shown in the formula (3), and theMaxPos is related to the bit depth of the luma or chroma; as shown in the formula (4) and the formula (11), the values of the elements in the LUT are all constant values, which may be stored in the decoder, or calculated before the encoding or decoding; as shown in the formula (5) and the formula (12), which may be determined according to an exponential function relationship with an exponent of n; as shown in the formula (4) and the formula (11), the index parameter of the LUT is determined according to diffY[i][j] [k], and the LUT stores cWeightInt[i][j][k] corresponding to different index parameters.

S503: determining a reference average value of the second color component of the current block according to the reference value of the second color component of the current block; and determining a reference sample value of the second color component of the current block according to the reference value of the second color component of the current block and the reference average value of the second color component of the current block.

It should be noted that, in the embodiments of the present disclosure, the number of the input reference pixels of the weight-based prediction may be represented by N or inSize. Here, the number of input reference pixels of the weight-based prediction is the same as the number of reference sample values of the second color component, or in other words, N represents the number of reference sample values of the second color component, and N is a positive integer.

In some embodiments, determining the reference average value of the second color component of the current block according to the reference value of the second color component of the current block may include: performing an average operation on N reference values of the second color component of the current block, to obtain the reference average value of the second color component of the current block.

It should be also noted that, in the embodiments of the present disclosure, the reference value of the second color component of the current block may be represented by refC[k], and the reference average value of the second color component of the current block may be represented by avgC, where k=0, 1,..., N-1. The calculation of avgC is as follows:

$$avgC = \frac{\sum_{k=0}^{N-1} refC[k]}{N} \tag{13}.$$

For the value of N, in some embodiments, the method may further include: determining a block type index value according to a size parameter of the current block; and determining a value of N by using a fifth preset mapping relationship according to the block type index value.

In a specific embodiment, the fifth preset mapping relationship represents a numerical mapping look up table of the block type index value and N.

It should be noted that, in the embodiments of the present disclosure, the block type index value may be represented by wcpSizeId. For different block type index values, the number of input reference pixels of the weight-based prediction may also be different; that is, the value of N or (inSize) is different.

Exemplarily, in a case of the current block with Min(W, H)<=4, the block type index value is determined to be equal to 0; in a case of the current block with Min(W, H)>4&Min(W, H)<=16, then the block type index value is determined to be equal to 1; in a case of the current block with Min(W, H)>16, the block type index value is determined to be equal to 2; or, in a case of the current block with Min(W, H)<128, the block type index value is determined to be equal to 0; in a case of the current block with Min(W, H)>=128&Min(W, H)<=256, the block type index value is determined to be equal to 1; in a case of the current block with Min(W, H)>256, the block type index value is determined to be equal to 2; which is not limited thereto.

In a possible implementation, Table 8 shows a correspondence between the block type index value and the value of N (inSize), provided by the embodiments of the present disclosure.

Table 8

| Block type index value | N (inSize) |
|---|---|
| 0 | 2 × H+2 × W |
| 1 | 2 × H+2 × W |
| 2 | 2 × H+2 × W |

In another possible implementation, Table 9 shows another correspondence between the block type index value and the value of N (inSize), provided by the embodiments of the present disclosure.

Table 9

| Block type index value | N (inSize) |
|---|---|
| 0 | 2 × H+2 × W |
| 1 | 1.5 × H+1.5 × W |
| 2 | H+W |

Further, with respect to the reference sample value of the second color component of the current block, in some embodiments, determining the reference sample value of the second color component of the current block according to the reference value of the second color component of the current block and the reference average value of the second color component of the current block, may include:

performing a subtraction operation on the reference value of the second color component of the current block and the reference average value of the second color component of the current block, to obtain the reference sample value of the second color component of the current block.

In the embodiments of the present disclosure, the average value avgC of N reference chroma information refC is calculated, and then the reference chroma difference vector diffC may be obtained by subtracting the average value avgC from the N reference chroma information refC. Specifically, diffC is calculated as follows:

$$\mathrm{diffC}[k] = \mathrm{refC}[k] - \mathrm{avgC} \qquad (14).$$

Herein, k=0, 1, ..., N-1.

S504: determining a predicted value of a sample of the second color component in the current block according to the reference average value of the second color component of the current block, the reference sample value of the second color component of the current block, and the weighting coefficient.

S505: determining a reconstructed value of the sample of the second color component in the current block according to the predicted value of the sample of the second color component in the current block.

It should be noted that after the reference average value avgC of the second color component of the current block, the reference sample value *diffC[k]* of the second color component of the current block, and the g weighting coefficient cWeightInt[i][j][k] are determined, the predicted value of the sample of the second color component in the current block may be further determined.

In some embodiments, determining the predicted value of the sample of the second color component in the current block according to the reference average value of the second color component of the current block, the reference sample value of the second color component of the current block, and the weighting coefficient, may include:

determining a weighted value of the reference sample value of the second color component and the weighting coefficient;

setting a weighted sum value of pixels to be predicted in the current block to be equal to a sum of the N weighted values, and setting a coefficient sum value of the pixels to be predicted in the current block to be equal to a sum of the N weighted coefficients; where N represents a number of reference sample values of the second color component, and N is a positive integer;

determining a sixth value by using a fourth preset mapping relationship according to the weighted sum value and the coefficient sum value;

performing an addition operation on the reference average value of the second color component and the sixth value, to obtain a predicted value of the second color component of the pixels to be predicted in the current block; and

determining the predicted value of the sample of the second color component in the current block according to the predicted value of the second color component of the pixels to be predicted in the current block.

It should be noted that, in the embodiments of the present disclosure, if the number of reference sample values of the second color component is N, firstly, a weighted value (i.e., subC[i][j][k]) of each reference sample value of the second color component and the weighting coefficient is determined, and then, the N weighted values may be added to obtain a weighted sum value of the pixels to be predicted in the current block, which may be represented by calVal. Specifically, the calculation formula thereof is specifically as follows:

$$\mathrm{subC}[i][j][k] = \big(\mathrm{cWeightInt}[i][j][k] \times \mathrm{diffC}[k]\big) \qquad (15);$$

$$\mathrm{calVal} = \sum_{k=0}^{N-1} \mathrm{subC}[i][j][k] \qquad (16).$$

Here, *(i, j)* represents the location information of the pixel to be predicted in the current block, k represents the k-th reference sample value of the second color component used in the WCP calculation process, and k=0,..., N-1.

It should also be noted that in the embodiments of the present disclosure, for the N weighting coefficients corresponding to the pixels to be predicted in the current block, these N weighting coefficients may be added to obtain a coefficient sum value of the pixels to be predicted in the current block, which may be expressed as sum. Specifically. the calculation formula thereof is as follows:

$$\mathrm{sum} = \sum_{k=0}^{N-1} \mathrm{cWeightInt}[i][j][k] \qquad (17).$$

Further, in some embodiments, determining the sixth value by using the fourth preset mapping relationship according to the weighted sum value and the coefficient sum value, may include:

determining a preset offset;
determining a first numerical value by using a sixth preset mapping relationship according to the coefficient sum value; and determining an array index value by using a seventh preset mapping relationship according to the coefficient sum value and the first numerical value, and determining a second numerical value by using an eighth preset mapping relationship according to the array index value and the preset offset;
determining a third numerical value according to the first numerical value in a case where the array index value is equal to zero or not; and determining a first offset according to the third numerical value and the preset offset;
determining a fourth product value according to the second numerical value and the weighted sum value, determining a preset addition value according to the third numerical value and the preset offset, and performing an addition operation on the fourth product value and the preset addition value, to obtain a target sum value; and
performing a right shift operation of the first offset on the target sum value, to determine the sixth value.

It should be noted that, in the embodiments of the present disclosure, the preset offset may be represented by Shift, the array index value may be represented by normDiff, the first numerical value may be represented by $x$, the second numerical value may be represented by v, the third numerical value may be represented by y, and the preset addition value may be represented by add. In a specific embodiment, the value of Shift may be set to 5, but which is not specifically limited thereto.

It should also be noted that, in the embodiments of the present disclosure, for the calculation of the first numerical value, the sixth preset mapping relationship may be represented by the following formula:

$$x = \text{Floor}\left(\text{Log2}(\text{sum})\right) \tag{18}.$$

In a possible implementation, the calculation of the first numerical value, according to a direct mathematical description, may include: determining a logarithmic value of the coefficient sum value with a base 2; and determining a maximum integer value less than or equal to the logarithmic value; the maximum integer value determined here is the first numerical value.

In another possible implementation, the calculation of the first numerical value, according to the description of the calculation result, may include: setting the first numerical value to be equal to a number of bits of binary symbols required for a binary representation of the coefficient sum value, minus one.

In yet another possible implementation, the calculation of the first numerical value, according to the description (text description) of a possible integer implementation, may include: performing a binary right shift operation on the coefficient sum value, determining a number of right shift bits when the right-shifted value is exactly equal to zero; and setting the first numerical value to be equal to the number of right shift bits minus one.

In yet another possible implementation, the calculation of the first numerical value, according to the description (pseudo code description) of a possible integer implementation, as shown in the formula (18), may include:

```
x=0
while(sum!=0){
sum=sum>>1;
x++;
}
x=x-1.
```

Equivalently, the pseudo code may also be described as follows:

```
x=0
while(sum>1){
sum=sum>>1;
x++;
}
```

Alternatively, the pseudo code may also be described as follows:

```
x=0
while(sum!=1){
sum=sum>>1;
x++;
}
```

It should be noted that, in the description of the pseudo code, symbols involved in the embodiments of the present disclosure are understood according to the C language.

In some embodiments, determining the array index value by using the seventh preset mapping relationship according to the coefficient sum value and the first numerical value, may include: using the coefficient sum value and the first numerical value as inputs of a preset function relationship, and outputting the array index value according to the preset function relationship.

In the embodiments of the present disclosure, the calculation of the array index value may be represented as follows:

$$\mathrm{normDiff} = \mathrm{Func}(\mathrm{sum}, \mathrm{x}) \qquad (19).$$

Herein, sum represents the coefficient sum value, x represents the first numerical value, and normDiff represents the array index value. Here, Func( ) is a function related to Shift, and exemplarily, a specific form of Func( ) is as follows:

$$\mathrm{Func}(\mathrm{sum}, \mathrm{x}) = (\mathrm{sum} \ll (\mathrm{Shift} + 1) \gg \mathrm{x}) \& (1 \ll (\mathrm{Shift} + 1) - 1) \qquad (20).$$

Correspondingly, when Shift=5, normDiff = ((sum << 5) >> x)&31.

In some embodiments, determining the second numerical value by using the eighth preset mapping relationship according to the array index value and the preset offset, may include:

determining an index indication value in an array mapping table according to the array index value; and determining the second numerical value by using the eighth preset mapping relationship according to the index indication value and the preset offset.

It should be noted that, in the embodiments of the present disclosure, the array mapping table is represented by DivSigTable, and the index indication value corresponding to the array index value normDiff in DivSigTable is DivSigTable[normDiff]. Exemplarily, according to DivSigTable[normDiff] and Shift, the eighth preset mapping relationship is as follows:

$$\mathrm{v} = \mathrm{DivSigTable}[\mathrm{normDiff}] \mid (1 \ll \mathrm{Shift}) \qquad (21).$$

Correspondingly, when Shift=5, v = DivSigTable[normDiff] | 32. Here, the "|" operator represents a bitwise-OR operation, that is, v is obtained by the bitwise-OR operation between DivSigTable[normDiff] and 32.

In some embodiments, determining the third numerical value according to the first numerical value in the case where the array index value is equal to zero or not, may include:

if the array index value is equal to zero, setting the third array to be equal to the first numerical value; if the array index value is not equal to zero, setting the third array to be equal to a sum value of the first numerical value and one.

It should be noted that, in the embodiments of the present disclosure, the first numerical value is represented by x, and the third numerical value is represented by y. Exemplarily, it may be represented as follows:

$$y = \begin{cases} \mathrm{x} & , \mathrm{if\ normDiff} == 0 \\ \mathrm{x} + 1, & \mathrm{if\ normDiff}! = 0 \end{cases} \qquad (22).$$

Here, the "==" operator represents an equal operation, while the "!=" operator represents an unequal operation.

It should also be noted that, in the embodiments of the present disclosure, with respect to the preset addition value, the preset addition value is determined according to the third numerical value and the preset offset, the calculation formula of which is as follows:

$$\mathrm{add} = 1 \ll \mathrm{y} \ll (\mathrm{Shift} - 1) \qquad (23).$$

It should be also noted that, in the embodiments of the present disclosure, the first offset is determined by the third numerical value and the preset offset. Exemplarily, the addition operation is performed on the third numerical value and the preset offset, to obtain the first offset, that is, the first offset may be y+ Shift.

Thus, it is assumed that the sixth value is represented by C, the sixth value may be represented by the following formula:

$$C = \left(\left(\sum_{k=0}^{N-1} subC[i][j][k]\right) \times v + add\right) \gg (y + Shift) \qquad (24).$$

Here, the "<<" operator represents the left shift operation, and the ">>" operator represents the right shift operation.

Furthermore, for determining the predicted value of the second color component of the pixel to be predicted in the current block, it is assumed that the pixel to be predicted is (i, j), the predicted value of the second color component of the pixel to be predicted in the current block is represented by $C^{pred}[i][j]$. At this time, the predicted value of the second color component of the pixel to be predicted in the current block may be obtained, by performing the addition operation on the reference average value of the second color component and the sixth value, the calculation formula of which is as follows:

$$\begin{aligned} C^{pred}[i][j] &= avgC + C \\ &= avgC + \left(\left(\sum_{k=0}^{N-1} subC[i][j][k]\right) \times v + add\right) \gg (y + Shift) \end{aligned} \qquad (25).$$

Furthermore, in the embodiments of the present disclosure, $C^{pred}[i][j]$ usually needs to be limited within a preset range. Therefore, in some embodiments, the method may further include: refining the predicted value of the second color component of the pixels to be predicted, and using the predicted value that is refined as the predicted value of the second color component of the pixels to be predicted in the current block.

It should be noted that, in the embodiments of the present disclosure, the preset range may be: between 0 and (1<<BitDepth) -1; where BitDepth is the bit depth required for the chroma component. If the predicted value exceeds the value of the preset range, the predicted value needs to be refined accordingly. For example, a clamping operation may be performed on $C^{pred}[i][j]$, specifically as follows:

when the value of $C^{pred}[i][j]$ is less than 0, setting it to 0;
when the value of $C^{pred}[i][j]$ is greater than or equal to 0 and less than or equal to (1<<BitDepth)-1, it is equal to $C^{pred}[i][j]$;
when the value of $C^{pred}[i][j]$ is greater than (1<<BitDepth)-1, setting it to (1<<BitDepth)-1.

In this way, after the predicted value is refined, it may be ensured that the predicted value of the second color component of the pixel to be predicted in the current block is between 0 and (1<<BitDepth)-1.

Furthermore, after the predicted value is determined, under a certain condition, a post-processing operation is required, to obtain a final chroma predicted value. Therefore, in some embodiments, determining the predicted value of the sample of the second color component in the current block according to the predicted value of the second color component of the pixels to be predicted in the current block, may include:
performing a filtering processing on the predicted value of the second color component of the pixels to be predicted, to determine the predicted value of the sample of the second color component in the current block.

In the embodiments of the present disclosure, the predicted value of the second color component of the pixels to be predicted includes a predicted value of at least a part of samples of the second color component in the current block. In other words, for a first prediction block formed according to the predicted value of the second color component of the pixels to be predicted, the first prediction block contains the predicted value of at least a part of samples of the second color component in the current block.

It should be noted that, in the embodiments of the present disclosure, if the first prediction block includes the predicted value of a part of samples of the second color component in the current block, it is necessary to perform the upsampling filtering on the first prediction block, to obtain a final second prediction block. Therefore, in some embodiments, the method may further include: performing an upsampling filtering processing on the first prediction block, to determine a second prediction block of the second color component of the current block.

It should also be noted that, in the embodiments of the present disclosure, if the number of prediction values of the second color component contained in the first prediction block is the same as the number of samples of the second color component contained in the current block, but the predicted value of the sample of the second color component of the current block is not contained, the predicted value needs to be enhanced by filtering, to obtain the final second prediction block. Therefore, in some embodiments, the method may further include: performing a filtering enhancement processing on the first prediction block, to determine the second prediction block of the second color component of the current block.

It should also be noted that, in the embodiments of the present disclosure, if the first prediction block includes the predicted value of all samples of the second color component in the current block, there is no need to perform any processing on the first prediction block, and the first prediction block may be directly used as the final second prediction block.

That is, the first prediction block may contain the predicted value of at least a part of samples of the second color component in the current block. Herein, if the first prediction block contains the predicted value of all samples of the second color component in the current block, the predicted value of the sample of the second color component in the current block may be set to be equal to the value of the first prediction block; if the first prediction block contains the predicted value of a part of samples of the second color components in the current block, the upsampling filtering may be performed on the value of the first prediction block, and the predicted value of the sample of the second color component in the current block is set to be equal to an output value after the upsampling filtering.

In this way, after the above operations, the second prediction block includes the predicted values of all samples of the second color component in the current block. In this way, predWcp output by the weight-based chroma prediction, under a certain condition, needs to be post-processed before it can be used as the final chroma predicted value predSamples; otherwise, the final chroma predicted value predSamples is predWcp.

In some embodiments, after determining the predicted value of the sample of the second color component in the current block, determining the reconstructed value of the sample of the second color component in the current block according to the predicted value of the sample of the second color component in the current block, may include:

determining a predicted residual of the sample of the second color component in the current block; determining the reconstructed value of the sample of the second color component in the current block according to the predicted residual of the sample of the second color component in the current block and the predicted value of the sample of the second color component in the current block.

In a specific embodiment, determining the predicted value of the sample of the second color component in the current block includes: performing an addition operation on the predicted residual of the sample of the second color component in the current block and the predicted value of the sample of the second color component in the current block, to determine the reconstructed value of the sample of the second color component in the current block.

It should also be noted that, in the embodiments of the present disclosure, determining the predicted residual of the sample of the second color component in the current block, may be: parsing a bitstream, to determine the predicted residual of the sample of the second color component in the current block.

In this way, taking the chroma component as an example, a chroma predicted residual of the current block is determined by parsing the bitstream; after determining a chroma predicted value of the current block, the addition operation may be performed on the chroma predicted value and the chroma predicted residual, to obtain a chroma reconstructed value of the current block.

It may be understood that the embodiments of the present disclosure optimizes the floating-point operation in the WCP prediction technology process and is implemented by using the integer operation. On the one hand, the content characteristics of the current block are fully utilized to adaptively select the optimal integer operation shifts; on the other hand, the accuracy of the WCP prediction technology is fully guaranteed; on the other hand, the characteristics of the weight model are fully considered and the integer operation process is reasonably designed; thereby reducing the calculation complexity of the WCP prediction technology, while ensuring a certain accuracy of the WCP prediction technology.

The present embodiments provide a decoding method, including determining a reference value of a first color component of a current block and a reference value of a second color component of the current block; determining a weighting coefficient according to the reference value of the first color component of the current block; determining a reference average value of the second color component of the current block according to the reference value of the second color component of the current block; and determining a reference sample value of the second color component of the current block according to the reference value of the second color component of the current block and the reference average value of the second color component of the current block; determining a predicted value of a sample of the second color component in the current block according to the reference average value of the second color component of the current block, the reference sample value of the second color component of the current block, and the weighting coefficient; and determining a reconstructed value of the sample of the second color component in the current block according to the predicted value of the sample of the second color component in the current block. In this way, based on the color component reference information in the neighboring region of the current block and color component reconstruction information within the current block, it is necessary not only to construct a luma difference vector, so as to determine the weighting coefficient; but also to determine the chroma average value according to the chroma reference information, and then determine the chroma difference vector according to the chroma reference information and the chroma average value, and further determine the chroma predicted value according to the chroma difference vector and the weighting coefficient, plus the chroma average value; in this way, by optimizing the calculation process of the weight-based chroma prediction, fully adopting the integer operation can be implemented, and characteristics of the weight model are fully considered, thereby reasonably optimizing the integer operation process; which may reduce the calculation complexity, improve the coding efficiency, and thus improve the coding performance, while fully ensuring the accuracy of the chroma prediction.

In another embodiment of the present disclosure, based on the decoding method described in the aforementioned embodiments, taking the chroma prediction of the current block as an example, when the chroma prediction is performed on the current block, the reconstruction luma information of the current block, the reference luma information and the reference chroma information of the neighboring region are all reference information that has been decoded. Therefore, the embodiments of the present disclosure propose a weight-based chroma prediction technology that utilizes the above information, and all operations in the implementation process of this technology use the integer operation. The technical solutions of the embodiments of the present disclosure mainly propose: using the integer operation instead of the floating-point operation. Here, detailed steps of the chroma prediction process of the WCP prediction technique are as follows:

inputs of the WCP mode: a location of the current block (xTbCmp, yTbCmp ), a width of the current block nTbW and a height of the current block nTbH.

Outputs of the WCP mode: a predicted value of the current block predSamples[x][y], where a top-left corner location within the current block is a coordinate origin, x=0, ..., nTbW-1, and y=0, ..., nTbH-1.

Herein, the prediction process of the WCP prediction technology may contain steps such as determining a WCP core parameter, acquiring input information, weight-based chroma prediction, and post-processing process, etc. After these steps, a chroma predicted value of the current block may be obtained.

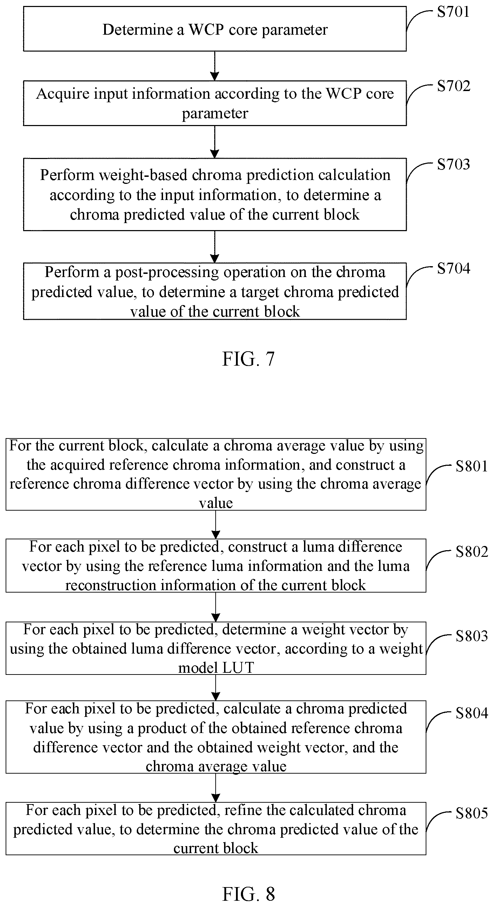

In a specific embodiment, referring to FIG. 7, FIG. 7 shows a schematic diagram of a flow chart of another decoding method provided by the embodiments of the present disclosure. As shown in FIG. 7, the method may include:
S701: determining a WCP core parameter.

It should be noted that, with respect to S701, the core parameter involved in WCP is determined, that is, the WCP core parameter may be acquired or inferred by a configuration or in a certain manner, for example, the WCP core parameter is acquired from a bitstream, at the decoder side.

Here, the WCP core parameter includes but is not limited to a control parameter (S), a number (inSize) of inputs of the weight-based chroma prediction, a number of outputs of the weight-based chroma prediction (arranged as predSizeW × predSizeH), a weight model LUT, and a maximum weight index value theMaxPos of the weight model LUT. Herein, the first prediction block output by the weight-based chroma prediction may be represented by predWcp, where the number of inputs of the weight-based chroma prediction may be set to the same value (such as predSizeW=predSizeH=S/4) or related to the size parameter of the current block (such as predSizeW=nTbW, predSizeH=nTbH). Herein, the control parameter (S) may be used to adjust the nonlinear function in the subsequent steps or to adjust data involved in the subsequent steps. Here, the weight model LUT may be predefined or calculated in real time according to different WCP control parameters (S); the maximum weight index value theMaxPos of the weight model LUT may be adjusted according to different weight model LUTs, or may be fixed.

The determination of the WCP core parameter is affected by the block size, the block content or the number of pixels within the block, under a certain condition. For example:

the current block may be classified according to its block size, block content or the number of pixels within the block, and the same or different core parameter may be determined according to different types. That is, the control parameters (S) or the number inSize of inputs of the weight-based chroma prediction or the number of outputs of the weight-based chroma prediction (arranged as predSizeW × predSizeH) corresponding to different types may be the same or different. Note that, predSizeW and the height predSizeH may also be the same or different.

If in the application of WCP, there are many types of block sizes or the differences between block sizes are large or the block contents are very different or the number of pixels within the block is very different, the current block may be classified according to its block size or block content or the number of pixels within the block, and the same or different core parameter may be determined according to different types. That is, the control parameter (S) or the number inSize of inputs of the weight-based chroma prediction or the number of outputs of the weight-based chroma prediction (arranged as predSizeW × predSizeH) corresponding to different types may be the same or different. Note that, predSizeW and the height predSizeH may also be the same or different.

To better explain the determination of the core parameter, two simple classifications are taken as an example for explaination.

Classification example 1: WCP may classify the current block according to the width and height of the current block, and use wcpSizeId to represent the type of the block, which may also be referred to as the block type index value. For different types of blocks, the control parameter (S), the number inSize of inputs of the weight-based chroma prediction, and the number of outputs of the weight-based chroma prediction (arranged as predSizeW × predSizeH) may be the same or different. Here, classifying into three types is taken as an example for explanation.

The current block is classified into three types according to the width and height of the current block. The control parameter (S) of different types may be set to be different, and inSize and the number of outputs of the weight-based chroma prediction (arranged as predSizeW × predSizeH) of different types may be set to the same. nTbW is the width of the current block, nTbH is the height of the current block, and the type wcpSizeId of the block is defined as follows:

wcpSizeId=0: represents the current block with min(nTbW, nTbH)<=4. Herein, the control parameter (S) is 8, inSize is $(2 \times nTbH+2 \times nTbW)$, and the weight-based chroma prediction outputs $nTbH \times nTbW$ chroma predicted values;
wcpSizeId=1: represents the current block with 4<min(nTbW, nTbH)<=16. Herein, the control parameter (S) is 12, inSize is $(2 \times nTbH+2 \times nTbW)$, and the weight-based chroma prediction outputs $nTbH \times nTbW$ chroma predicted values;
wcpSizeId= 2: represents the current block with min(nTbW, nTbH)>16. Herein, the control parameter (S) is 16, inSize is $(2 \times nTbH+2 \times nTbW)$, and the weight-based chroma prediction outputs $nTbH \times nTbW$ chroma predicted values;
the quantitative relationship of the above WCP core parameter is represented in the form of a table, as shown in Table 10.

Table 10

| wcpSizeId | S | inSize | predSizeH | predSizeW |
|---|---|---|---|---|
| 0 | 8 | 2×nTbH+2×nTbW | nTbH | nTbW |
| 1 | 12 | 2×nTbH+2×nTbW | nTbH | nTbW |
| 2 | 16 | 2×nTbH+2×nTbW | nTbH | nTbW |

Dividing into 3 types may also be explained by taking another example.

The current block is divided into three types according to the width and the height of the current block. The control parameter (S) of different types may be set to be different, and inSize and the number of outputs of the weight-based chroma prediction (arranged as predSizeW × predSizeH) of different types may be set to the same. nTbW is the width of the current block, nTbH is the height of the current block, and the type wcpSizeId of the block is defined as follows:
wcpSizeId=0: represents the current block with min(nTbW, nTbH)<=4. Herein, the control parameter (S) is 8, inSize is $(2 \times nTbH+2 \times nTbW)$, and the weight-based chroma prediction outputs $nTbH \times nTbW$ chroma predicted values;
wcpSizeId=1: represents the current block with 4<min(nTbW, nTbH)<=16. Herein, the control parameter (S) is 12, inSize is $(1.5 \times nTbH+1.5 \times nTbW)$, and the weight-based chroma prediction outputs $nTbH/2 \times nTbW/2$ chroma predicted values;
wcpSizeId=2: represents the current block with min(nTbW, nTbH)>16. Herein, the control parameter (S) of WCP is 16, inSize is $(nTbH+nTbW)$, and the weight-based chroma prediction outputs $nTbH/4 \times nTbW/4$ chroma predicted values;
the quantitative relationship of the above core parameter is represented in the form of a table, as shown in Table 11.

Table 11

| wcpSizeId | S | inSize | predSizeH | predSizeW |
|---|---|---|---|---|
| 0 | 8 | 2×nTbH+2×nTbW | nTbH | nTbW |
| 1 | 12 | 1.5×nTbH+1.5×nTbW | nTbH/2 | nTbW/2 |
| 2 | 16 | nTbH+nTbW | nTbH/4 | nTbW/4 |

Classification example 2: the WCP mode may also classify the current block according to the number of pixels of the current block, and use wcpSizeId to represent the type of the block. For different types of blocks, the control parameter (S), the number inSize of inputs of the weight-based chroma prediction, and the number of outputs of the weight-based chroma prediction (arranged as predSizeW × predSizeH) may be the same or different. Here, classifying into three types is taken as an example for explanation.

The current block is classified into three types according to the number of pixels of the current block. The control parameter (S) of different types may be set to be different, and inSize and the number of outputs of the weight-based chroma prediction (arranged as predSizeW × predSizeH) of different types may be set to the same. nTbW is the width of the current block, nTbH is the height of the current block, and nTbW×nTbH represents the number of pixels of the current block. The type wcpSizeId of the block is defined as follows:
wcpSizeId=0: represents the current block with (nTbW×nTbH)<128. Herein, the control parameter (S) is 10, inSize is (2×nTbH+2×nTbW), and the weight-based chroma prediction outputs nTbH×nTbW chroma predicted values;
wcpSizeId=1: represents the current block with 128<=(nTbW×nTbH)<=256. Herein, the control parameter (S) is 8, inSize is (2×nTbH+2×nTbW), and the weight-based chroma prediction outputs nTbH×nTbW chroma predicted values;
wcpSizeId= 2: represents the current block with (nTbW×nTbH) > 256. Herein, the control parameter (S) is 1, inSize is (2×nTbH+2×nTbW), and the weight-based chroma prediction outputs nTbH×nTbW chroma predicted values;
the quantitative relationship of the above core parameter is represented in the form of a table, as shown in Table 12.

Table 12

| wcpSizeId | S | inSize | predSizeH | predSizeW |
|---|---|---|---|---|
| **0** | 10 | 2×nTbH+2×nTbW | nTbH | nTbW |
| **1** | 8 | 2×nTbH+2×nTbW | nTbH | nTbW |
| **2** | 1 | 2×nTbH+2×nTbW | nTbH | nTbW |

Dividing into 3 types may also be explained by taking another example.

The current block is divided into three types according to the number of pixels of the current block. The control parameter (S) of different types may be set to be different, and inSize and the number of outputs of the weight-based chroma prediction (arranged as predSizeW × predSizeH) of different types may be set to the same. nTbW is the width of the current block, nTbH is the height of the current block, and the type wcpSizeId of the block is defined as follows: wcpSizeId=0: represents the current block with (nTbW×nTbH)< 64. Herein, the control parameter (S) is 16, inSize is (2×nTbH+2×nTbW), and the weight-based chroma prediction outputs nTbH×nTbW chroma predicted values; wcpSizeId=1: represents the current block with 64<=(nTbW×nTbH)<=512. Herein, the control parameter (S) is 4, inSize is (1.5×nTbH+1.5×nTbW), and the weight-based chroma prediction outputs nTbH/2×nTbW/2 chroma predicted values; wcpSizeId= 2: represents the current block with (nTbW×nTbH)>512. Herein, the control parameter (S) is 1, inSize is (nTbH+nTbW), and the weight-based chroma prediction outputs nTbH/4×nTbW/4 chroma predicted values; the quantitative relationship of the above core parameter is represented in the form of a table, as shown in Table 13.

Table 13

| wcpSizeId | S | inSize | predSizeH | predSizeW |
|---|---|---|---|---|
| **0** | 16 | 2×nTbH+2×nTbW | nTbH | nTbW |
| **1** | 4 | 1.5×nTbH+1.5×nTbW | nTbH/2 | nTbW/2 |
| **2** | 1 | nTbH+nTbW | nTbH/4 | nTbW/4 |

It should also be noted that, for Table 11 and Table 13, predSizeW×predSizeH is calculated by the weight-based chroma prediction; however, when wcpSizeId=1, only a part of the chroma predicted values, that is, nTbH/2×nTbW/2, are calculated according to WCP; when wcpSizeId=2, only a part of the chroma predicted values, that is, nTbH/4×nTbW/4, are calculated according to WCP; then the remaining part of the chroma predicted values are obtained by performing the filtering processing on the chroma predicted values calculated according to WCP, and the filtering processing here may be in an interpolation filtering manner, an upsampling filtering manner, etc., which is not limited thereto.

S702: acquiring input information according to the WCP core parameter.

It should be noted that, for S702, the input information may include reference chroma information (refC), reference luma information (refY) and reconstruction luma information (recY). Herein, for the acquisition of the input information, when predicting the current block, the top region, the top-left region and the left region of the current block are used as neighboring regions (also referred to as "reference regions") of the current block, as shown in the above FIG. 6, and the pixels in the neighboring regions are all reconstructed reference pixels.

It should also be noted that, the reference chroma information refC and the reference luma information refY are acquired from the neighboring region. Acquiring the reference chroma information includes but is not limited to: selecting a reference chroma reconstructed value of the top region of the current block, and/or a reference chroma reconstructed value of the left region of the current block. Acquiring the reference luma information includes but is not limited to: acquiring the corresponding reference luma information according to the reference chroma information location.

Acquiring the reconstructed luma information recY of the current block includes but is not limited to: acquiring the corresponding reconstructed luma information as the reconstructed luma information of the current block, according to the chroma information location within the current block.

Acquiring the input information includes acquiring inSize number of the reference chroma information refC (if the pre-processing is required, it is the pre-processed reference chroma information), acquiring inSize number of the reference luma information refY (if the pre-processing is required, it is the pre-processed reference luma information), and acquiring the luma reconstruction information recY (if pre-processing is required, it is the pre-processed luma reconstruction information) of the current prediction block.

S703: performing weight-based chroma prediction calculation according to the input information, to determine a chroma predicted value of the current block.

It should be noted that with respect to S703, chroma predicted values $C^{pred}[i][j]$, i=0... predSizeW-1, $J$=0...predSizeH-1 within the size specified by the WCP core parameter are acquired one by one. Note that, predSizeH and predSizeW are the determined WCP core parameter and may be the same as or different from the height nTbH or the width nTbW of the chroma block currently to be predicted. In this way, under a certain condition, the following calculation may be performed only on a part of the pixels to be predicted within the current block.

The chroma prediction calculation of WCP includes the following operation: pre-processing the reference chroma information, acquiring the weight vector, and performing the weighting prediction according to the weight vector, to obtain the weight-based chroma predicted value, and then refining the weight-based chroma predicted value. Herein, the pre-processing process of the reference information includes calculating an average value and constructing the reference chroma difference vector; and the acquisition procedure of the weight vector includes constructing the luma difference vector and calculating the weight vector.

The detailed calculation process is as follows:

calculating the average value avgC of the reference chroma information,
for k=0, 1... inSize-1,
constructing the reference chroma difference vector diffC
for i=0...predSizeW-1,j=0...predSizeH-1,
for k=0,1... inSize-1,
constructing respective elements diffY [i][j][k] in the luma difference vector,
calculating respective elements cWeightInt[i][j][k] in the weight vector, and then calculating the chroma predicted value $C^{pred}$[i][j] by cWeightInt[i][j], diffC, and avgC.

In a specific embodiment, referring to FIG. 8, FIG. 8 shows a schematic diagram of a flow chart of yet another decoding method, provided by the embodiments of the present disclosure. As shown in FIG. 8, the method may include the following steps.

S801: for the current block, calculating a chroma average value by using the acquired reference chroma information, and constructing a reference chroma difference vector by using the chroma average value.

It should be noted that, with respect to S801, it is mainly for the pre-processing of the reference chroma information. Herein, the average value avgC of inSize number of the reference chroma information refC is calculated, and the reference chroma difference vectors diffC are obtained by subtracting the average value avgC from the inSize number of the reference chroma information refC.

$$avgC = \frac{\sum_{k=0}^{inSize-1} refC[k]}{inSize} \qquad (26);$$

$$di \quad fC[k] = refC[k] - avgC \qquad (27).$$

S802: for each pixel to be predicted, constructing a luma difference vector by using the reference luma information and the luma reconstruction information of the current block.

It should be noted that, with respect to S802, it is mainly for the constructing of the luma difference vector. Herein, for each pixel to be predicted $C^{pred}$[i] [j] within the size specified by the WCP core parameter, the luma difference vector $diffY[i][j]$ is obtained by subtracting the corresponding luma reconstruction information recY[i][j] from inSize number of reference luma information refY and taking an absolute value of the subtracted result.

$$diffY[i][j][k] = Abs(refY[k] - recY[i][j]) \qquad (28).$$

Under a certain condition, the luma difference vector of the pixel to be predicted may be processed linearly or nonlinearly. For example, the value of the luma difference vector of the pixel to be predicted may be scaled according to the WCP control parameter S in the WCP core parameter.

S803: for each pixel to be predicted, determining a weight vector by using the obtained luma difference vector, according to a weight model LUT.

It should be noted that, with respect to S803, it is mainly for the calculating of the weight vector. Herein, by using a non-linear weight model LUT to process the luma difference vector $diffY[i][j]$ corresponding to each pixel to be predicted $C^{pred}$[i][j], the corresponding integer weight vector cWeightInt[i][j] may be obtained.

Exemplarily, in a possible implementation, a nonlinear Softmax function may be used as the weight model. At this time, the method for acquiring the weight model LUT includes but is not limited to the following method:

$$theMaxPos = 1 \ll BitDepth - 1 \tag{29}.$$

Here, the value of theMaxPos includes but is not limited to being calculated according to the formula (29), and it may be a parameter determined in the WCP core parameter.

For *n=0,1...theMaxPos*

$$LUT[n] = Round\left(e^{-n} \times ModelScale\right) \tag{30}.$$

Here, the value of ModelScale includes but is not limited to a parameter determined by the WCP core parameter, and it represents magnification times of the weight coefficient and is a preset constant.

For *k=0,1...* inSize-1

$$index = Clip3\left(0, theMaxPos, diffY[i][j][k]\right) \tag{31},$$

$$cWeightInt[i][j][k] = LUT[index] \tag{32}.$$

Exemplarily, in another possible implementation, under a certain condition, the weight model may also be adjusted according to the WCP control parameter (S) in the core parameter.

If the size of the current block is flexible, the weight model LUT may be adjusted according to the WCP control parameter (S). Taking the nonlinear Softmax function as an example, different control parameters may be selected to adjust the function, according to the different block types to which the current block belongs. At this time, the method for acquiring the weight model LUT includes but is not limited to the following method.

Herein, the value of theMaxPos includes but is not limited to being calculated according to the formula (29), and it may be a parameter determined in the WCP core parameter, and may be assigned different values with different WCP control parameters, that is, theMaxPos[S].

For *n=0,1...theMaxPos*

$$LUT[S][n] = Round\left(e^{\frac{-n}{S}} \times ModelScale\right) \tag{33}.$$

Here, the value of ModelScale includes but is not limited to a parameter determined by the WCP core parameter, and it represents magnification times of the weight coefficient.

For *k=0,1...* inSize-1

$$index = Clip3\left(0, theMaxPos, f(S, diffY[i][j][k])\right) \tag{34},$$

$$cWeightInt[i][j][k] = LUT[S][index] \tag{35}.$$

Herein, *f( )* refers to a function of the WCP control parameter S and the luma difference *diffY[i][j][k]*, and its output is the weight index value of the LUT. Here, *f( )* includes but is not limited to the implementation of the following example:

$$f(S, diffY[i][j][k]) = diffY[i][j][k] \tag{36}.$$

Herein,

$$Clip3(x, y, z) = \begin{cases} x\,; z < x \\ y\,; z > y \\ z\,; otherwise \end{cases} \tag{37},$$

$$\text{Abs( x )} = \left\{ \begin{array}{lll} \mathbf{x} & ; & \mathbf{x} >= \mathbf{0} \\ -\mathbf{x} & : & \mathbf{x} < \mathbf{0} \end{array} \right. \tag{38},$$

*Floor( x )* represents a largest integer less than or equal to *x*;
*Log2( x )* represents a logarithm with a base 2;

$$Sign(x) = \left\{ \begin{array}{lll} \boldsymbol{1} & ; & \boldsymbol{x > 0} \\ \boldsymbol{0} & ; & \boldsymbol{x == 0} \\ -\boldsymbol{1} & ; & \boldsymbol{x < 0} \end{array} \right. \tag{39},$$

$$Round(x) = Sign(x) \times Floor(Abs(x) + 0.5) \tag{40}.$$

S804: for each pixel to be predicted, calculating a chroma predicted value by using a product of the obtained reference chroma difference vector and the obtained weight vector, and the chroma average value.

It should be noted that, with respect to S804, it is mainly for the calculating of the chroma predicted value. Herein, the chroma predicted value of the pixel to be predicted is calculated according to the integer weight vector cWeightInt[i][j] corresponding to each pixel to be predicted, the reference chroma difference vector diffC, and the average value of the reference chroma information. Specifically, the reference chroma difference vector diffC is multiplied with the weight vector element corresponding to each pixel to be predicted one by one, to obtain subC[i][j], and the multiplied result is accumulated and the accumulated result is divided by the sum of the integer weight vector cWeightInt[i][j] corresponding to each pixel to be predicted, and then the average value of the reference chroma information is added, to obtain the chroma predicted value $C^{pred}$[i][j] of each pixel to be predicted. Here, the division operation involved in the embodiments of the present disclosure uses the right shift operation, and the specific process is as follows:

for *k=0,1... inSize-1*,

$$subC[i][j][k] = (cWeightInt[i][j][k] \times diffC[k]) \tag{41},$$

for *i=0...predSizeW-1, j=0...predSizeH-1*,

$$C^{pred}[i][j] = avgC + \left( \left( \sum_{k=0}^{inSize-1} subC[i][j][k] \right) \times v + add \right) \gg (y + Shift) \tag{42},$$

where

$$x = Floor \left( Log2 \left( \sum_{k=0}^{inSize-1} cWeightInt[i][j][k] \right) \right) \tag{43},$$

$$v = DivSigTable[normDiff] \mid (1 \ll Shift) \tag{44},$$

$$normDiff = Func \left( \sum_{k=0}^{inSize-1} cWeightInt[i][j][k], x \right) \tag{45},$$

$$y = \left\{ \begin{array}{l} x \quad , if\ normDiff == 0 \\ x + 1, if\ normDiff! = 0 \end{array} \right. \tag{46},$$

$$add = 1 \ll y \ll (Shift - 1) \tag{47}.$$

Here, the method for acquiring *Shift* includes but is not limited to a parameter determined by the WCP determination parameter. In the decoding specification text, the value of *Shift* may be assigned to 5.

In addition, the calculation formula for *x* corresponds to *x*=Floor(Log2(sum)) in the decoding specification text.

In addition, the calculation formula for v corresponds to divSigTable[normDiff]|32 when *Shift* = 5 in the decoding specification text.

The calculation formula for normDiff corresponds to normDiff=((sum<<5)>>x)&31 when *Shift* = 5 in the decoding specification text.

The calculation formula for y corresponds to x+=(normDiff!=0)?1:0 in the decoding specification text.

The calculation formula for *add* corresponds to, add=1<<x<<4 when *Shift* = 5 in the decoding specification text.

It should also be noted that, in the embodiments of the present disclosure, DivSigTable is a predefined array related to Shift, and DivSigTable corresponds to divSigTable[]={0,15,14,13,12,12,11,10,10,9,8,8,7,7,6,6,5,5,4,4,4,3, 3,3,2,2,2,1,1,1,1,0} in the decoding specification text.

It should also be noted that, in the embodiments of the present disclosure, Func() is a function related to Shift, the input is the sum of weight vectors and the calculated *x*, and the output is the array index value of DivSigTable[]. Exemplarily, a specific form of Func() may be represented as:

$$\text{Func}\left(\sum_{k=0}^{\text{inSize}-1} \text{cWeightInt}[i][j][k], x\right) =$$
$$\left(\sum_{k=0}^{\text{inSize}-1} \text{cWeightInt}[i][j][k] \ll (\text{Shift} + 1) \gg x\right) \& (1 \ll (\text{Shift} + 1) - 1) \tag{48}.$$

Herein, the formula (48) corresponds to nonnDiff=((sum<<5)>>x)&31 when *Shift* = 5 in the decoding specification text.

S805: for each pixel to be predicted, refining the calculated chroma predicted value, to determine the chroma predicted value of the current block.

It should be noted that, with respect to S805, it is mainly for the refining operation of the chroma predicted value in the first prediction block predWcp. Herein, the chroma predicted value in predWcp should be limited within a preset range, and if it exceeds the preset range, the corresponding refining operation needs to be performed. For example: a clamping operation may be performed on the chroma predicted value of $C^{\text{pred}}[i][j]$, specifically as follows:

● when the value of $C^{\text{pred}}[i][j]$ is less than 0, it is set to 0;
● when the value of $C^{\text{pred}}[i][j]$ is greater than (1<<BitDepth) - 1, it is set to (1<<BitDepth) -1.

Herein, BitDepth is the bit depth required for the chroma pixel value, to ensure that all chroma predicted values in predWcp are between 0 and (1<<BitDepth) - 1. That is, it is shown in the following formula:

$$C^{\text{pred}}[i][j] = \text{Clip3}\left(0, (1 \ll \text{BitDepth}) - 1, C^{\text{pred}}[i][j]\right) \tag{49}.$$

S704: performing a post-processing operation on the chroma predicted value, to determine a target chroma predicted value of the current block.

It should be noted that, with respect to S704, under a certain condition, the weight-based chroma prediction output predWcp needs to be post-processed as the final target chroma predicted value predSamples, otherwise, the final target chroma predicted value predSamples is predWcp.

Exemplarily, in order to reduce the instability caused by the independent parallel prediction of WCP by pixel by pixel, smoothed filtering may be performed on predWcp, to obtain the final chroma predicted value predSamples. Alternatively, in order to further improve the accuracy of the predicted value of WCP, the location-related refining process may be performed on predWcp. For example, a chroma compensation value is calculated for each pixel to be predicted by using a reference pixel that is close in the spatial location, predWcp is refined by using the chroma compensation value, and the refined prediction value is used as the final chroma predicted value predSamples. Alternatively, in order to further improve the accuracy of the predicted value of WCP, the weight fusion may be performed on the chroma predicted value calculated by other chroma prediction modes and the chroma predicted value predWcp calculated by WCP, and the fusion result may be used as the final chroma predicted value predSamples. For example, the chroma predicted value predicted by the CCLM mode and the chroma predicted value predWcp calculated by WCP may be weighted with equal weights or unequal weights, and the weighted result is used as the final chroma predicted value predSamples. Alternatively, in order to improve the WCP prediction performance, a neural network model may be used to refine the predicted output predWcp of WCP, etc., which is not limited in the embodiments of the present disclosure.

It may be understood that, in the embodiments of the present disclosure, for the acquisition of the weight vector, the derivation of the weight model LUT having the WCP control parameter (S) and the derivation of the index, still occupy a large storage space. Therefore, the embodiments of the present disclosure may also modify the weight model LUT having the WCP control parameter (S), while the others remain unchanged. The specific steps are as follows.

Under a certain condition, the weight model LUT may be adjusted according to the WCP control parameter (S) in the WCP core parameter. Exemplarily, if the size of the current block is flexible, the weight model may be adjusted according to the WCP control parameter (S). Taking the nonlinear Softmax function as an example, different control parameters may be selected to adjust the function according to the different block types to which the current prediction block belongs. At this time, the method for acquiring the weight model LUT includes but is not limited to the following method:

$$\text{theMaxPos} = 1 \ll \text{BitDepth} - 1 \tag{50}.$$

Here, the value of theMaxPos includes but is not limited to being calculated according to the formula (50), and it may be a parameter determined in the WCP core parameter, and may be assigned different values with different WCP control parameters (S), that is, theMaxPos[S].

For n=0,1...theMaxPos,

$$\text{LUT}[S][n] = \text{Round}\left(e^{\frac{n}{s}} \times \text{ModelScale}\right) \tag{51}.$$

Here, the value of ModelScale includes but is not limited to a parameter determined by the WCP core parameter, and it represents magnification times of the weight coefficient.

Since different WCP control parameters (S) use their respective LUT[S], only a few basic LUTs may be stored here. For example, when S={2, 4, 8}, only the LUT when S=2 is stored. In this case, the code is as follows:
for k=0,1... inSize-1

$$\text{index} = \text{Clip3}\left(0, \text{theMaxPos}, f(S, \text{diffY}[i][j][k])\right) \tag{52},$$

$$\text{cWeightInt}[i][j][k] = \text{LUT}[\text{index}] \tag{53}.$$

Herein, f() refers to a function of the WCP control parameter (S) and the luma difference vector *diffY[i][j][k]*, and its output is the weight index value of the LUT. Here, f() includes but is not limited to the implementation of the following example:

$$f(S, \text{diffY}[i][j][k]) = \text{diffY}[i][j][k] \gg \text{LUTshift}[S] \tag{54}.$$

Herein, the definition of the array LUTshift in the formula (54) is as follows:

$$\begin{cases} \text{LUTshift}[2] = 0 \\ \text{LUTshift}[4] = 1 \\ \text{LUTshift}[8] = 2 \end{cases} \tag{55}.$$

For example, when S={8,12,16}, only the LUT when S=12 is stored. In this case, the code is as follows:for = inSize-1

$$\text{index} = \text{Clip3}\left(0, \text{theMaxPos}, f(S, \text{diffY}[i][j][k])\right) \tag{56},$$

$$\text{cWeightInt}[i][j][k] = \text{LUT}[\text{index}] \tag{57}.$$

Herein, f() refers to a function of the WCP control parameter (S) and the luma difference vector *diffY[i][j][k]*, and its output is the weight index value of the LUT. Here, f() includes but is not limited to the implementation of the following example:

$$f(S, \text{diffY}[i][j][k]) = \text{diffY}[i][j][k] + (\text{wcpSizeId}\&1) \times (\text{diffY}[i][j][k] \gg 1) - (\text{wcpSizeId}\&2) \times (\text{diffY}[i][j][k] \gg 2) + \text{indexOffset} \tag{58}.$$

It should also be noted that, the formula (58) corresponds to ( baseDiffL + ( blockIndex & 1 ) * ( baseDiffL >> 1 ) - ( blockIndex & 2 ) * ( baseDiffL >> 2 ) + indexOffset[cnt] ) in the decoding specification text.

The wcpSizeId in the formula (58) is a variable in determining the WCP core parameter. In addition, the calculation of indexOffset is as follows:

$$\text{indexOffset} = \big((\text{wcpSizeId\&1}) - (\text{wcpSizeId\&2})\big) \times (\text{diffY[i][j][k]\&1}) \qquad (59).$$

It should also be noted that, the formula (59) corresponds to indexOffset[cnt] = ( ( blockIndex & 1 ) - ( blockIndex & 2 ) ) * ( baseDiffY[cnt] & 1 ) in the decoding specification text.

In yet another specific embodiment, based on the decoding method described in the aforementioned embodiments, a specific description of a decoding specification text provided by the embodiments of the present disclosure is as follows.

(1) For the specified description of the INTRA_WCP intra prediction mode.

The input of the process includes:

- an identifier predModeIntra of the intra prediction mode,
- a top-left sample location (xTbC, yTbC) of the current transform block relative to the top-left sample location of the current picture,
- a variable nTbW representing the width of the transform block,
- a variable nTbH representing the height of the transform block,
- a variable cIdx representing the color component of the current block,
- a neighboring chroma sample p[x][y], x=- 1, y=- 1...2*nTbH- 1, and x=0...2*nTbW- 1, y=-1.

The output of the process is the predicted sample predSamples[x][y], x=0...nTbW- 1, y=0...nTbH - 1.

The luma location (xTbY, yTbY) corresponding to the current block is derived as follows:

(xTbY, yTbY) = ( xTbC<< ( SubWidthC- 1) , yTbC<<(SubHeightC- 1))

The variables availL and availT are derived as follows:

- when invoking the derivation process of neighboring block availability specified in the section (2), the luma location (xCurr, yCurr) of the current block is set to be equal to (xTbY, yTbY), and the neighboring luma location is (xTbY-1, yTbY), checkPredModeY is set to FALSE, cIdx is used as the input, and the output is assigned to availL.
- when invoking the derivation process of neighboring block availability specified in the section (2), the luma location (xCurr, yCurr) of the current block is set to be equal to (xTbY, yTbY), and the neighboring luma location is (xTbY, yTbY-1), checkPredModeY is set to FALSE, cIdx is used as the input, and the output is assigned to availT.

The number of available top-right neighboring chroma samples, numTopRight, is as follows:

- the variable numTopRight is set to 0, and availTR is set to TRUE.
- when predModeIntra is equal to INTRA_WCP, the following is applied to x=nTbW...2*nTbW- 1, until availTR is equal to FALSE:

    - when invoking the derivation process of neighboring block availability specified in the section (2), the current luma location (xCurr, yCurr) is set to be equal to (xTbY, yTbY), and the neighboring luma location is (xTbY+x*SubWidthC, yTbY- 1), checkPredModeY is set to FALSE, cIdx is used as the input, and the output is assigned to availTR.
    - when availTR is equal to TRUE, numTopRight is increased by 1.

The number of available lower-left neighboring chroma samples, numleftbellow, is as follows:

- the variable numleftbellow is set to 0, and availLB is set to TRUE.
- when predModeIntra is equal to INTRA_WCP, the following is applied to y=nTbH...2*nTbH-1, until availB is equal to FALSE:

    - when invoking the derivation process of neighboring block availability specified in the section (2), the current luma location (xCurr, yCurr) is set to be equal to (xTbY, yTbY), and the neighboring luma location is (xTbY- 1, yTbY+y*SubweightC), checkPredModeY is set to FALSE, cIdx is used as the input, and the output is assigned to AvailLB.

- When availLB is equal to TRUE, numLeftBelow will be increased by 1.

The number of available neighboring chroma samples of the top and teh top-right, numSampT, and the number of available neighboring chroma samples of the left and the lower-left are derived as follows.

- if predModeIntra is equal to INTRA_WCP, the following is applied:

$$numSampT=availT?(nTbW+numTopRight):0,$$

$$numSampL=availL?(nTbH+numLeftBelow):0.$$

The number of all available neighboring chroma samples numSamp and the variable enableWcp are derived as follows.

- if predModeIntra is equal to INTRA_WCP, the following is appliedthe following is applied:

$$numSamp=numSampT+numSampL,$$

$$enableWcp=numSamp?true:false.$$

The prediction sample predSamples[x][y] with x=0...nTbW- 1 and y=0...nTbH- 1 is derived as follows:

- if enableWcp is equal to FALSE, the following is applied:

$$predSamples[x][y]=1<<(BitDepth- 1),$$

- otherwise, the following steps are performed in sequence.

1. The luma sample pY[x][y] with x=0...nTbW*SubWidthC- 1 and y=0...nTbH*SubHeightC- 1 is set to be equal to the reconstructed luma sample before the decoding filtering at the location (xTbY+x, yTbY+y).
2. The neighboring luma sample pY[x][y] is derived as follows.

- When availL is equal to TRUE, the neighboring luma sample pY[x][y] with x=- 3...- 1 and y=(availT?- 1:0)... SubHeightC* Max(nTbH, numSampL)- 1, is set as the reconstructed luma sample before the decoding filtering at the location (xTbY+x, yTbY+y).
- When availT is equal to FALSE, the neighboring luma sample pY[x][y] with x=- 2..SubWidthC*nTbW- 1 and y=- 2..- 1, is set to be equal to the reconstructed luma sample pY[x][0].
- When availT is equal to TRUE, the neighboring luma sample pY[x][y] with x=(availL?- 1:0)... SubWidthC*- Max(nTbW, numSampT)- 1 and y=- 3...- 1, is set as the reconstructed luma sample before the decoding filtering at the location (xTb Y+x, yTbY+y).
- When avillL is equal to FALSE, the neighboring luma sample pY[x][y] with x=- 1 and y= 2..SubHeightC*nTbH- 1, is set to be equal to the reconstructed luma sample pY[0][y].

3. The downsampled collocated luma sample pDsY[x][y] with x=0..nTbW- 1 and y=0..nTbH- 1, is derived as follows.

- If SubWidthC and SubHeightC are both equal to 1, the following is applied:

$$pDsY[x][y]=pY[x][y].$$

- Otherwise, if SubHeightC is equal to 1, the following is applied:

$$pDsY[x][y]=(pY[SubWidthC*x-1][y]+$$
$$2*pY[SubWidthC*x][y]+$$
$$pY[SubWidthC*x+1][y]+2)>>2.$$

- Otherwise (SubHeightC is not equal to 1), the following is applied:
- if sps_chroma_vertical_collocated_flag is equal to 1, the following is applied:

$$pDsY[x][y]=(pY[SubWidthC*x][SubHeightC*y-1]+$$
$$pY[SubWidthC*x-1][SubHeightC*y]+$$
$$4*pY[SubWidthC*x][SubHeightC*y]+$$
$$pY[SubWidthC*x+1][SubHeightC*y]+$$
$$pY[SubWidthC*x][SubHeightC*y+1]+4)>>3.$$

- otherwise (sps_chroma_vertical_collocated_flag is equal to 0), the following is applied:

$$pDsY[x][y]=(pY[SubWidthC*x-1][SubHeightC*y]+$$
$$pY[SubWidthC*x-1][SubHeightC*y+1]+$$
$$2*pY[SubWidthC*x][SubHeightC*y]+$$
$$2*pY[SubWidthC*x][SubHeightC*y+1]+$$
$$pY[SubWidthC*x+1][SubHeightC*y]+$$
$$pY[SubWidthC*x+1][SubHeightC*y+1]+4)>>3.$$

4. When numSampT is greater than 0, the neighboring top chroma sample refC[idx] is set to be equal to p[idx][- 1], where idx=0... numSampT- 1, and the downsampled neighboring top luma sample refY[idx] with idx=0... numSampT-1 is specified as follows:

If SubWidthC and SubHeightC are both equal to 1, the following is applied:

$$refY[idx]=pY[idx][-1].$$

otherwise, the following is applied:
if SubHeightC is not equal to 1 and bCTUboundary is equal to FALSE, the following is applied:
if sps_chroma_vertical_collocated_flag is equal to 1, the following is applied:

$$refY[idx]=(pY[SubWidthC*x][-3]+$$
$$pY[SubWidthC*x-1][-2]+$$
$$4*pY[SubWidthC*x][-2]+$$
$$pY[SubWidthC*x+1][-2]+$$
$$pY[SubWidthC*x][-1]+4)>>3,$$

otherwise (sps_chroma_vertical_collocated_flag is equal to 0), the following is applied:

$$refY[idx]=(pY[SubWidthC*x-1][-1]+$$
$$pY[SubWidthC*x-1][-2]+$$
$$2*pY[SubWidthC*x][-1]+$$
$$2*pY[SubWidthC*x][-2]+$$
$$pY[SubWidthC*x+1][-1]+$$
$$pY[SubWidthC*x+1][-2]+4)>>3,$$

otherwise (SubHeightC is equal to 1 or bCTUboundary is equal to TRUE), the following is applied:

$$refY[idx]=(pY[SubWidthC*x-1][-1]+$$

$$2*pY[SubWidthC*x][-1]+$$
$$pY[SubWidthC*x+1][-1]+2)>>2.$$

5. When numSampL is greater than 0, the neighboring left chroma sample refC[idx] is set to be equal to p[- 1][idx-numSampT], where idx=numSampT...numSamp- 1, and the downsampled neighboring left luma sample refY[idx], where idx=numSampT...numSamp- 1 is derived as follows:

if SubWidthC and SubHeightC are both equal to 1, the following is applied:

$$refY[idx]=pY[-1][y],$$

otherwise, if SubHeightC is equal to 1, the following is applied:

$$refY[idx]=(pY[-1-SubWidthC][y]+$$
$$2*pY[-SubWidthC][y]+$$
$$pY[1-SubWidthC][y]+2)>>2,$$

otherwise, the following is applied:

if sps_chroma_vertical_collocated_flag is equal to 1, the following is applied:

$$refY[idx]=(pY[-SubWidthC][SubHeightC*y-1]+$$
$$pY[-1-SubWidthC][SubHeightC*y]+$$
$$4*pY[-SubWidthC][SubHeightC*y]+$$
$$pY[1-SubWidthC][SubHeightC*y]+$$
$$pY[-SubWidthC][SubHeightC*y+1]+4)>>3,$$

otherwise (sps_chroma_vertical_collocated_flag is equal to 0), the following is applied:

$$refY[idx]=(pY[-1-SubWidthC][SubHeightC*y]+$$
$$pY[-1-SubWidthC][SubHeightC*y+1]+$$
$$2*pY[-SubWidthC][SubHeightC*y]+$$
$$2*pY[-SubWidthC][SubHeightC*y+1]+$$
$$pY[1-SubWidthC][SubHeightC*y]+$$
$$pY[1-SubWidthC][SubHeightC*y+1]+4)>>3.$$

6. The variable avgC and the chroma reference sample difference refDiffC[idx], with idx=0..numSamp- 1, are derived as follows:

$$RedNumSamp=1<<Floor(Log2(numSamp))$$

$$bDwn=numSamp/RedNumSamp$$

$$avgC=(\sum_{i=0}^{RedNumSamp-1} refC[i*bDwn]+(RedNumSamp>>1))>>Floor(Log2(numSamp))$$

$$refDiffC[idx]=refC[idx]-avgC.$$

7. The variables minBlockSize, blockIndex, the difference baseDiffY[cnt] between the luma reference sample and the reconstructed sample, with cnt=0...numSamp - 1; the variable indexDiffY[cnt], with cnt=0..numSamp - 1; the variable indexOffset[cnt], with cnt=O...numSamp - 1; the variable LUTindex[cnt], with cnt=0 ... numSamp - 1; the final prediction sample predSamples[x][y], with x=0...nTbW - 1, y=0...nTbH - 1, are derived as follows: minBlockSize=Min(nTbW, nTbH),

- if minBlockSize is equal to 2 or 4, blockIndex is set to 0,
- if minBlockSize is equal to 8 or 16, blockIndex is set to 1,
- if minBlockSize is greater than 16, blockIndex is set to 2,

$$\text{baseDiffY[cnt]=Abs(refY[cnt]}- \text{predSamples[x][y])},$$

$$\text{indexOffset[cnt]=((blockIndex\&1)} - \text{(blockIndex\&2))*(baseDiffY[cnt]\&1)}.$$

LUTindex[cnt]=Clip3(0,WCP_LUT Max Index,(baseDiffL+(blockIIndex&1)*(baseDiffL>>1) - (blockIndex&2)* (baseDiffL>>2)+indexOffset[cnt])), where WCP_LUT_Max_Index is equal to 49.

8. Variable numerator[cnt], with ent=0...numSamp - 1; the variables sum and finalVal for the predicting sample predSamples[x][y], with x=O...nTbW- 1, y=0...nTbH - 1, are derived as follows:

numerator[cnt]=WcpLUT[LUTindex[cnt]]
whereWcpLUT[i]={31,29,26,24,22,20,19,17,16,15,13,12,11,10,10,9,8,8,7,6,6,5,5,4,4,3,3,3,3,2,2, 2,2,2,2,1,1,1,1,1,1,1,1,1,1,1,1}

$$\text{sum}=\sum_{i=0}^{NumSamp-1}\text{numerator[i]}$$

$$\text{calVal}=\sum_{i=0}^{NumSamp-1}(\text{numerator[i]} * \text{refDiffC[i]})$$

$$x=\text{Floor(Log2(sum))}$$

$$\text{normDiff}=((\text{sum}<<5)>>x)\&31$$

$$x+=(\text{normDiff}!=0)?1:0$$

$$\text{add}=1<<x<<4$$

$$\text{finalVal}=(\text{calVal}*(\text{divSigTable[normDiff]}|32)+\text{add})>>(x+5)+\text{avgC}$$

where divSigTable[ ]is specified as follows:
divSigTable[ ]={0,15,14,13,12,12,11,10,10,9,8,8,7,7,6,6,5,5,4,4,4,3,3,3,2,2,2,1,1,1,1,0}.

9. The prediction sample predSamples[x][y], with x=0...nTbW- 1, y=0...nTbH- 1, is derived as follows:
predSamples[x][y]=Clip1(EnalVal[x][y])

$$\text{Clip1(x)=Clip3(0,(1}<<\text{BitDepth})- 1,x).$$

(2) The specified description of the derivation procedure for neighbouring block availability.

Inputs to this procedure include:

- the luma location (xCurr, yCurr) of the top-left sample of the current block relative to the top-left sample of the current picture.
- the luma location (xNbY, yNbY) contained by the neighbouring block, relative to the top-left luma sample of the current picture.
- the variable checkPredModeY for indentifying whether the availability depends on the prediction mode.
- the variable cIdx specifying the colour component of the current block.

The output of this process is the availability of the neighbouring block containing the location (xNbY, yNbY), denoted as availableN.

The neighbouring block availability availableN is derived as follows:

- if one or more of the following conditions are true, availableN is set equal to FALSE:
- xNbY is less than 0;
- yNbY is less than 0;
- xNbY is greater than or equal to pps_pic_width_in_luma_samples;
- yNbY is greater than or equal to pps_pic_height_in_luma_samples;
- (xNbY>>CtbLog2SizeY) is greater than (xCurr>>CtbLog2SizeY) and (yNbY>>CtbLog2SizeY) is greater than or equal to (yCurr>>CtbLog2SizeY);
- (yNbY»CtbLog2SizeY) is greater than or equal to (yCurr>>CtbLog2SizeY)+1;
- IsAvailable[cIdx][xNbY][yNbY] is equal to FALSE;
- the neighbouring block is contained in a different slice than the current block;
- the neighbouring block is contained in a different tile than the current block;
- sps_entropy_coding_sync_enabled_flag is equal to 1 and (xNbY>>CtbLog2SizeY) is greater than or equal to (xCurr>>CtbLog2SizeY)+1;
- Otherwise, availableN is set to be equal to TRUE.

when all of the following conditions are true, availableN is set to be equal to FALSE:

- checkPredModeY is equal to TRUE;
- CuPredMode[0][xNbY][yNbY] is not equal to CuPredMode[0][xCurr][yCurr].

This embodiment provides a decoding method. The specific implementation of the aforementioned embodiments is described in detail by the above embodiments. According to the technical solutions of the aforementioned embodiments, it may be seen that the optimization of the floating-point operation in the WCP prediction technology process is implemented by using the integer operation; on the one hand, the content characteristics of the current block are fully utilized to adaptively select the optimal integer operation shifts; on the other hand, the accuracy of the WCP prediction technology is fully guaranteed; on the other hand, the characteristics of the weight model are fully considered and the integer operation process is reasonably designed. That is, by optimizing the calculation process of the weight-based chroma prediction in the WCP prediction technology, this technical solution completely adopts the integer operation, and meanwhile, may also adaptively select the optimal information such as shifts required for the integerization, thereby further reducing the calculation complexity; and since the calculation method adopted by the WCP prediction technology is the integer operation, it is extremely friendly to the hardware implementation; in this way, the calculation complexity of the WCP prediction technology may be reduced and the coding performance may be improved, while ensuring a certain accuracy of the WCP prediction technology.

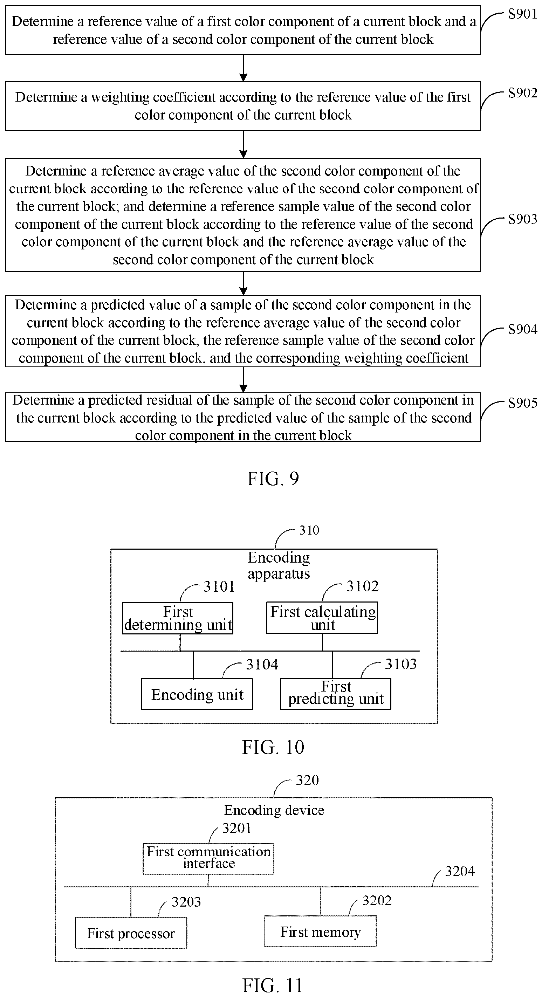

In yet another embodiment of the present disclosure, referring to FIG. 9, FIG.9 shows a schematic diagram of a flow chart of an encoding method, provided by the embodiments of the present disclosure. As shown in FIG. 9, the method may include:

S901: determining a reference value of a first color component of a current block and a reference value of a second color component of the current block.

It should be noted that the encoding method of the embodiments of the present disclosure is applied to an encoding apparatus, or an encoding device (which may be also referred to as an "encoder", for short) integrated with the encoding apparatus. In addition, the encoding method of the embodiments of the present disclosure may specifically refer to an intra prediction method, and more specifically, an integer operation method of a weighted-based chroma prediction (Weight-based Chroma Prediction, WCP)..

In the embodiments of the present disclosure, a video picture may be divided into a plurality of encoding blocks, each encoding block may include a first color component, a second color component, and a third color component, and the current block here refers to an encoding block currently to be intra-predicted in the video picture. In addition, it is assumed that the prediction of the first color component is performed on the current block, and the first color component is a luma component, that is, the component to be predicted is the luma component, then the current block may also be referred to as a luma prediction block; or, it is assumed that the prediction of the second color component is performed on the current block, and the second color component is the chroma component, that is, the component to be predicted is the chroma component, then the current block may also be referred to as a chroma prediction block.

It should also be noted that, in the embodiments of the present disclosure, the reference information of the current block may include a value of a sample of the first color component in a neighboring region of the current block and a value of a sample of the second color component in the neighboring region of the current block, and these samples (Samples) may be determined according to the encoded pixel in the neighboring region of the current block. In some embodiments, the neighboring region of the current block may include at least one of: a top neighboring region, a top-right neighboring region, a left neighboring region, or a lower-left neighboring region.

Here, the top neighboring region and the top-right neighboring region may be regarded as a top region as a whole, and the left neighboring region and the lower-left neighboring region may be regarded as a left region as a whole; in addition, the neighboring region may also include a top-left region, as shown in the aforementioned FIG. 6 in details. Herein, when the prediction of the second color component is performed on the current block, the top region, the left region and the top-left region of the current block as neighboring regions may all be referred to as a reference region of the current block, and the pixels in the reference region are all reconstructed reference pixels.

In some embodiments, determining the reference value of the first color component of the current block and the reference value of the second color component of the current block may include:

determining the reference value of the first color component of the current block according to a value of a sample of the first color component in a neighboring region of the current block; and

determining the reference value of the second color component of the current block according to a value of a sample of the second color component in a neighboring region of the current block.

It should be noted that in the embodiments of the present disclosure, the reference pixel of the current block may refer to a reference pixel point neighboring to the current block, or may also be referred to as a sample of the first color component, a sample of the second color component in the neighboring region of the current block, which is represented by Neighboring Sample or Reference Sample. Herein, the neighboring here may refer to spatial neighboring, but is not limited thereto. For example, the neighboring may also be neighboring in time domain, neighboring in spatial and time domain, and even the reference pixel of the current block may also be a reference pixel obtained by performing some kind of processing on the spatially neighboring, temporally neighboring, or spatially and temporally neighboring reference pixel point, etc., which is not limited to the embodiments of the present disclosure.

It should also be noted that, in the embodiments of the present disclosure, it is assumed that the first color component is a luma component and the second color component is a chroma component; then, the value of the sample of the first color component in the neighboring region of the current block is represented as reference luma information corresponding to the reference pixel of the current block, and the value of the sample of the second color component in the neighboring region of the current block is represented as reference chroma information corresponding to the reference pixel of the current block.

It should also be noted that, in the embodiments of the present disclosure, the value of the sample of the first color component or the value of the sample of the second color component is determined from the neighboring region of the current block, where the neighboring region may include only the top neighboring region, or only the left neighboring region, or include the top neighboring region and the top-right neighboring region, or include the left neighboring region and the lower-left neighboring region, or include the top neighboring region and the left neighboring region, or even include the top neighboring region, the top-right neighboring region and the left neighboring region, etc., which is not limited to the embodiments of the present disclosure.

Furthermore, in some embodiments, determining the reference pixel of the current block may include: performing a screening processing on pixels in the neighboring region of the current block, to determine the reference pixel.

Specifically, in the embodiments of the present disclosure, a first reference pixel set is formed according to pixels in the neighboring region of the current block; then the first reference pixel set may be screened, to determine the reference pixel. Here, a number of reference pixels may be M, where M is a positive integer. In other words, M reference pixels may be selected from pixels in the neighboring region. Herein, the value of M may be 4 generally, but which is not specifically limited thereto.

It should also be noted that among the pixels in the neighboring region of the current block, there may be some unimportant pixels (for example, these pixels have a poor correlation) or some abnormal pixels. In order to ensure the accuracy of the prediction, these pixels need to be removed, so as to obtain available reference pixels. Therefore, in a specific embodiment, screening the pixels in the neighboring region to determine the reference pixel, may include:

determining a location of a pixel to be selected based on locations and/or color component intensities of the pixels in the neighboring region;

determining a reference pixel from the pixels in the neighboring region according to the location of the pixel to be selected.

It should be noted that, in the embodiments of the present disclosure, the color component intensity may be represented by color component information, such as reference luma information, reference chroma information, etc.; here, the larger the value of the color component information, the higher the color component intensity. In this way, screening the pixels in the neighboring region may be performed according to the locations of the pixels or the color component intensities, so that the reference pixel of the current block is determined according to the screened pixel, and further, the value of the sample of the first color component in the neighboring region of the current block and the value of the sample of the second color component in the neighboring region of the current block may be determined; then the reference value of the first color component of the current block is determined according to the value of the sample of the first color component in the neighboring region of the current block, and the reference value of the second color component of the current block is determined according to the value of the sample of the second color component in the neighboring region of the current block.

In some embodiments, determining the reference value of the first color component of the current block according to the value of the sample of the first color component in the neighboring region of the current block, may include: performing a first filtering processing on the value of the sample of the first color component in the neighboring region of the current block, to determine the reference value of the first color component of the current block.

In the embodiments of the present disclosure, the first filtering processing is a downsampling filtering processing. Herein, the first color component is a luma component. In this case, the downsampling filtering processing may be performed on the reference luma information, so that the spatial resolution of the filtered reference luma information is the same as the spatial resolution of the reference chroma information. Exemplarily, if the size of the current block is $2M \times 2N$, and the reference luma information is 2M+2N, then after the downsampling filtering, it may be transformed to M+N, to obtain the reference value of the first color component of the current block.

In some embodiments, determining the reference value of the second color component of the current block according to the value of the sample of the second color component in the neighboring region of the current block, may include: performing a second filtering processing on the value of the sample of the second color component in the neighboring region of the current block, to determine the reference value of the second color component of the current block.

In the embodiments of the present disclosure, the second filtering processing is an upsampling filtering processing. Herein, an upsampling rate is a positive integer multiple of 2.

That is, the first color component is the luma component, and the second color component is the chroma component. The embodiments of the present disclosure may also perform the upsampling filtering on the reference chroma information, so that the spatial resolution of the filtered reference chroma information is the same as the spatial resolution of the reference luma. Exemplarily, if the reference luma information is 2M+2N and the reference chroma information is M+N, then after the upsampling filtering is performed on the reference chroma information, the reference chroma information may be transformed to 2M+2N, to obtain the reference value of the second color component of the current block.

S902: determining a weighting coefficient according to the reference value of the first color component of the current block.

It should be noted that, in the embodiments of the present disclosure, the reference information of the current block may also include a reconstructed value of a sample of the first color component in the current block. It is assumed that the first color component is the luma component, then the reconstructed value of the sample of the first color component in the current block is reconstruction luma information of the current block.

In some embodiments, determining the weighting coefficient according to the reference value of the first color component of the current block, may include:

determining a reconstructed value of a sample of the first color component in the current block;
determining a reference sample value of the first color component of the current block according to the reconstructed value of the sample of the first color component in the current block and the reference value of the first color component of the current block; and
determining the weighting coefficient according to the reference sample value of the first color component of the current block.

In a possible embodiment, determining the reference sample value of the first color component of the current block according to the reconstructed value of the sample of the first color component in the current block and the reference value of the first color component of the current block, may include:

determining a residual between the reconstructed value of the sample of the first color component in the current block and the reference value of the first color component of the current block; and
determining the reference sample value of the first color component of the current block according to the residual.

In the embodiments of the present disclosure, the reference sample value of the first color component of the current block may be set to be equal to an absolute value of the residual. In addition, determining the reference sample value of the first color component of the current block according to the residual, may also be performed by squaring the residual, or performing some related processings and mapping for the residual, etc., to determine the reference sample value of the first color component of the current block, which is not limited thereto.

In another possible embodiment, determining the reference sample value of the first color component of the current block according to the reconstructed value of the sample of the first color component in the current block and the reference value of the first color component of the current block, may include:

performing a third filtering processing on the reconstructed value of the sample of the first color component in the current block, to obtain a filtered sample value of the sample of the first color component in the current block; and determining the reference sample value of the first color component of the current block according to the filtered sample value of the sample of the first color component in the current block and the reference value of the first color component of the current block.

In the embodiments of the present disclosure, the third filtering processing is a downsampling filtering processing. Herein, the first color component is the luma component, and at this time, the downsampling filtering processing may also be performed on the reconstruction luma information in the current block. Exemplarily, if the number of reconstruction luma information in the current block is $2M \times 2N$, the number of reconstruction luma information may be transformed to $M \times N$ after the downsampling filtering.

In the embodiments of the present disclosure, determining the reference sample value of the first color component of the current block according to the filtered sample value of the sample of the first color component in the current block and the reference value of the first color component of the current block, may include determining the reference sample value of the first color component of the current block according to a difference between the filtered sample value of the sample of the first color component in the current block and the reference value of the first color component of the current block, and more specifically, may include determining the reference sample value of the first color component of the current block according to an absolute value of the difference between the filtered sample value of the sample of the first color component in the current block and the reference value of the first color component of the current block, which is also not limited thereto.

It may be understood that after determining the reference sample value of the first color component of the current block, the embodiments of the present disclosure may further determine the weighting coefficient. Herein, the reference sample value of the first color component of the current block may be an absolute value of a difference between the reconstructed value of the sample of the first color component in the current block and the reference value of the first color component of the current block.

In the embodiments of the present disclosure, the reference sample value of the first color component of the current block may be an absolute value of a difference between the luma reconstruction information (represented by recY) in the current block and inSize number of the reference luma information (represented by refY). Herein, for the pixel to be predicted $C^{pred}[i][j]$ in the current block, its corresponding luma difference vector diffY[i][j][k] may be obtained by subtracting its corresponding luma reconstruction information recY[i][j] from the inSize number of reference luma information refY[k] and taking an absolute value of the subtracted result; that is, in the embodiments of the present disclosure, the reference sample value of the first color component of the current block may be represented by diffY[i][j][k].

Further, in some embodiments, determining the weighting coefficient according to the reference sample value of the first color component of the current block, may include: determining a weight index value according to the reference sample value of the first color component of the current block; and determining the weighting coefficient by using a first preset mapping relationship according to the weight index value.

In a specific embodiment, determining the weight index value according to the reference sample value of the first color component of the current block, may include:

determining a maximum weight index value and a minimum weight index value of the current block; and refining the reference sample value of the first color component according to the maximum weight index value and the minimum weight index value, to determine the weight index value.

It should be noted that in the embodiments of the present disclosure, the maximum weight index value may be represented by theMaxPos, the minimum weight index value may be represented by zero, and the weight index value may be represented by index. Here, the weight index value is limited between theMaxPos and zero. Exemplarily, the weight index value may be calculated according to the following formula, as shown in the aforementioned formula (2).

$$\text{Clip3}(x, y, z) = \begin{cases} x\,;\, z < x \\ y\,;\, z > y \\ z\,;\, \text{otherwise} \end{cases}$$

Herein, k=0, 1, ..., inSize-1, . That is, in the formula (2), if z ; otherwise diffY[i][j][k] < 0 , index=0; if diffY[i][j][k] > theMaxPos , index= theMaxPos ; otherwise, if $0 \leq$ diffY[i][j][k] $\leq$ theMaxPos, index=diffY [i][j][k].

In a specific embodiment, the maximum weight index value may be related to a bit depth (represented by BitDepth) of the luma or the chroma. Exemplarily, the maximum weight index value may be calculated according to the following formula, as shown in the aforementioned formula (3).

It should be noted that in the embodiments of the present disclosure, the value of theMaxPos includes but is not limited to being calculated according to the formula (3), and it may also be determined in core parameters of WCP.

Further, with respect to the first preset mapping relationship, in some embodiments, the first preset mapping relationship is a numerical mapping look up table between the weight index value and the weighting coefficient. That is, in the embodiments of the present disclosure, the decoder side may be pre-set with a corresponding look up table (Look Up Table, LUT). By using the look up table and combining with the index, the corresponding weighting coefficient may be determined. Exemplarily, the weighting coefficient cWeightInt[i][j][k] may be represented by the following mapping relationship, as detailed in the aforementioned formula (4).

With respect to the first preset mapping relationship, in some embodiments, the first preset mapping relationship may also be a preset function relationship. In some embodiments, determining the weighting coefficient by using the first preset mapping relationship according to the weight index value, may include: determining a first value corresponding to the weight index value under the first preset mapping relationship; and setting the weighting coefficient to be equal to the first value.

In a specific embodiment, determining the first value corresponding to the weight index value under the first preset mapping relationship, may include:

determining a first factor;
determining a second value by using a second preset mapping relationship according to the weight index value;
calculating a first product value of the first factor and the second value; and
setting the first value to be equal to a value corresponding to the first product value under the first preset mapping relationship.

It should be noted that, in the embodiments of the present disclosure, the first factor may be represented by ModelScale, and the weight index value is represented by index. Exemplarily, the weighting coefficient cWeightInt[i][j][k] may also be represented by the following function relationship, as shown in the aforementioned formula (5).

Here, the second preset mapping relationship may be an exponential function relationship based on n, such as $e^{-n}$; herein, the value of n is equal to the weight index value, that is, n=0, 1,..., theMaxPos. In this way, when the value of n is equal to the index, then the second value is equal to $e^{-index}$, and the first product value is equal to $e^{-index} \times$ ModelScale. In addition, the first preset mapping relationship may be set to Round(x); so when x is equal to the first product value, the value of Round (x) is the first value, that is, the weighting coefficient cWeightInt[i][j][k]. In addition, in the embodiments of the present disclosure, with respect to the first preset mapping relationship, it may be as shown in the aforementioned formula (6).

Further, with respect to the first factor, in some embodiments, the first factor may be a preset constant value. That is, the first factor may be a preset constant, which is not related to a block size parameter.

With respect to the first factor, in some embodiments, the value of the first factor may also be related to the block size parameter. In a specific embodiment, determining the first factor, may include: determining a value of the first factor according to a size parameter of the current block; where the size parameter of the current block includes at least one of following parameters: a width of the current block, or a height of the current block. That is, the embodiments of the present disclosure may fix the value of the first factor in a classification manner. For example, the size parameter of the current block is divided into three types, and the value of the first factor corresponding to each type is determined. For this case, the embodiments of the present disclosure may also pre-store a mapping look up table of the size parameter of the current block and the value of the first factor, and then determine the value of the first factor according to the look up table. Exemplarily, if the size parameter of the current block meets a first preset condition, that is, Min(W, H)<=4, the value of the first factor is set to a first value; if the size parameter of the current block meets a second preset condition, that is, Min(W, H) >4&& Min(W, H)<=16, the value of the first factor is set to s second value; if the size parameter of the current block meets a third preset condition, that is, Min(W, H)>16, the value of the first factor is set to a third value. Herein, W represents the width of the current block, and H represents the height of the current block.

Further, in some embodiments, determining the weight index value according to the reference sample value of the first color component of the current block, may include: determining a second factor; and determining the weight index value according to the reference sample value of the first color component of the current block and the second factor.

It should be noted that, in the embodiments of the present disclosure, under a certain condition, the weighting coefficient may also be adjusted according to a control parameter in the core parameters of WCP. Here, the second factor is the control parameter described in this embodiment (also referred to as a "scale parameter", "scale factor" , etc.), and is represented by S. Exemplarily, if the size of the current block is flexible, the weight coefficient may be adjusted according to the second factor. Taking a nonlinear function (such as the Softmax function) as an example, different second factors may be selected according to the different block classification types to which the current block belongs, to adjust the function, so as to determine the weight coefficient according to the adjusted function.

It should also be noted that, with respect to the second factor, in some embodiments, the second factor may be a preset constant value. That is, in this case, with respect to S, a distribution of the weighting coefficient of the neighboring chroma may be adjusted according to the characteristic of the relatively flat chroma, so as to capture a distribution of the weighting coefficient suitable for the chroma prediction of the natural picture. In order to determine the parameter S suitable for the chroma prediction of the natural picture, a given S set is traversed, and whether S is appropriate is measured by the difference between the prediction chroma and the original chroma under different S. Exemplarily, S may be $2^{-\varepsilon}$, where $\varepsilon \in \{1, 0, -1, -2, -3\}$; it has been found after testing, that in this S set, the best value of S is 4. Therefore, in a specific embodiment, S may be set to 4, but which is not limited in the embodiments of the present disclosure.

It should also be noted that, with respect to the second factor, in some embodiments, the value of the second factor may also be related to the block size parameter. In a specific embodiment, determining the second factor, may include: determining a value of the second factor according to a size parameter of the current block; where the size parameter of the current block includes at least one of following parameters: a width of the current block, or a height of the current block.

In a possible implementation, determining the value of the second factor according to the size parameter of the current block, may include:

if minimum values of the height and the width of the current block are less than or equal to 4, determining the second factor to be 8;
if minimum values of the height and the width of the current block are greater than 4 and less than or equal to 16, determining the second factor to be 12; or
if minimum values of the height and the width of the current block are greater than 16, determining the second factor to be 16.

It should be noted that, in the embodiments of the present disclosure, the value of the second factor may be fixed in a classification manner. For example, the size parameter of the current block is divided into three types, and the value of the second factor corresponding to each type is determined. For this case, the embodiments of the present disclosure may also pre-store a mapping look up table of the size parameter of the current block and the value of the second factor, and then determine the value of the second factor according to the look up table. Exemplarily, the aforementioned Table 1 shows a correspondence between the second factor and the size parameter of the current block, provided by the embodiments of the present disclosure.

In another possible implementation, in the adjustment of the weight coefficient, the above correspondence between the second factor and the size parameter of the current block may also be fine-tuned. The aforementioned Table 2 shows another correspondence between the second factor and the size parameter of the current block, provided by the embodiments of the present disclosure.

In yet another possible implementation, in the adjustment of the weight coefficient, the value of the second factor may also be fine-tuned. In some embodiments, determining the value of the second factor according to the size parameter of the current block, may include:

if minimum values of the height and the width of the current block are less than or equal to 4, determining the second factor to be 7;
if minimum values of the height and the width of the current block are greater than 4 and less than or equal to 16, determining the second factor to be 11;
if minimum values of the height and the width of the current block are greater than 16, determining the second factor to be 15.

That is, by fine-tuning the value of the second factor, the aforementioned Table 3 shows yet another correspondence between the second factor and the size parameter of the current block, provided by the embodiments of the present disclosure.

It should also be noted that, in the embodiments of the present disclosure, the size parameter of the current block is divided into three types, and different size parameters may also be indicated by a block type index value (represented by wcpSizeId). In yet another possible implementation, determining the value of the second factor according to the size parameter of the current block, may include: determining the value of the second factor according to the block type index value.

Exemplarily, if the block type index value is equal to 0, it indicates the current block with Min(W, H) <=4; if the block type index value is equal to 1, it indicates the current block with Min(W, H)>4&& Min(W, H)<=16; if the block type index value is equal to 2, it indicates the current block with Min(W, H)>16. In this case, the aforementioned Table 4 shows a correspondence between the second factor and the block type index value, provided by the embodiments of the present disclosure.

Exemplarily, if the block type index value is equal to 0, it indicates the current block with Min(W, H)<128; if the block type index value is equal to 1, it indicates the current block with Min(W, H)> = 128&& Min(W, H) <=256; if the block type index value is equal to 2, it indicates the current block with Min(W, H)>256. In this case, the aforementioned Table 5 shows another correspondence between the second factor and the block type index value, provided by the embodiments of the present disclosure.

Exemplarily, if the block type index value is equal to 0, it indicates the current block with Min(W, H)<64; if the block type index value is equal to 1, it indicates the current block with Min(W, H)> = 64&&Min(W, H)<= 512; if the block type index value is equal to 2, it indicates the current block with Min(W, H)> 512. In this case, the aforementioned Table 6 shows yet another correspondence between the second factor and the block type index value, provided by the embodiments of the present disclosure.

It should also be noted that, with respect to the second factor, in some embodiments, the second factor may also be classified according to a number of reference pixels of the current block. In another specific embodiment, determining the second factor, may include: determining the value of the second factor according to the number of reference pixels of the current block; where N represents the number of reference pixels.

In a possible implementation, determining the value of the second factor according to the number of reference pixels of the current block, may include:

if a value of N is less than 16, determining the second factor to be 8;
if a value of N is greater than or equal to 16 and less than 32, determining the second factor to be 12; or
if a value of N is greater than or equal to 32, determining the second factor to be 16.

That is, the classification is performed according to the number of reference pixels of the current block. The aforementioned Table 7 shows a correspondence between the second factor and the number of reference pixels, provided by the embodiments of the present disclosure.

Further, in some embodiments, determining the weight index value according to the reference sample value of the first color component of the current block and the second factor, may include:

determining a third value by using a third preset mapping relationship according to the reference sample value of the first color component and the second factor;
determining a maximum weight index value and a minimum weight index value of the current block; and
refining the third value according to the maximum weight index value and the minimum weight index value, to determine the weight index value.

It should be noted that in the embodiments of the present disclosure, the maximum weight index value may be represented by theMaxPos, the minimum weight index value may be represented by zero, and the weight index value may be represented by index. Here, the weight index value is limited between theMaxPos and zero and the third value is f(S, diffY[i][j][k]). Exemplarily, the weight index value may be calculated according to the following formula, as shown in the aforementioned formula (7).

$$\text{Clip3}(x, y, z) = \begin{cases} x\,; z < x \\ y\,; z > y \\ z\,; \text{otherwise} \end{cases}$$

Herein, k=0, 1, ..., inSize-1, . That is, in the formula (7), if f(S, diffY[i][j][k]) < 0, index=0; if f(S, diffY[i][j][k]) > theMaxPos, index = theMaxPos; otherwise, if $0 \le$ f(S, diffY[i][j][k]) $\le$ theMaxPos, index = f(S, diffY[i][j][k]). Here, the value of theMaxPos may be calculated according to the above formula (3), or determined in the core parameters of WCP, which is not limited thereto.

It should be also noted that, with respect to the third preset mapping relationship, f( ) refers to a function of the second factor S and the luma difference vector diffY[i][j] [k]. In a possible implementation, f(S, diffY[i][j][k]) may be implemented by the following formula, as shown in the aforementioned formula (8).

In another possible implementation, f(S,diffY[i][j][k]) may be implemented by the following operation. In some embodiments, determining the third value by using the third preset mapping relationship according to the reference sample value of the first color component and the second factor, may include:

determining at least one shift array;
determining a target offset from the at least one shift array according to the second factor; and
performing a right shift operation of the target offset on the reference sample value of the first color component, to determine the third value.

Here, since different second factors S may use their own LUT[S], the embodiments of the present disclosure only store several basic LUTs. For example, when S={2, 4, 8}, only the LUT when S=2 is stored; for other second factors S, the LUT may be obtained by the shift operation. At this time, f(S, diffY[i][j][k]) may be implemented by the following formula, as shown in the aforementioned formula (9) and formula (10).

In the embodiments of the present disclosure, if the second factor is equal to 2, the target offset is equal to 0; if the second factor is equal to 4, then the target offset is equal to 1; if the second factor is equal to 8, then the target offset is equal to 2; and then, the right shift operation of the target offset may be performed on the reference sample value of the first color component, to determine the third value.

In addition, it should be noted that, for f(S, diffY[i][j][k]), its implementation is not limited to the formula (8) or the formula (9), and its other implementations may also be used, which are not limited in the embodiments of the present disclosure.

Further, in some embodiments, determining the weighting coefficient by using the first preset mapping relationship according to the weight index value, may include:

determining a second product value according to the second factor and the weight index value;
determining a fourth value corresponding to the second product value under the first preset mapping relationship, and setting the weighting coefficient to be equal to the fourth value.

In a specific embodiment, determining the fourth value corresponding to the second product value under the first preset mapping relationship, may include:

determining a first factor;
determining a fifth value by using a second preset mapping relationship according to the second product value;
calculating a third product value of the first factor and the fifth value; and
setting the fourth value to be equal to a value corresponding to the third product value under the first preset mapping relationship.

It should be noted that, in the embodiments of the present disclosure, the first factor may be represented by ModelScale the second factor may be represented by S, and the weight index value may be represented by index.

With respect to the first preset mapping relationship, in some embodiments, the first preset mapping relationship is a numerical mapping look up table of the second factor, the weight index value and the weighting coefficient. That is, in the embodiments of the present disclosure, the decoder side may be pre-set with a corresponding look up table (Look Up Table, LUT). By using the look up table and combining with index, the corresponding weighting coefficient may be determined. Exemplarily, the weighting coefficient cWeightInt[i][j][k] may be represented by the following mapping relationship, as shown in the aforementioned formula (11).

With respect to the first preset mapping relationship, in some embodiments, the first preset mapping relationship may also be a preset function relationship, where the inputs of the function are index and S, and the output of the function is the weighting coefficient. For example, the weighting coefficient cWeightInt[i][j][k] may also be represented by the following function relationship, as shown in the aforementioned formula (12).

Here, the second preset mapping relationship may still be an exponential function relationship based on n, such as $e^{\frac{-n}{S}}$; where the value of n is equal to the weight index value, that is, n=0, 1, ..., theMaxPos. In this way, if the value of n is equal to index, the fifth value is equal to $e^{\frac{-index}{S}}$, and the third product value is equal to $e^{\frac{-index}{S}} \times \text{ModelScale}$. In addition, the first preset mapping relationship may be set to Round(x), specifically, as shown in the above formula (6); so when $x$ is equal to the third product value, the value of $Round(x)$ is the fourth value, that is, the weighting coefficient cWeightInt[i][j][k].

S903: determining a reference average value of the second color component of the current block according to the reference value of the second color component of the current block; and determining a reference sample value of the second color component of the current block according to the reference value of the second color component of the current block and the reference average value of the second color component of the current block.

It should be noted that, in the embodiments of the present disclosure, the number of the input reference pixels of the weight-based prediction may be represented by N or inSize. Here, the number of input reference pixels of the weight-based prediction is the same as the number of reference sample values of the second color component, or in other words, N represents the number of reference sample values of the second color component, and N is a positive integer.

In some embodiments, determining the reference average value of the second color component of the current block according to the reference value of the second color component of the current block may include: performing an average operation on N reference values of the second color component of the current block, to obtain the reference average value of the second color component of the current block.

It should be also noted that, in the embodiments of the present disclosure, the reference value of the second color component of the current block may be represented by refC[k], and the reference average value of the second color component of the current block may be represented by avgC, and the calculation of avgC is shown in the aforementioned formula (13).

For the value of N, in some embodiments, the method may further include: determining a block type index value according to a size parameter of the current block; and determining a value of N by using a fifth preset mapping relationship according to the block type index value.

In a specific embodiment, the fifth preset mapping relationship represents a numerical mapping look up table of the block type index value and N.

It should be noted that, in the embodiments of the present disclosure, the block type index value may be represented by wcpSizeId. For different block type index values, the number of input reference pixels of the weight-based prediction may also be different; that is, the value of N or (inSize) is different.

Exemplarily, in a case of the current block with Min(W, H)<=4, the block type index value is determined to be equal to 0; in a case of the current block with Min(W, H)>4&Min(W, H)<=16, then the block type index value is determined to be equal to 1; in a case of the current block with Min(W, H)>16, the block type index value is determined to be equal to 2; or, in a case of the current block with Min(W, H)<128, the block type index value is determined to be equal to 0; in a case of the current block with Min(W, H)>=128&Min(W, H)<=256, the block type index value is determined to be equal to 1; in a case of the current block with Min(W, H)>256, the block type index value is determined to be equal to 2; which is not limited thereto. Exemplarily, the aforementioned Table 8 and Table 9 respectively show the illustration of correspondences between the block type index value and the value of N (inSize).

Further, with respect to the reference sample value of the second color component of the current block, in some embodiments, determining the reference sample value of the second color component of the current block according to the reference value of the second color component of the current block and the reference average value of the second color component of the current block, may include:

performing a subtraction operation on the reference value of the second color component of the current block and the reference average value of the second color component of the current block, to obtain the reference sample value of the second color component of the current block.

In the embodiments of the present disclosure, the average value avgC of N reference chroma information refC is calculated, and then the reference chroma difference vector diffC may be obtained by subtracting the average value avgC from the N reference chroma information refC. Specifically, diffC is calculated as shown in the aforementioned formula (14).

S904: determining a predicted value of a sample of the second color component in the current block according to the reference average value of the second color component of the current block, the reference sample value of the second color component of the current block, and the weighting coefficient.

S905: determining a predicted residual of the sample of the second color component in the current block according to the predicted value of the sample of the second color component in the current block.

It should be noted that after the reference average value avgC of the second color component of the current block, the reference sample value *diffC*[*k*] of the second color component of the current block, and the weighting coefficient cWeightInt[i][j][k] are determined, the predicted value of the sample of the second color component in the current block may be further determined.

In some embodiments, determining the predicted value of the sample of the second color component in the current block according to the reference average value of the second color component of the current block, the reference sample value of the second color component of the current block, and the weighting coefficient, may include:

determining a weighted value of the reference sample value of the second color component and the weighting coefficient;
setting a weighted sum value of pixels to be predicted in the current block to be equal to a sum of the N weighted values, and setting a coefficient sum value of the pixels to be predicted in the current block to be equal to a sum of the N weighted coefficients; where N represents a number of reference sample values of the second color component, and N is a positive integer;
determining a sixth value by using a fourth preset mapping relationship according to the weighted sum value and the coefficient sum value;
performing an addition operation on the reference average value of the second color component and the sixth value, to obtain a predicted value of the second color component of the pixels to be predicted in the current block; and
determining the predicted value of the sample of the second color component in the current block according to the predicted value of the second color component of the pixels to be predicted in the current block.

It should be noted that, in the embodiments of the present disclosure, if the number of reference sample values of the second color component is N, firstly, a weighted value (i.e., subC[i][j][k]) of each reference sample value of the second color component and the weighting coefficient is determined, and then, the N weighted values may be added to obtain a weighted sum value of the pixels to be predicted in the current block, which may be represented by calVal. Specifically, the calculation formula thereof is specifically shown as the aforementioned formula (15) and formula (16).

It should also be noted that in the embodiments of the present disclosure, for the N weighting coefficients corresponding to the pixels to be predicted in the current block, these N weighting coefficients may be added to obtain a coefficient sum value of the pixels to be predicted in the current block, which may be expressed as sum. Specifically, the calculation formula thereof is specifically shown as the aforementioned formula (17).

Further, in some embodiments, determining the sixth value by using the fourth preset mapping relationship according to the weighted sum value and the coefficient sum value, may include:

determining a preset offset;
determining a first numerical value by using a sixth preset mapping relationship according to the coefficient sum value;
and determining an array index value by using a seventh preset mapping relationship according to the coefficient sum value and the first numerical value, and determining a second numerical value by using an eighth preset mapping relationship according to the array index value and the preset offset;
determining a third numerical value according to the first numerical value in a case where the array index value is equal to zero or not; and determining a first offset according to the third numerical value and the preset offset;
determining a fourth product value according to the second numerical value and the weighted sum value, determining a preset addition value according to the third numerical value and the preset offset, and performing an addition operation on the fourth product value and the preset addition value, to obtain a target sum value; and
performing a right shift operation of the first offset on the target sum value, to determine the sixth value.

It should be noted that, in the embodiments of the present disclosure, the preset offset may be represented by Shift, the array index value may be represented by normDiff, the first numerical value may be represented by $x$, the second numerical value may be represented by v, the third numerical value may be represented by y, and the preset addition value may be represented by add. In a specific embodiment, the value of Shift may be set to 5, but which is not specifically limited thereto.

It should also be noted that, in the embodiments of the present disclosure, for the calculation of the first numerical value, the sixth preset mapping relationship may be shown as the aforementioned formula (18).

Here, the calculation of the first numerical value may be: first determining a logarithmic value of the coefficient sum value with a base 2, and then, determining a maximum integer value less than or equal to the logarithmic value, where the maximum integer value determined here is the first numerical value; or, the calculation of the first numerical value may also be: setting the first numerical value to be equal to a number of bits of binary symbols required for a binary representation of the coefficient sum value, minus one; or, the calculation of the first numerical value may also be: performing a binary right shift operation on the coefficient sum value, determining a number of right shift bits when the right-shifted value is exactly equal to zero; and setting the first numerical value to be equal to the number of right shift bits minus one, and so on, which is not limited in the embodiments of the present disclosure.

In some embodiments, determining the array index value by using the seventh preset mapping relationship according to the coefficient sum value and the first numerical value, may include: using the coefficient sum value and the first numerical value as inputs of a preset function relationship, and outputting the array index value according to the preset function relationship.

In the embodiments of the present disclosure, the calculation of the array index value may be shown in the aforementioned formula (19). Here, Func( ) is a function related to Shift, and the aforementioned formula (20) shows a specific form of Func( ).

In some embodiments, determining the second numerical value by using the eighth preset mapping relationship according to the array index value and the preset offset, may include:

determining an index indication value in an array mapping table according to the array index value; and
determining the second numerical value by using the eighth preset mapping relationship according to the index indication value and the preset offset.

It should be noted that, in the embodiments of the present disclosure, the array mapping table is represented by DivSigTable, and the index indication value corresponding to the array index value normDiff in DivSigTable is DivSigTable [normDiff]. Exemplarily, according to DivSigTable[normDiff] and Shift, the eighth preset mapping relationship is shown as the aforementioned formula (21).

In some embodiments, determining the third numerical value according to the first numerical value in the case where the array index value is equal to zero or not, may include:

if the array index value is equal to zero, setting the third array to be equal to the first numerical value;
if the array index value is not equal to zero, setting the third array to be equal to a sum value of the first numerical value and one.

It should be noted that, in the embodiments of the present disclosure, the first numerical value is represented by x, and the third numerical value is represented by y. Exemplarily, it may be shown as the aforementioned formula (22).

It should also be noted that, in the embodiments of the present disclosure, with respect to the preset addition value, the preset addition value is determined according to the third numerical value and the preset offset, the calculation formula of which is shown as the aforementioned formula (23).

It should be also noted that, in the embodiments of the present disclosure, the first offset is determined by the third numerical value and the preset offset. Exemplarily, the addition operation is performed on the third numerical value and the preset offset, to obtain the first offset, that is, the first offset may be y+ Shift.

Thus, it is assumed that the sixth value is represented by C, the sixth value may be shown in the aforementioned formula (24).

Furthermore, for determining the predicted value of the second color component of the pixel to be predicted in the current block, it is assumed that the pixel to be predicted is (i, j), the predicted value of the second color component of the pixel to be predicted in the current block is represented by $C^{pred}[i][j]$. At this time, the predicted value of the second color component of the pixel to be predicted in the current block may be obtained, by performing the addition operation on the reference average value of the second color component and the sixth value, the calculation formula of which is shown as the aforementioned formula (25).

Furthermore, in the embodiments of the present disclosure, $C^{pred}[i][j]$ usually needs to be limited within a preset range. Therefore, in some embodiments, the method may further include: refining the predicted value of the second color component of the pixels to be predicted, and using the predicted value that is refined as the predicted value of the second color component of the pixels to be predicted in the current block.

It should be noted that, in the embodiments of the present disclosure, the preset range may be: between 0 and $(1<<BitDepth)$ -1; where BitDepth is the bit depth required for the chroma component. If the predicted value exceeds the value of the preset range, the predicted value needs to be refined accordingly. For example, a clamping operation may be performed on $C^{pred}[i][j]$, specifically as follows:

when the value of $C^{pred}[i][j]$ is less than 0, setting it to 0;
when the value of $C^{pred}[i][j]$ is greater than or equal to 0 and less than or equal to $(1<<BitDepth)-1$, it is equal to $C^{pred}[i][j]$;
when the value of $C^{pred}[i][j]$ is greater than $(1<<BitDepth)-1$, setting it to $(1<<BitDepth)-1$.

In this way, after the predicted value is refined, it may be ensured that the predicted value of the second color component of the pixel to be predicted in the current block is between 0 and $(1<<BitDepth)-1$.

Furthermore, after the predicted value is determined, under a certain condition, a post-processing operation is required, to obtain a final chroma predicted value. Therefore, in some embodiments, determining the predicted value of the sample of the second color component in the current block according to the predicted value of the second color component of the pixels to be predicted in the current block, may include:

performing a filtering processing on the predicted value of the second color component of the pixels to be predicted, to determine the predicted value of the sample of the second color component in the current block.

In the embodiments of the present disclosure, the predicted value of the second color component of the pixels to be predicted includes a predicted value of at least a part of samples of the second color component in the current block. In other words, for a first prediction block formed according to the predicted value of the second color component of the pixels to be predicted, the first prediction block contains the predicted value of at least a part of samples of the second color component in the current block.

It should be noted that, in the embodiments of the present disclosure, if the first prediction block includes the predicted value of a part of samples of the second color component in the current block, it is necessary to perform the upsampling filtering on the first prediction block, to obtain a final second prediction block. Therefore, in some embodiments, the method may further include: performing an upsampling filtering processing on the first prediction block, to determine a second prediction block of the second color component of the current block.

It should also be noted that, in the embodiments of the present disclosure, if the number of prediction values of the second color component contained in the first prediction block is the same as the number of samples of the second color component contained in the current block, but the predicted value of the sample of the second color component of the current block is not contained, the predicted value needs to be enhanced by filtering, to obtain the final second prediction block. Therefore, in some embodiments, the method may further include: performing a filtering enhancement processing on the first prediction block, to determine the second prediction block of the second color component of the current block.

It should also be noted that, in the embodiments of the present disclosure, if the first prediction block includes the predicted value of all samples of the second color component in the current block, there is no need to perform any processing on the first prediction block, and the first prediction block may be directly used as the final second prediction block.

That is, the first prediction block may contain the predicted value of at least a part of samples of the second color component in the current block. Herein, if the first prediction block contains the predicted value of all samples of the second color component in the current block, the predicted value of the sample of the second color component in the current block may be set to be equal to the value of the first prediction block; if the first prediction block contains the predicted value of a part of samples of the second color components in the current block, the upsampling filtering may be performed on the value of the first prediction block, and the predicted value of the sample of the second color component in the current block is set to be equal to an output value after the upsampling filtering.

In this way, after the above operations, the second prediction block includes the predicted values of all samples of the second color component in the current block. In this way, predWcp output by the weight-based chroma prediction, under a certain condition, needs to be post-processed before it can be used as the final chroma predicted value predSamples; otherwise, the final chroma predicted value predSamples is predWcp.

In some embodiments, after determining the predicted value of the sample of the second color component in the current block, determining the predicted residual of the sample of the second color component in the current block according to the predicted value of the sample of the second color component in the current block, may include:

acquiring an original value of the sample of the second color component in the current block; and
determining the predicted residual of the sample of the second color component in the current block according to the original value of the sample of the second color component in the current block and the predicted value of the sample of the second color component in the current block.

Further, in some embodiments, the method may include: encoding the predicted residual of the sample of the second color component in the current block, and writing an obtained encoded bit into a bitstream.

It should be noted that, in the embodiments of the present disclosure, after determining the predicted value of the sample of the second colour component in the current block, the predicted residual of the sample of the second colour component may be determined based on the original value of the sample of the second colour component and the predicted value of the sample of the second colour component, and specifically, the predicted residual of the sample of the second colour component of the current block may be determined by performing the subtraction operation on the original value of the sample of the second colour component and the predicted value of the sample of the second colour component, so as to determine the predicted residual of the sample of the second colour component of the current block. In this way, after the predicted residual of the sample of the second colour component is written into the bitstream, the predicted residual of the sample of the second colour component may be obtained by decoding at the decoder side subsequently, so as to resume the reconstructed value of the sample of the second colour component in the current block.

It may be understood that, the embodiments of the present disclosure also provide a bitstream, which is generated by bit-encoding according to information to be encoded; where the information to be encoded includes at least: the predicted residual of the sample of the second colour component in the current block.

It may also be understood that the embodiments of the present disclosure optimizes the floating-point operation in the WCP prediction technology process and is implemented by using the integer operation. On the one hand, the content characteristics of the current block are fully utilized to adaptively select the optimal integer operation shifts; on the other hand, the accuracy of the WCP prediction technology is fully guaranteed; on the other hand, the characteristics of the weight model are fully considered and the integer operation process is reasonably designed; thereby reducing the calculation complexity of the WCP prediction technology, while ensuring a certain accuracy of the WCP prediction technology.

The present embodiments also provide an encoding method, including determining a reference value of a first color component of a current block and a reference value of a second color component of the current block; determining a weighting coefficient according to the reference value of the first color component of the current block; determining a reference average value of the second color component of the current block according to the reference value of the second color component of the current block; and determining a reference sample value of the second color component of the current block according to the reference value of the second color component of the current block and the reference average value of the second color component of the current block; determining a predicted value of a sample of the second color component in the current block according to the reference average value of the second color component of the current block, the reference sample value of the second color component of the current block, and the weighting coefficient; and determining a predicted residual of the sample of the second color component in the current block according to the predicted value of the sample of the second color component in the current block. In this way, based on the color component reference information in the neighboring region of the current block and color component reconstruction information within the current block, it is necessary not only to construct a luma difference vector, so as to determine the weighting coefficient; but also to determine the chroma average value according to the chroma reference information, and then determine the chroma difference vector according to the chroma reference information and the chroma average value, and further determine the chroma predicted value according to the chroma difference vector and the weighting coefficient, plus the chroma average value; in this way, by optimizing the calculation process of the weight-based chroma prediction, fully adopting the integer operation can be implemented, and characteristics of the weight model are fully considered, thereby reasonably optimizing the integer operation process; which may reduce the calculation complexity, improve the coding efficiency, and thus improve the coding performance, while fully ensuring the accuracy of the chroma prediction.

In yet another embodiment of the present disclosure, based on the same inventive concept as the aforementioned embodiments, refer to FIG. 10, FIG. 10 shows a schematic diagram of a composition structure of an encoding apparatus 310, provided by the embodiments of the present disclosure. As shown in FIG. 10, the encoding apparatus 310 may include: a first determining unit 3101, a first calculating unit 3102, and a first predicting unit 3103; where

the first determining unit 3101 is configured to determine a reference value of a first color component of a current block and a reference value of a second color component of the current block; and determine a weighting coefficient according to the reference value of the first color component of the current block;
the first calculating unit 3102 is configured to determine a reference average value of the second color component of the current block according to the reference value of the second color component of the current block; and determine a reference sample value of the second color component of the current block according to the reference value of the second color component of the current block and the reference average value of the second color component of the current block;
the first predicting unit 3103 is configured to determine a predicted value of a sample of the second color component in the current block according to the reference average value of the second color component of the current block, the reference sample value of the second color component of the current block, and the weighting coefficient; and
the first determining unit 3101 is further configured to determine a predicted residual of the sample of the second color component in the current block according to the predicted value of the sample of the second color component in the current block.

In some embodiments, the first determining unit 3101 is further configured to acquire an original value of the sample of the second colour component in the current block; and determine the predicted residual of the sample of the second colour component in the current block according to the original value of the sample of the second colour component in the current block and the predicted value of the sample of the second colour component in the current block.

In some embodiments, referring to FIG. 10, the encoding apparatus 310 may further include an encoding unit 3104, configured to encode the predicted residual of the sample of the second colour component in the current block, and write the obtained encoded bits into a bitstream.

It may be understood that, in the embodiments of the present disclosure, a "unit" may be a part of a circuit, a part of a processor, a part of a program or software, etc., and of course, it may also be a module, or may be non-modular. Furthermore, respective parts in the embodiments may be integrated into a processing unit, or respective units may exist physically separately, or two or more units may be integrated into a unit. The above integrated unit may be implemented in the form of hardware or in the form of a software function module.

If the integrated unit is implemented in the form of the software function module and is not sold or used as an independent product, it may be stored in a computer readable storage medium. Based on this understanding, the technical solutions of the embodiments essentially, or a part of the technical solutions that contributes to the prior art, or all or a part of the technical solutions, may be embodied in the form of a software product. The computer software product is stored in a storage medium and includes many instructions to cause a computer device (which may be a personal computer, a server, or a network device, etc.) or a processor to perform all or a part of the steps of the method described in the embodiments. The aforementioned storage media include: a U disk, a mobile hard disk, a read only memory (Read Only Memory, ROM), a random access memory (RAM), a disk or a compact disc and various media that may store program codes.

Therefore, the embodiments of the present disclosure provide a computer readable storage medium, applied to the encoding apparatus 310, and the computer readable storage medium stores a computer program, and the computer program, when executed by a first processor, implements the steps of the method of any one of the aforementioned embodiments.

Based on the composition of the above encoding apparatus 310 and the computer readable storage medium, refer to FIG. 11, FIG. 11 shows a schematic diagram of a composition structure of an encoding device 320, provided by the embodiments of the present disclosure. As shown in FIG. 11, the encoding device 320 may include: a first communication interface 3201, a first memory 3202, and a first processor 3203; respective components are coupled together via a first bus system 3204. It may be understood that, the first bus system 3204 is used to implement the connection and communication between these components. The first bus system 3204 includes not only a data bus but also a power bus, a control bus and a state signal bus. However, for the sake of clarity, various buses are all labeled as the first bus system 3204 in FIG. 11. where

the first communication interface 3201 is configured to receive and transmit a signal in the process of transmitting and receiving information with other external network elements;
the first memory 3202 is configured to store a computer program that can be run on the first processor 3203;
the first processor 3203 is configured to, when running the computer program, perform operations of:

determining a reference value of a first color component of a current block and a reference value of a second color component of the current block;
determining a weighting coefficient according to the reference value of the first color component of the current block;
determining a reference average value of the second color component of the current block according to the reference value of the second color component of the current block; and determining a reference sample value of the second color component of the current block according to the reference value of the second color component of the current block and the reference average value of the second color component of the current block;
determining a predicted value of a sample of the second color component in the current block according to the reference average value of the second color component of the current block, the reference sample value of the second color component of the current block, and the weighting coefficient; and
determining a predicted residual of the sample of the second color component in the current block according to the predicted value of the sample of the second color component in the current block.

It may be understood that, the first memory 3202 in the embodiments of the present disclosure may be a volatile memory or a non-volatile memory, or may include both the volatile memory and the non-volatile memory. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). The first memory 3202 of the system and the method described in the present disclosure is intended to include, but not limited to, these and any other suitable types of memories.
The first processor 3203 may be an integrated circuit chip with a signal processing capability. During the implementation, various steps of the above methods may be completed by an integrated logic circuit of hardware in the first processor 3203 or instructions in the form of software. The above first processor 3203 may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present disclosure may be implemented or performed. A general-purpose processor may be a microprocessor, or the processor may also be any conventional processor, etc. The steps of the method disclosed in combination with the embodiments of the present disclosure may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the first memory 3202, and the first processor 3203 reads the information in the first memory 3202 and completes the steps of the above methods in combination with its hardware.
It may be understood that, these embodiments described in the present disclosure may be implemented by hardware, software, firmware, middleware, microcode, or combination thereof. For the hardware implementation, the processing unit may be implemented in one or more application specific integrated circuits (ASIC), digital signal processors (DSP), DSP devices (DSPD), programmable logic devices (PLD), field programmable gate arrays (FPGA), general-purpose processors, controllers, microcontrollers, microprocessors, other electronic units for performing the functions described in the present disclosure, or combinations thereof. For the software implementation, the technology described in the present disclosure may be implemented by the modules (such as procedures, functions, etc.) that perform the functions described in the present disclosure. The software code may be stored in the memory and executed by the processor. The memory may be implemented within the processor or external to the processor.

Optionally, as another embodiment, the first processor 3203 is further configured to perform the method of any one of the aforementioned embodiments when running the computer program.

The present embodiment provides an encoding device, and the encoding device may also include the encoding apparatus 310 described in the aforementioned embodiments. With respect to the encoding device, based on the color component reference information in the neighboring region of the current block and color component reconstruction information within the current block, it is necessary not only to construct a luma difference vector, so as to determine the weighting coefficient; but also to determine the chroma average value according to the chroma reference information, and then determine the chroma difference vector according to the chroma reference information and the chroma average value, and further determine the chroma predicted value according to the chroma difference vector and the weighting coefficient, plus the chroma average value; in this way, by optimizing the calculation process of the weight-based chroma prediction, fully adopting the integer operation can be implemented, and characteristics of the weight model are fully considered, thereby reasonably optimizing the integer operation process; which may reduce the calculation complexity, improve the coding efficiency, and thus improve the coding performance, while fully ensuring the accuracy of the chroma prediction.

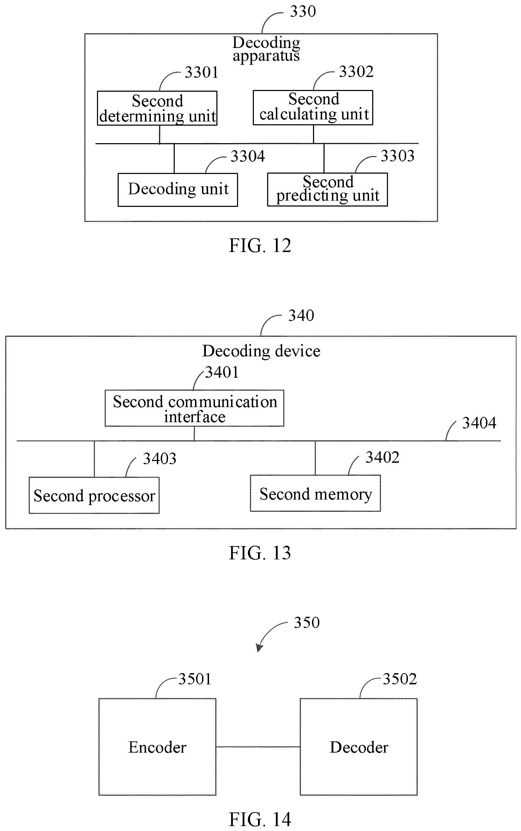

Based on the same inventive concept as the aforementioned embodiments, refer to FIG. 12, FIG. 12 shows a schematic diagram of a composition structure of a decoding apparatus 330, provided by the embodiments of the present disclosure. As shown in FIG. 12, the decoding apparatus 330 may include: a second determining unit 3301, a second calculating unit 3302, and a second predicting unit 3303; where

> the second determining unit 3301 is configured to determine a reference value of a first color component of a current block and a reference value of a second color component of the current block; and determine a weighting coefficient according to the reference value of the first color component of the current block;
> the second calculating unit 3302 is configured to determine a reference average value of the second color component of the current block according to the reference value of the second color component of the current block; and determine a reference sample value of the second color component of the current block according to the reference value of the second color component of the current block and the reference average value of the second color component of the current block;
> the second predicting unit 3303 is configured to determine a predicted value of a sample of the second color component in the current block according to the reference average value of the second color component of the current block, the reference sample value of the second color component of the current block, and the weighting coefficient; and
> the second determining unit 3301 is further configured to determine a reconstructed value of the sample of the second color component in the current block according to the predicted value of the sample of the second color component in the current block.

In some embodiments, the second determining unit 3301 is further configured to determine a predicted residual of the sample of the second color component in the current block; and determine the reconstructed value of the sample of the second color component in the current block according to the predicted residual of the sample of the second color component in the current block and the predicted value of the sample of the second color component in the current block.

In some embodiments, referring to FIG. 12, the decoding apparatus 330 may further include a decoding unit 3304, configured to parse a bitstream and determine the predicted residual of the sample of the second color component in the current block.

It may be understood that, in the embodiments of the present disclosure, a "unit" may be a part of a circuit, a part of a processor, a part of a program or software, etc., and of course, it may also be a module, or may be non-modular. Furthermore, respective parts in the embodiments may be integrated into a processing unit, or respective units may exist physically separately, or two or more units may be integrated into a unit. The above integrated unit may be implemented in the form of hardware or in the form of a software function module.

If the integrated unit is implemented in the form of the software function module and is not sold or used as an independent product, it may be stored in a computer readable storage medium. Based on this understanding, the embodiments of the present disclosure provide a computer readable storage medium, applied to the decoding apparatus 330, and the computer readable storage medium stores a computer program, and the computer program, when executed by a second processor, implements the steps of the method of any one of the aforementioned embodiments.

Based on the composition of the above decoding apparatus 330 and the computer readable storage medium, refer to FIG. 13, FIG. 13 shows a schematic diagram of a composition structure of an decoding device 340, provided by the embodiments of the present disclosure. As shown in FIG. 13, the decoding device 340 may include: a second communication interface 3401, a second memory 3402, and a second processor 3403; respective components are coupled together via a second bus system 3404. It may be understood that, the second bus system 3404 is used to implement the connection and communication between these components. The second bus system 3404 includes not only a data bus but also a power bus, a control bus and a state signal bus. However, for the sake of clarity, various buses are all labeled as the second bus system 3404 in FIG. 13. where

the first communication interface 3401 is configured to receive and transmit a signal in the process of transmitting and receiving information with other external network elements;
the second memory 3402 is configured to store a computer program that can be run on the second processor 3403;
the second processor 3403 is configured to, when running the computer program, perform operations of:

determining a reference value of a second color component of a current block and a reference value of a second color component of the current block;
determining a weighting coefficient according to the reference value of the first color component of the current block;
determining a reference average value of the second color component of the current block according to the reference value of the second color component of the current block; and determining a reference sample value of the second color component of the current block according to the reference value of the second color component of the current block and the reference average value of the second color component of the current block;
determining a predicted value of a sample of the second color component in the current block according to the reference average value of the second color component of the current block, the reference sample value of the second color component of the current block, and the weighting coefficient; and
determining a reconstructed value of the sample of the second color component in the current block according to the predicted value of the sample of the second color component in the current block.

Optionally, as another embodiment, the second processor 3403 is further configured to perform the method of any one of the aforementioned embodiments when running the computer program.

It may be understood that, the hardware functions of the second memory 3402 and the first memory 2102 are similar, and the hardware functions of the second processor 3403 and the first processor 2103 are similar; which will not be detailed here.

The present embodiment provides an decoding device, and the decoding device may also include the decoding apparatus 340 described in the aforementioned embodiments. With respect to the decoding device, based on the color component reference information in the neighboring region of the current block and color component reconstruction information within the current block, it is necessary not only to construct a luma difference vector, so as to determine the weighting coefficient; but also to determine the chroma average value according to the chroma reference information, and then determine the chroma difference vector according to the chroma reference information and the chroma average value, and further determine the chroma predicted value according to the chroma difference vector and the weighting coefficient, plus the chroma average value; in this way, by optimizing the calculation process of the weight-based chroma prediction, fully adopting the integer operation can be implemented, and characteristics of the weight model are fully considered, thereby reasonably optimizing the integer operation process; which may reduce the calculation complexity, improve the coding efficiency, and thus improve the coding performance, while fully ensuring the accuracy of the chroma prediction.

In yet another embodiment of the present disclosure, referring to FIG. 14, FIG. 14 shows a schematic diagram of a composition structure of an encoding and decoding system, provided by the embodiments of the present disclosure. As shown in FIG. 14, the encoding and decoding system 350 may include an encoder 3501 and a decoder 3502. Herein, the encoder 3501 may be a device integrated with the encoding apparatus 310 described in the aforementioned embodiments, or may also be the encoding device 320 described in the aforementioned embodiments; the decoder 3502 may be a device integrated with the decoding apparatus 330 described in the aforementioned embodiments, or may also be the decoding device 340 described in the aforementioned embodiments.

In the embodiments of the present disclosure, in the encoding and decoding system 350, whether it is in the encoder 3501 or the decoder 3502, by optimizing the calculation process of the weight-based chroma prediction, fully adopting the integer operation can be implemented, and characteristics of the weight model are fully considered, thereby reasonably optimizing the integer operation process; which may reduce the calculation complexity, improve the coding efficiency, and thus improve the coding performance, while fully ensuring the accuracy of the chroma prediction.

It should be noted that, in the present disclosure, the terms "include", "contain" or any other variants thereof are intended to cover the non-exclusive inclusion, so that a process, method, object or apparatus including a series of elements includes not only those elements, but also other elements not explicitly listed, or also includes elements inherent to the process, method, object or apparatus. Without a further limitation, an element defined by a phrase "including a ......" does not exclude the existence of another identical element in the process, method, object or apparatus including this element.

The above sequence numbers of the embodiments of the present disclosure are for the description only, and do not represent the merits of the embodiments.

The methods disclosed in several method embodiments provided by the present disclosure may be arbitrarily combined with each other without conflict, to obtain new method embodiments.

The features disclosed in several product embodiments provided by the present disclosure may be arbitrarily combined with each other without conflict, to obtain new product embodiments.

The features disclosed in several method embodiments or device embodiments provided by the present disclosure may be arbitrarily combined with each other without conflict, to obtain new method embodiments or device embodiments.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of the claims.

Industrial Applicability

In the embodiments of the present disclosure, determines a reference value of a first color component of a current block and a reference value of a second color component of the current block; determines a weighting coefficient according to the reference value of the first color component of the current block; determines a reference average value of the second color component of the current block according to the reference value of the second color component of the current block; and determines a reference sample value of the second color component of the current block according to the reference value of the second color component of the current block and the reference average value of the second color component of the current block; determines a predicted value of a sample of the second color component in the current block according to the reference average value of the second color component of the current block, the reference sample value of the second color component of the current block, and the weighting coefficient. In this way, at the encoder side, a predicted residual of the sample of the second color component in the current block can be determined according to the predicted value of the sample of the second color component in the current block; so that at the decoder side, after the predicted residual of the sample of the second color component of the current block is obtained by decoding, the reconstructed value of the sample of the second color component of the current block may be determined in combination with the predicted value of the sample of the second color component in the current block. That is, based on the color component reference information in the neighboring region of the current block and color component reconstruction information within the current block, it is necessary not only to construct a luma difference vector, so as to determine the weighting coefficient; but also to determine the chroma average value according to the chroma reference information, and then determine the chroma difference vector according to the chroma reference information and the chroma average value, and further determine the chroma predicted value according to the chroma difference vector and the weighting coefficient, plus the chroma average value; in this way, by optimizing the calculation process of the weight-based chroma prediction, fully adopting the integer operation can be implemented, and characteristics of the weight model are fully considered, thereby reasonably optimizing the integer operation process; which may reduce the calculation complexity, improve the coding efficiency, and thus improve the coding performance, while fully ensuring the accuracy of the chroma prediction.

**Claims**

1. A decoding method, comprising:

   determining a reference value of a first color component of a current block and a reference value of a second color component of the current block;
   determining a weighting coefficient according to the reference value of the first color component of the current block;
   determining a reference average value of the second color component of the current block according to the reference value of the second color component of the current block; and determining a reference sample value of the second color component of the current block according to the reference value of the second color component of the current block and the reference average value of the second color component of the current block;

determining a predicted value of a sample of the second color component in the current block according to the reference average value of the second color component of the current block, the reference sample value of the second color component of the current block, and the weighting coefficient; and

determining a reconstructed value of the sample of the second color component in the current block according to the predicted value of the sample of the second color component in the current block.

2. The method according to claim 1, wherein determining the reference value of the first color component of the current block and the reference value of the second color component of the current block comprises:

determining the reference value of the first color component of the current block according to a value of a sample of the first color component in a neighboring region of the current block; and
determining the reference value of the second color component of the current block according to a value of a sample of the second color component in a neighboring region of the current block;
wherein the neighboring region comprises at least one of: a top neighboring region, a top-right neighboring region, a left neighboring region, or a lower-left neighboring region.

3. The method according to claim 2, wherein determining the reference value of the first color component of the current block according to the value of the sample of the first color component in the neighboring region of the current block comprises:
performing a first filtering processing on the value of the sample of the first color component in the neighboring region of the current block, to determine the reference value of the first color component of the current block.

4. The method according to claim 3, wherein the first filtering processing is a downsampling filtering processing.

5. The method according to claim 2, wherein determining the reference value of the second color component of the current block according to the value of the sample of the second color component in the neighboring region of the current block comprises:
performing a second filtering processing on the value of the sample of the second color component in the neighboring region of the current block, to determine the reference value of the second color component of the current block.

6. The method according to claim 5, wherein the second filtering processing is an upsampling filtering processing.

7. The method according to claim 1, wherein determining the weighting coefficient according to the reference value of the first color component of the current block comprises:

determining a reconstructed value of a sample of the first color component in the current block;
determining a reference sample value of the first color component of the current block according to the reconstructed value of the sample of the first color component in the current block and the reference value of the first color component of the current block; and
determining the weighting coefficient according to the reference sample value of the first color component of the current block.

8. The method according to claim 7, wherein determining the reference sample value of the first color component of the current block according to the reconstructed value of the sample of the first color component in the current block and the reference value of the first color component of the current block comprises:

determining a residual between the reconstructed value of the sample of the first color component in the current block and the reference value of the first color component of the current block; and
determining the reference sample value of the first color component of the current block according to the residual.

9. The method according to claim 8, wherein determining the reference sample value of the first color component of the current block according to the residual comprises:
setting the reference sample value of the first color component of the current block to be equal to an absolute value of the residual.

10. The method according to claim 7, wherein determining the weighting coefficient according to the reference sample value of the first color component of the current block comprises:

determining a weight index value according to the reference sample value of the first color component of the current block; and

determining the weighting coefficient by using a first preset mapping relationship according to the weight index value.

11. The method according to claim 10, wherein determining the weight index value according to the reference sample value of the first color component of the current block comprises:

determining a maximum weight index value and a minimum weight index value of the current block; and

refining the reference sample value of the first color component according to the maximum weight index value and the minimum weight index value, to determine the weight index value.

12. The method according to claim 10, wherein determining the weighting coefficient by using the first preset mapping relationship according to the weight index value comprises:
the first preset mapping relationship is a numerical mapping look up table between the weight index value and the weighting coefficient.

13. The method according to claim 10, wherein determining the weighting coefficient by using the first preset mapping relationship according to the weight index value comprises:

determining a first value corresponding to the weight index value under the first preset mapping relationship; and setting the weighting coefficient to be equal to the first value.

14. The method according to claim 13, wherein determining the first value corresponding to the weight index value under the first preset mapping relationship comprises:

determining a first factor;
determining a second value by using a second preset mapping relationship according to the weight index value; calculating a first product value of the first factor and the second value; and
setting the first value to be equal to a value corresponding to the first product value under the first preset mapping relationship.

15. The method according to claim 14, wherein the second preset mapping relationship is an exponential function relationship based on n; wherein a value of n is equal to the weight index value.

16. The method according to claim 14, wherein determining the first factor comprises:
the first factor is a preset constant value.

17. The method according to claim 14, wherein determining the first factor comprises:

determining a value of the first factor according to a size parameter of the current block;
wherein the size parameter of the current block comprises at least one of following parameters: a width of the current block, or a height of the current block.

18. The method according to claim 10, wherein determining the weight index value according to the reference sample value of the first color component of the current block comprises:

determining a second factor; and
determining the weight index value according to the reference sample value of the first color component of the current block and the second factor.

19. The method according to claim 18, wherein determining the second factor comprises:
the second factor is a preset constant value.

20. The method according to claim 18, wherein determining the second factor comprises:

determining a value of the second factor according to a size parameter of the current block;
wherein the size parameter of the current block comprises at least one of following parameters: a width of the current block, or a height of the current block.

21. The method according to claim 18, wherein determining the weight index value according to the reference sample value of the first color component of the current block and the second factor comprises:

   determining a third value by using a third preset mapping relationship according to the reference sample value of the first color component and the second factor;
   determining a maximum weight index value and a minimum weight index value of the current block; and
   refining the third value according to the maximum weight index value and the minimum weight index value, to determine the weight index value.

22. The method according to claim 21, wherein determining the third value by using the third preset mapping relationship according to the reference sample value of the first color component and the second factor comprises:

   determining at least one shift array;
   determining a target offset from the at least one shift array according to the second factor; and
   performing a right shift operation of the target offset on the reference sample value of the first color component, to determine the third value.

23. The method according to claim 18, wherein determining the weighting coefficient by using the first preset mapping relationship according to the weight index value comprises:

   determining a second product value according to the second factor and the weight index value;
   determining a fourth value corresponding to the second product value under the first preset mapping relationship; and
   setting the weighting coefficient to be equal to the fourth value.

24. The method according to claim 23, wherein determining the fourth value corresponding to the second product value under the first preset mapping relationship comprises:

   determining a first factor;
   determining a fifth value by using a second preset mapping relationship according to the second product value;
   calculating a third product value of the first factor and the fifth value; and
   setting the fourth value to be equal to a value corresponding to the third product value under the first preset mapping relationship.

25. The method according to claim 1, wherein determining the predicted value of the sample of the second color component in the current block according to the reference average value of the second color component of the current block, the reference sample value of the second color component of the current block, and the weighting coefficient comprises:

   determining a weighted value of the reference sample value of the second color component and the weighting coefficient;
   setting a weighted sum value of pixels to be predicted in the current block to be equal to a sum of the N weighted values, and setting a coefficient sum value of the pixels to be predicted in the current block to be equal to a sum of the N weighted coefficients; wherein N represents a number of reference sample values of the second color component, and N is a positive integer;
   determining a sixth value by using a fourth preset mapping relationship according to the weighted sum value and the coefficient sum value;
   performing an addition operation on the reference average value of the second color component and the sixth value, to obtain a predicted value of the second color component of the pixels to be predicted in the current block; and
   determining the predicted value of the sample of the second color component in the current block according to the predicted value of the second color component of the pixels to be predicted in the current block.

26. The method according to claim 25, wherein the predicted value of the second color component of the pixels to be predicted comprises a predicted value of at least a part of samples of the second color component in the current block.

27. The method according to claim 1, wherein determining the reference average value of the second color component of the current block according to the reference value of the second color component of the current block comprises: performing an average operation on N reference values of the second color component of the current block, to obtain the reference average value of the second color component of the current block.

28. The method according to claim 27, wherein the method further comprises:

   determining a block type index value according to a size parameter of the current block; and
   determining a value of N by using a fifth preset mapping relationship according to the block type index value.

29. The method according to claim 28, wherein the fifth preset mapping relationship represents a numerical mapping look up table between the block type index value and N.

30. The method according to claim 1, wherein determining the reference sample value of the second color component of the current block according to the reference value of the second color component of the current block and the reference average value of the second color component of the current block comprises: performing a subtraction operation on the reference value of the second color component of the current block and the reference average value of the second color component of the current block, to obtain the reference sample value of the second color component of the current block.

31. The method according to claim 25, wherein determining the sixth value by using the fourth preset mapping relationship according to the weighted sum value and the coefficient sum value comprises:

   determining a preset offset;
   determining a first numerical value by using a sixth preset mapping relationship according to the coefficient sum value; and determining an array index value by using a seventh preset mapping relationship according to the coefficient sum value and the first numerical value, and determining a second numerical value by using an eighth preset mapping relationship according to the array index value and the preset offset;
   determining a third numerical value according to the first numerical value in a case where the array index value is equal to zero or not; and determining a first offset according to the third numerical value and the preset offset; determining a fourth product value according to the second numerical value and the weighted sum value, determining a preset addition value according to the third numerical value and the preset offset, and performing an addition operation on the fourth product value and the preset addition value, to obtain a target sum value; and performing a right shift operation of the first offset on the target sum value, to determine the sixth value.

32. The method according to claim 31, wherein determining the first numerical value by using the sixth preset mapping relationship according to the coefficient sum value comprises: setting the first numerical value to be equal to a number of bits of binary symbols required for a binary representation of the coefficient sum value, minus one.

33. The method according to claim 31, wherein determining the array index value by using the seventh preset mapping relationship according to the coefficient sum value and the first numerical value comprises: using the coefficient sum value and the first numerical value as inputs of a preset function relationship, and outputting the array index value according to the preset function relationship.

34. The method according to claim 31, wherein determining the second numerical value by using the eighth preset mapping relationship according to the array index value and the preset offset comprises:

   determining an index indication value in an array mapping table according to the array index value; and
   determining the second numerical value by using the eighth preset mapping relationship according to the index indication value and the preset offset.

35. The method according to claim 31, wherein determining the third numerical value according to the first numerical value in the case where the array index value is equal to zero or not comprises:

   if the array index value is equal to zero, setting the third array to be equal to the first numerical value;
   if the array index value is not equal to zero, setting the third array to be equal to a sum value of the first numerical value and one.

36. The method according to claim 25, wherein the method further comprises:
refining the predicted value of the second color component of the pixels to be predicted, and using the predicted value that is refined as the predicted value of the second color component of the pixels to be predicted in the current block.

37. The method according to claim 25, wherein determining the predicted value of the sample of the second color component in the current block according to the predicted value of the second color component of the pixels to be predicted in the current block comprises:
performing a filtering processing on the predicted value of the second color component of the pixels to be predicted, to determine the predicted value of the sample of the second color component in the current block.

38. The method according to any one of claims 1 to 33, wherein determining the reconstructed value of the sample of the second color component in the current block according to the predicted value of the sample of the second color component in the current block comprises:

determining a predicted residual of the sample of the second color component in the current block; and determining the reconstructed value of the sample of the second color component in the current block according to the predicted residual of the sample of the second color component in the current block and the predicted value of the sample of the second color component in the current block.

39. An encoding method, comprising:

determining a reference value of a first color component of a current block and a reference value of a second color component of the current block;
determining a weighting coefficient according to the reference value of the first color component of the current block;
determining a reference average value of the second color component of the current block according to the reference value of the second color component of the current block; and determining a reference sample value of the second color component of the current block according to the reference value of the second color component of the current block and the reference average value of the second color component of the current block;
determining a predicted value of a sample of the second color component in the current block according to the reference average value of the second color component of the current block, the reference sample value of the second color component of the current block, and the weighting coefficient; and
determining a predicted residual of the sample of the second color component in the current block according to the predicted value of the sample of the second color component in the current block.

40. The method according to claim 39, wherein determining the reference value of the first color component of the current block and the reference value of the second color component of the current block comprises:

determining the reference value of the first color component of the current block according to a value of a sample of the first color component in a neighboring region of the current block; and
determining the reference value of the second color component of the current block according to a value of a sample of the second color component in a neighboring region of the current block;
wherein the neighboring region comprises at least one of: a top neighboring region, a top-right neighboring region, a left neighboring region, or a lower-left neighboring region.

41. The method according to claim 40, wherein determining the reference value of the first color component of the current block according to the value of the sample of the first color component in the neighboring region of the current block comprises:
performing a first filtering processing on the value of the sample of the first color component in the neighboring region of the current block, to determine the reference value of the first color component of the current block.

42. The method according to claim 41, wherein the first filtering processing is a downsampling filtering processing.

43. The method according to claim 40, wherein determining the reference value of the second color component of the current block according to the value of the sample of the second color component in the neighboring region of the current block comprises:
performing a second filtering processing on the value of the sample of the second color component in the neighboring region of the current block, to determine the reference value of the second color component of the current block.

44. The method according to claim 43, wherein the second filtering processing is an upsampling filtering processing.

45. The method according to claim 39, wherein determining the weighting coefficient according to the reference value of the first color component of the current block comprises:

   determining a reconstructed value of a sample of the first color component in the current block;
   determining a reference sample value of the first color component of the current block according to the reconstructed value of the sample of the first color component in the current block and the reference value of the first color component of the current block; and
   determining the weighting coefficient according to the reference sample value of the first color component of the current block.

46. The method according to claim 45, wherein determining the reference sample value of the first color component of the current block according to the reconstructed value of the sample of the first color component in the current block and the reference value of the first color component of the current block comprises:

   determining a residual between the reconstructed value of the sample of the first color component in the current block and the reference value of the first color component of the current block; and
   determining the reference sample value of the first color component of the current block according to the residual.

47. The method according to claim 46, wherein determining the reference sample value of the first color component of the current block according to the residual comprises:
   setting the reference sample value of the first color component of the current block to be equal to an absolute value of the residual.

48. The method according to claim 45, wherein determining the weighting coefficient according to the reference sample value of the first color component of the current block comprises:

   determining a weight index value according to the reference sample value of the first color component of the current block; and
   determining the weighting coefficient by using a first preset mapping relationship according to the weight index value.

49. The method according to claim 49, wherein determining the weight index value according to the reference sample value of the first color component of the current block comprises:

   determining a maximum weight index value and a minimum weight index value of the current block; and
   refining the reference sample value of the first color component according to the maximum weight index value and the minimum weight index value, to determine the weight index value.

50. The method according to claim 48, wherein determining the weighting coefficient by using the first preset mapping relationship according to the weight index value comprises:
   the first preset mapping relationship is a numerical mapping look up table between the weight index value and the weighting coefficient.

51. The method according to claim 48, wherein determining the weighting coefficient by using the first preset mapping relationship according to the weight index value comprises:

   determining a first value corresponding to the weight index value under the first preset mapping relationship; and
   setting the weighting coefficient to be equal to the first value.

52. The method according to claim 51, wherein determining the first value corresponding to the weight index value under the first preset mapping relationship comprises:

   determining a first factor;
   determining a second value by using a second preset mapping relationship according to the weight index value;
   calculating a first product value of the first factor and the second value; and
   setting the first value to be equal to a value corresponding to the first product value under the first preset mapping relationship.

53. The method according to claim 52, wherein the second preset mapping relationship is an exponential function relationship based on n; wherein a value of n is equal to the weight index value.

54. The method according to claim 52, wherein determining the first factor comprises:
the first factor is a preset constant value.

55. The method according to claim 52, wherein determining the first factor comprises:

determining a value of the first factor according to a size parameter of the current block;
wherein the size parameter of the current block comprises at least one of following parameters: a width of the current block, or a height of the current block.

56. The method according to claim 48, wherein determining the weight index value according to the reference sample value of the first color component of the current block comprises:

determining a second factor; and
determining the weight index value according to the reference sample value of the first color component of the current block and the second factor.

57. The method according to claim 56, wherein determining the second factor comprises:
the second factor is a preset constant value.

58. The method according to claim 56, wherein determining the second factor comprises:

determining a value of the second factor according to a size parameter of the current block;
wherein the size parameter of the current block comprises at least one of following parameters: a width of the current block, or a height of the current block.

59. The method according to claim 56, wherein determining the weight index value according to the reference sample value of the first color component of the current block and the second factor comprises:

determining a third value by using a third preset mapping relationship according to the reference sample value of the first color component and the second factor;
determining a maximum weight index value and a minimum weight index value of the current block; and
refining the third value according to the maximum weight index value and the minimum weight index value, to determine the weight index value.

60. The method according to claim 59, wherein determining the third value by using the third preset mapping relationship according to the reference sample value of the first color component and the second factor comprises:

determining at least one shift array;
determining a target offset from the at least one shift array according to the second factor; and
performing a right shift operation of the target offset on the reference sample value of the first color component, to determine the third value.

61. The method according to claim 56, wherein determining the weighting coefficient by using the first preset mapping relationship according to the weight index value comprises:

determining a second product value according to the second factor and the weight index value;
determining a fourth value corresponding to the second product value under the first preset mapping relationship; and
setting the weighting coefficient to be equal to the fourth value.

62. The method according to claim 61, wherein determining the fourth value corresponding to the second product value under the first preset mapping relationship comprises:

determining a first factor;

determining a fifth value by using a second preset mapping relationship according to the second product value;

calculating a third product value of the first factor and the fifth value; and

setting the fourth value to be equal to a value corresponding to the third product value under the first preset mapping relationship.

63. The method according to claim 39, wherein determining the predicted value of the sample of the second color component in the current block according to the reference average value of the second color component of the current block, the reference sample value of the second color component of the current block, and the weighting coefficient comprises:

determining a weighted value of the reference sample value of the second color component and the weighting coefficient;

setting a weighted sum value of pixels to be predicted in the current block to be equal to a sum of the N weighted values, and setting a coefficient sum value of the pixels to be predicted in the current block to be equal to a sum of the N weighted coefficients; wherein N represents a number of reference sample values of the second color component, and N is a positive integer;

determining a sixth value by using a fourth preset mapping relationship according to the weighted sum value and the coefficient sum value;

performing an addition operation on the reference average value of the second color component and the sixth value, to obtain a predicted value of the second color component of the pixels to be predicted in the current block; and

determining the predicted value of the sample of the second color component in the current block according to the predicted value of the second color component of the pixels to be predicted in the current block.

64. The method according to claim 63, wherein the predicted value of the second color component of the pixels to be predicted comprises a predicted value of at least a part of samples of the second color component in the current block.

65. The method according to claim 39, wherein determining the reference average value of the second color component of the current block according to the reference value of the second color component of the current block comprises: performing an average operation on N reference values of the second color component of the current block, to obtain the reference average value of the second color component of the current block.

66. The method according to claim 65, wherein the method further comprises:

determining a block type index value according to a size parameter of the current block; and

determining a value of N by using a fifth preset mapping relationship according to the block type index value.

67. The method according to claim 66, wherein the fifth preset mapping relationship represents a numerical mapping look up table between the block type index value and N.

68. The method according to claim 39, wherein determining the reference sample value of the second color component of the current block according to the reference value of the second color component of the current block and the reference average value of the second color component of the current block comprises: performing a subtraction operation on the reference value of the second color component of the current block and the reference average value of the second color component of the current block, to obtain the reference sample value of the second color component of the current block.

69. The method according to claim 63, wherein determining the sixth value by using the fourth preset mapping relationship according to the weighted sum value and the coefficient sum value comprises:

determining a preset offset;

determining a first numerical value by using a sixth preset mapping relationship according to the coefficient sum value; and determining an array index value by using a seventh preset mapping relationship according to the coefficient sum value and the first numerical value, and determining a second numerical value by using an eighth preset mapping relationship according to the array index value and the preset offset;

determining a third numerical value according to the first numerical value in a case where the array index value is equal to zero or not; and determining a first offset according to the third numerical value and the preset offset;

**EP 4 554 223 A1**

determining a fourth product value according to the second numerical value and the weighted sum value, determining a preset addition value according to the third numerical value and the preset offset, and performing an addition operation on the fourth product value and the preset addition value, to obtain a target sum value; and performing a right shift operation of the first offset on the target sum value, to determine the sixth value.

70. The method according to claim 69, wherein determining the first numerical value by using the sixth preset mapping relationship according to the coefficient sum value comprises:
setting the first numerical value to be equal to a number of bits of binary symbols required for a binary representation of the coefficient sum value, minus one.

71. The method according to claim 69, wherein determining the array index value by using the seventh preset mapping relationship according to the coefficient sum value and the first numerical value comprises:
using the coefficient sum value and the first numerical value as inputs of a preset function relationship, and outputting the array index value according to the preset function relationship.

72. The method according to claim 69, wherein determining the second numerical value by using the eighth preset mapping relationship according to the array index value and the preset offset comprises:

determining an index indication value in an array mapping table according to the array index value; and
determining the second numerical value by using the eighth preset mapping relationship according to the index indication value and the preset offset.

73. The method according to claim 69, wherein determining the third numerical value according to the first numerical value in the case where the array index value is equal to zero or not comprises:

if the array index value is equal to zero, setting the third array to be equal to the first numerical value;
if the array index value is not equal to zero, setting the third array to be equal to a sum value of the first numerical value and one.

74. The method according to claim 63, wherein the method further comprises:
refining the predicted value of the second color component of the pixels to be predicted, and using the predicted value that is refined as the predicted value of the second color component of the pixels to be predicted in the current block.

75. The method according to claim 63, wherein determining the predicted value of the sample of the second color component in the current block according to the predicted value of the second color component of the pixels to be predicted in the current block comprises:
performing a filtering processing on the predicted value of the second color component of the pixels to be predicted, to determine the predicted value of the sample of the second color component in the current block.

76. The method according to any one of claims 39 to 75, wherein determining the predicted residual of the sample of the second color component in the current block according to the predicted value of the sample of the second color component in the current block comprises:

acquiring an original value of the sample of the second color component in the current block; and
determining the predicted residual of the sample of the second color component in the current block according to the original value of the sample of the second color component in the current block and the predicted value of the sample of the second color component in the current block.

77. The method according to claim 76, wherein the method further comprises:
encoding the predicted residual of the sample of the second color component in the current block, and wrting an obtained encoded bit into a bitstream.

78. An encoding apparatus, comprising a first determining unit, a first calculating unit and a first predicting unit; wherein

the first determining unit is configured to determine a reference value of a first color component of a current block and a reference value of a second color component of the current block; and determine a weighting coefficient according to the reference value of the first color component of the current block;
the first calculating unit is configured to determine a reference average value of the second color component of the current block according to the reference value of the second color component of the current block; and determine a reference sample value of the second color component of the current block according to the reference value of the second color component of the current block and the reference average value of the second color component of the current block;

the first predicting unit is configured to determine a predicted value of a sample of the second color component in the current block according to the reference average value of the second color component of the current block, the reference sample value of the second color component of the current block, and the weighting coefficient; and the first determining unit is further configured to determine a predicted residual of the sample of the second color component in the current block according to the predicted value of the sample of the second color component in the current block.

79. An encoding device, comprising a first memory and a first processor; wherein

the first memory is configured to store a computer program capable of running on the first processor; and the first processor is configured to cause the encoding device to perform the method according to any one of claims 39 to 77 when running the computer program.

80. A decoding apparatus, comprising a second determining unit, a second calculating unit and a second predicting unit; wherein

the second determining unit is configured to determine a reference value of a first color component of a current block and a reference value of a second color component of the current block; and determine a weighting coefficient according to the reference value of the first color component of the current block;

the second calculating unit is configured to determine a reference average value of the second color component of the current block according to the reference value of the second color component of the current block; and determine a reference sample value of the second color component of the current block according to the reference value of the second color component of the current block and the reference average value of the second color component of the current block;

the second predicting unit is configured to determine a predicted value of a sample of the second color component in the current block according to the reference average value of the second color component of the current block, the reference sample value of the second color component of the current block, and the weighting coefficient; and the second determining unit is further configured to determine a reconstructed value of the sample of the second color component in the current block according to the predicted value of the sample of the second color component in the current block.

81. A decoding device, comprising a second memory and a second processor; wherein

the second memory is configured to store a computer program capable of running on the second processor; and the second processor is configured to cause the decoding device to perform the method according to any one of claims 1 to 38 when running the computer program.

82. A computer readable storage medium, wherein the computer readable storage medium stores a computer program, and the computer program, when being executed, implements the method according to any one of claims 1 to 38 or the method according to any one of claims 39 to 77.

| Top neighboring region | Top-right neighboring region |
|---|---|
| Left neighboring region / Coding block | |
| Lower-left neighboring region | |

FIG. 1

| Top neighboring region | |
|---|---|
| Left neighboring region / Coding block | |

( a )

| Left neighboring region / Coding block | |
|---|---|
| Lower-left neighboring region | |

( b )

| Top neighboring region | Top-right neighboring region |
|---|---|
| Coding block | |

( c )

FIG. 2

301 Acquire a reference pixel in a selected region

302 Judge a number of available reference pixels

The number of available reference pixels is 0

303 Set the model parameter α to 0, and β to a default value

304 Fill a chroma predicted value with a default value

The number of available reference pixels is 4

305 Obtain two reference pixels with larger values and two reference pixels with smaller values in the luma component by comparison

306 Calculate an average point corresponding to the larger values and an average point corresponding to the smaller values

307 Derive the model parameter α and β according to the two average points

308 perform the chroma prediction by using a prediction model constructed by α and β

FIG. 3

67

FIG. 4A

FIG. 4B

Determine a reference value of a first color component of a current block and a reference value of a second color component of the current block — S501

Determine a weighting coefficient according to the reference value of the first color component of the current block — S502

Determine a reference average value of the second color component of the current block according to the reference value of the second color component of the current block; and determine a reference sample value of the second color component of the current block according to the reference value of the second color component of the current block and the reference average value of the second color component of the current block — S503

Determine a predicted value of a sample of the second color component in the current block according to the reference average value of the second color component of the current block, the reference sample value of the second color component of the current block, and the corresponding weighting coefficient — S504

Determine a reconstructed value of the sample of the second color component in the current block according to the predicted value of the sample of the second color component in the current block — S505

FIG. 5

| Top-left region | Top region |
|---|---|
| Left region | Current block |

FIG. 6

Determine a WCP core parameter ⟋ S701

Acquire input information according to the WCP core parameter ⟋ S702

Perform weight-based chroma prediction calculation according to the input information, to determine a chroma predicted value of the current block ⟋ S703

Perform a post-processing operation on the chroma predicted value, to determine a target chroma predicted value of the current block ⟋ S704

FIG. 7

For the current block, calculate a chroma average value by using the acquired reference chroma information, and construct a reference chroma difference vector by using the chroma average value ⟋ S801

For each pixel to be predicted, construct a luma difference vector by using the reference luma information and the luma reconstruction information of the current block ⟋ S802

For each pixel to be predicted, determine a weight vector by using the obtained luma difference vector, according to a weight model LUT ⟋ S803

For each pixel to be predicted, calculate a chroma predicted value by using a product of the obtained reference chroma difference vector and the obtained weight vector, and the chroma average value ⟋ S804

For each pixel to be predicted, refine the calculated chroma predicted value, to determine the chroma predicted value of the current block ⟋ S805

FIG. 8

Determine a reference value of a first color component of a current block and a reference value of a second color component of the current block `⌐ S901`

↓

Determine a weighting coefficient according to the reference value of the first color component of the current block `⌐ S902`

↓

Determine a reference average value of the second color component of the current block according to the reference value of the second color component of the current block; and determine a reference sample value of the second color component of the current block according to the reference value of the second color component of the current block and the reference average value of the second color component of the current block `⌐ S903`

↓

Determine a predicted value of a sample of the second color component in the current block according to the reference average value of the second color component of the current block, the reference sample value of the second color component of the current block, and the corresponding weighting coefficient `⌐ S904`

↓

Determine a predicted residual of the sample of the second color component in the current block according to the predicted value of the sample of the second color component in the current block `⌐ S905`

FIG. 9

`⌐ 310`

Encoding apparatus

`⌐ 3101`
First determining unit

`⌐ 3102`
First calculating unit

`⌐ 3104`
Encoding unit

`⌐ 3103`
First predicting unit

FIG. 10

`⌐ 320`

Encoding device

`⌐ 3201`
First communication interface

`⌐ 3204`

`⌐ 3203`
First processor

`⌐ 3202`
First memory

FIG. 11

330

Decoding
apparatus

3301

Second
determining unit

3302

Second
calculating unit

3304

Decoding unit

3303

Second
predicting unit

FIG. 12

340

Decoding device

3401

Second communication
interface

3404

3403

Second processor

3402

Second memory

FIG. 13

350

3501

Encoder

3502

Decoder

FIG. 14

## INTERNATIONAL SEARCH REPORT

| | International application No. |
|---|---|
| | **PCT/CN2022/103963** |

### A. CLASSIFICATION OF SUBJECT MATTER

H04N 19/59(2014.01)i; H04N 19/593(2014.01)i; H04N 19/186(2014.01)i

According to International Patent Classification (IPC) or to both national classification and IPC

### B. FIELDS SEARCHED

Minimum documentation searched (classification system followed by classification symbols)

H04N19/-

Documentation searched other than minimum documentation to the extent that such documents are included in the fields searched

Electronic data base consulted during the international search (name of data base and, where practicable, search terms used)

CNTXT; CNABS; CNKI: 加权, 权重, 系数, 因子, 分量, 颜色, 预测, 当前, 参考, 相邻, 邻近, 上, 下, 左, 右, 亮度, 色度, 蓝, 红, 平均, 均值, 欧珀; VEN; DWPI; USTXT; WOTXT; EPTXT; IEEE; JVET: weight, factor, component, color, predict, current, reference, adjacent, near, up, down, right, left, luma, chroma, blue, red, average, oppo

### C. DOCUMENTS CONSIDERED TO BE RELEVANT

| Category* | Citation of document, with indication, where appropriate, of the relevant passages | Relevant to claim No. |
|---|---|---|
| X | HUO, Junyan et al. "Non-EE2: Weighted Chroma Prediction (WCP)" *Joint Video Experts Team (JVET)*, 13 April 2022 (2022-04-13), abstract, chapter 2, and figure 1 | 1-82 |
| A | CN 113261286 A (ELECTRONICS AND TELECOMMUNICATIONS RESEARCH INSTITUTE) 13 August 2021 (2021-08-13) entire document | 1-82 |
| A | CN 113711610 A (BEIJING BYTEDANCE NETWORK TECHNOLOGY CO., LTD.; BYTEDANCE LTD.) 26 November 2021 (2021-11-26) entire document | 1-82 |
| A | CN 113747176 A (GUANGDONG OPPO MOBILE COMMUNICATIONS CO., LTD.) 03 December 2021 (2021-12-03) entire document | 1-82 |
| A | WO 2021251787 A1 (HYUNDAI MOTOR CO., LTD. et al.) 16 December 2021 (2021-12-16) entire document | 1-82 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 August 2022** | **11 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/103963**

| Patent document cited in search report | | | Publication date (day/month/year) | Patent family member(s) | | | Publication date (day/month/year) |
|---|---|---|---|---|---|---|---|
| CN | 113261286 | A | 13 August 2021 | KR | 20200083315 | A | 08 July 2020 |
| | | | | WO | 2020139006 | A2 | 02 July 2020 |
| | | | | US | 2022086426 | A1 | 17 March 2022 |
| | | | | WO | 2020139006 | A3 | 17 December 2020 |
| CN | 113711610 | A | 26 November 2021 | WO | 2020216246 | A1 | 29 October 2020 |
| | | | | EP | 3935855 | A1 | 12 January 2022 |
| | | | | AU | 2020263199 | A1 | 04 November 2021 |
| | | | | CA | 3135973 | A1 | 29 October 2020 |
| | | | | KR | 20210152481 | A | 15 December 2021 |
| | | | | SG | 11202110999 P | A | 29 November 2021 |
| | | | | JP | 2022527855 | A | 06 June 2022 |
| | | | | BR | 113711610 | A | 30 September 2021 |
| | | | | VN | 2021000006684 | | 21 October 2021 |
| CN | 113747176 | A | 03 December 2021 | TW | 113747176 | A | 01 December 2021 |
| | | | | WO | 2021238540 | A1 | 02 December 2021 |
| WO | 2021251787 | A1 | 16 December 2021 | KR | 20210154103 | A | 20 December 2021 |

Form PCT/ISA/210 (patent family annex) (January 2015)